# FASCICULE DE BREVET EUROPEEN

(11) **EP 3 245 485 B1**
(45) Date de publication et mention de la délivrance du brevet: **17.06.2020**
(21) Numéro de dépôt: 16702186.4
(22) Date de dépôt: 13.01.2016
(51) Int. Cl.: G01D 5/20, G01P 3/44, G01D 5/245

(54) **ROULEMENT COMPRENANT UN CAPTEUR DE DEPLACEMENT ANGULAIRE**
WÄLZLAGER MIT EINEM DREHWINKELSENSOR
ROLLING BEARING COMPRISING AN ANGULAR DISPLACEMENT SENSOR

(30) Priorité: 13.01.2015 FR 1550232
(43) Date de publication de la demande: 22.11.2017
(73) Titulaire: Hutchinson, 75008 Paris (FR)
(72) Inventeur: MANIOULOUX, Yohan, 49000 Angers (FR); LEBEDEV, Gor, 38000 Grenoble (FR)
(74) Mandataire: Plasseraud IP
(86) Numéro de dépôt international: PCT/FR2016/050055
(87) Numéro de publication internationale: WO 2016/113501

(56) Documents cités:
- EP-A1- 0 785 415
- EP-A1- 0 933 617
- EP-A2- 0 289 033
- EP-A2- 0 455 613
- DE-A1- 3 014 137
- DE-A1- 3 828 456

## Description

### Domaine

La présente demande concerne le domaine des roulements comprenant un capteur de déplacement angulaire.

### Exposé de l'art antérieur

Il existe de nombreux roulements instrumentés, incorporant un codeur de rotation. Usuellement, le codeur est un codeur magnétique, par exemple un anneau en élasto-ferrite, alternativement polarisé avec des pôles positifs et négatifs le long de la circonférence du codeur. Le roulement comprend également un capteur qui mesure le passage des pôles pendant la rotation. De tels roulements sont par exemple très utilisés dans des roues de véhicule et font partie d'un de système antiblocage des roues (ABS) qui a besoin d'une mesure de vitesse de chaque roue du véhicule.

Cependant, ces roulements instrumentés ne mesurent que la vitesse de rotation, et non une position angulaire absolue. En outre, l'ensemble codeur-capteur de ces roulements a une précision très limitée, et il serait souhaitable de l'améliorer.

Le document DE 38 28 456 A1 décrit un roulement comprenant une bague de roulement et un capteur de déplacement angulaire.

Le document EP 0 289 033 A2 décrit un capteur inductif de déplacement d'une échelle à Vernier formée sur une cible métallique mobile relatif à un transducteur comprenant des enroulements primaire et secondaire.

### Résumé

Ainsi, un mode de réalisation prévoit un roulement comprenant une bague de roulement et un capteur inductif de déplacement angulaire de ladite bague de roulement, ledit capteur inductif comprenant :
- un transducteur comportant au moins un enroulement primaire adapté à produire une excitation magnétique, et au moins un enroulement secondaire comportant au moins une spire, adapté à fournir une force électromotrice à ses bornes en présence de ladite excitation ;
- une cible adaptée à se déplacer parallèlement au transducteur ; et
ladite cible étant formée d'une seule pièce métallique conductrice et comprenant une face avec une paroi de fond et un ou plusieurs plots métalliques en saillie depuis cette paroi de fond, ladite cible étant tournée en direction du transducteur du capteur inductif, le ou lesdits plots formant ainsi des motifs conducteurs ;
caractérisé en ce que ladite cible est fixée de façon robuste à la bague de roulement dont le déplacement angulaire est mesuré par le transducteur, ou la cible est directement usinée dans la bague de roulement dont le déplacement angulaire est mesuré par le transducteur.

Selon un mode de réalisation, la cible est fixée de façon robuste à la bague de roulement par une technique de montage en force métal-sur-métal et/ou de soudure métal-métal.

Selon un mode de réalisation, la cible est usinée par un procédé choisi dans une liste comprenant la gravure, le frittage, le moulage, et l'emboutissage.

Selon un mode de réalisation, le ou les plots ont une hauteur comprise entre 0,1 mm et 30 mm.

Selon un mode de réalisation, le ou les plots ont une hauteur comprise entre 0,5 mm et 1,5 mm.

Selon un mode de réalisation, la cible a la forme générale d'un disque, et les plots sont répartis le long d'une bande annulaire circulaire.

Selon l'invention, les motifs conducteurs sont répartis le long d'une zone de dimension Dₜₒₜ dans une direction circulaire, lesdits motifs étant définis par la superposition d'au moins un premier jeu de motifs élémentaires périodiques de période approximativement égale à Dₜₒₜ/N, comportant N premiers motifs conducteurs élémentaires de dimension approximativement égale à Dₜₒₜ/2N dans ladite direction, régulièrement répartis le long de ladite zone, et d'un deuxième jeu de motifs périodiques élémentaires de période approximativement égale à Dₜₒₜ/(N+r), comportant N+r deuxièmes motifs élémentaires (131ₖ ; 141ₖ ; 151ₖ) de dimension approximativement égale à Dₜₒₜ/2(N+r) dans ladite direction, régulièrement répartis le long de ladite zone, où N est un entier supérieur ou égal à 2 et r est un entier positif, non nul et inférieur ou égal à N-1, dans laquelle des premiers et deuxièmes motifs conducteurs élémentaires se chevauchent au moins partiellement.

Selon un mode de réalisation, les premiers et deuxièmes motifs conducteurs élémentaires ont respectivement la forme de portions de première et deuxième bandes superposées parallèles à ladite direction.

Selon un mode de réalisation, N est un nombre pair.

Selon un mode de réalisation, r est égal à 1.

Selon un mode de réalisation, la bague de roulement est une bague de roulement à billes.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
les figures 1A et 1B sont respectivement une vue de face et une vue de profil représentant de façon schématique un exemple d'un capteur inductif de déplacement angulaire ;
la figure 2 est un diagramme illustrant de façon schématique le fonctionnement du capteur de la figure 1 ;
les figures 3A et 3B sont des vues de face représentant de façon schématique un transducteur et une cible d'un autre exemple de capteur inductif de déplacement angulaire ;
la figure 4 est un diagramme illustrant de façon schématique le fonctionnement du capteur des figures 3A et 3B ;
la figure 5 est une vue de face représentant de façon schématique un transducteur d'un autre exemple de capteur inductif de déplacement angulaire ;
la figure 6 est un diagramme illustrant de façon schématique le fonctionnement du capteur de la figure 5 ;
la figure 7 est une vue de face représentant de façon schématique un transducteur d'un autre exemple de capteur inductif de déplacement angulaire ;
la figure 8 est un diagramme illustrant de façon schématique le fonctionnement du capteur de la figure 7 ;
la figure 9A est un diagramme représentant l'évolution théorique attendue de signaux de sortie d'un capteur inductif de déplacement angulaire ;
la figure 9B est un diagramme représentant l'évolution réelle, typiquement obtenue dans la pratique, des signaux de sortie d'un capteur inductif de déplacement angulaire ;
la figure 10 est un diagramme représentant, pour plusieurs distances cible-transducteur distinctes, l'évolution d'un signal de sortie d'un capteur inductif de déplacement angulaire ;
la figure 11 est un diagramme représentant l'évolution, en fonction de la distance cible-transducteur, de l'erreur de linéarité d'un signal de sortie d'un capteur inductif de déplacement angulaire ;
les figures 12A à 12D sont des vues en coupe illustrant de façon schématique quatre exemples de réalisation d'un capteur inductif de déplacement angulaire ;
la figure 13A est un diagramme représentant, pour les quatre exemples de capteur des figures 12A à 12D, l'évolution, en fonction de la distance cible-transducteur, de l'erreur de linéarité d'un signal de sortie du capteur ;
la figure 13B est un diagramme représentant l'évolution de la distance cible-transducteur optimale en termes de linéarité en fonction d'un paramètre d'un exemple d'un capteur inductif de déplacement ;
la figure 13C est un diagramme représentant l'évolution de la distance cible-transducteur optimale en termes de linéarité en fonction d'un paramètre d'un autre exemple d'un capteur inductif de déplacement ;
la figure 14 est une vue de face représentant un exemple d'une pièce de confinement de champ d'un exemple de réalisation d'un capteur inductif de déplacement angulaire ;
la figure 15 est une vue de face représentant un autre exemple d'une pièce de confinement de champ d'un exemple de réalisation d'un capteur inductif de déplacement angulaire ;
les figures 16A et 16B sont des vues de face représentant de façon schématique deux exemples de réalisation d'une cible d'un capteur inductif de déplacement angulaire ;
la figure 17 est un diagramme représentant l'évolution, dans un capteur inductif de déplacement angulaire, de la distance cible-transducteur optimale en termes de linéarité, en fonction d'un paramètre de forme d'un motif de la cible ;
la figure 18A est une vue de face représentant de façon schématique et partielle trois exemples de réalisation d'une cible d'un capteur inductif de déplacement angulaire ;
la figure 18B est une vue de face représentant de façon schématique et partielle un exemple de réalisation d'un enroulement secondaire d'un transducteur adapté à fonctionner en coopération avec les cibles de la figure 18A ;
la figure 19 est un diagramme représentant l'évolution, dans un capteur inductif de déplacement angulaire, de la distance cible-transducteur optimale en termes de linéarité, en fonction d'un autre paramètre de forme d'un motif de la cible ;
la figure 20A est une vue de face représentant de façon schématique un exemple d'un transducteur d'un capteur inductif de déplacement angulaire ;
la figure 20B est une vue de face représentant de façon schématique un exemple d'un transducteur d'un capteur inductif de déplacement linéaire ;
la figure 20C est une vue de face représentant de façon schématique un exemple d'un mode de réalisation d'un transducteur d'un capteur inductif de déplacement angulaire ;
la figure 20D est une vue de face représentant de façon schématique un exemple d'un mode de réalisation d'un transducteur d'un capteur inductif de déplacement linéaire ;
la figure 20E est une représentation électrique petit signaux du comportement du transducteur de la figure 20D ;
les figures 21A et 21B sont des vues de face représentant de façon schématique un exemple de réalisation d'un transducteur d'un capteur inductif de déplacement angulaire ;
les figures 22A et 22B sont des vues de face représentant de façon schématique un autre exemple de réalisation d'un transducteur d'un capteur inductif de déplacement angulaire ;
la figure 23 est une vue de face représentant de façon schématique une cible d'un exemple de capteur inductif de déplacement angulaire ;
la figure 24 est un diagramme représentant de façon schématique l'évolution de signaux de mesure du capteur de la figure 23 ;
la figure 25 est une vue de face représentant de façon schématique une cible d'un exemple de réalisation d'un capteur inductif de déplacement angulaire ;
la figure 26 est une vue de face représentant de façon schématique une cible d'une variante de réalisation d'un capteur inductif de déplacement angulaire ;
les figures 27A à 27C sont des vues de face représentant de façon schématique une autre variante de réalisation d'un capteur inductif de déplacement angulaire ;
la figure 28 est une vue en perspective représentant un exemple de réalisation d'une cible pour capteur inductif de déplacement angulaire ;
la figure 29 est une vue en perspective représentant un autre exemple de réalisation d'une cible pour capteur inductif de déplacement angulaire ; et
la figure 30 est une vue en perspective représentant un roulement comprenant une cible selon l'exemple de la figure 29.

### Description détaillée

Par souci de clarté, de mêmes éléments ont été désignés par de mêmes références aux différentes figures et, de plus, les diverses figures ne sont pas tracées à l'échelle. Par ailleurs, dans la suite de la description, sauf indication contraire, les termes "approximativement", "sensiblement", "environ", "de l'ordre de", "quasiment", etc., signifient "à 20% près et de préférence à 5% près", ou "à 5° près et de préférence à 2° près" lorsqu'ils se rapportent à des distances angulaires, et des références directionnelles telles que "vertical", "horizontal", "latéral", "en dessous", "au-dessus", "supérieur", "inférieur", etc., s'appliquent à des dispositifs orientés de la façon illustrée dans les vues correspondantes, étant entendu que, dans la pratique, ces dispositifs peuvent être orientés différemment.

On s'intéresse particulièrement à la mesure inductive de déplacement d'une pièce mécanique par rapport à une autre. Par mesure inductive on entend ici la mesure de champs électromagnétiques alternatifs, au moyen de bobinages électriques. Plus particulièrement mais non limitativement, la présente demande concerne le sous-domaine technique des capteurs à courants de Foucault, dans lequel un champ électromagnétique généré par un inducteur s'établit de manière différente selon la présence et la disposition de pièces conductrices mobiles (par rapport à l'inducteur) à proximité de l'inducteur. De tels phénomènes électromagnétiques deviennent exploitables à des fins d'instrumentation lorsque certaines fréquences électriques du champ électromagnétique prennent des valeurs suffisamment importantes, cette notion d'importance étant conditionnée par plusieurs paramètres tels que les dimensions géométriques des pièces conductrices, leurs propriétés électriques et magnétiques, leur température, etc. Par mesure de déplacements on entend ici l'estimation d'informations relatives à la position, la vitesse, l'accélération ou toute autre grandeur caractéristique des déplacements de la pièce conductrice par rapport à l'inducteur ou au référentiel de l'inducteur. Par déplacements, on considère à la fois les déplacements angulaires (rotation autour d'un axe), linéaires (translation selon un axe), ou toute combinaison de tels déplacements entre eux ou selon des axes disjoints. Plus particulièrement mais non limitativement, la présente demande concerne les sous-domaines techniques des capteurs inductifs de position, des capteurs inductifs de vitesse et/ou des capteurs inductifs d'accélération.

Un capteur inductif de déplacement comprend typiquement un transducteur (par exemple solidaire d'un référentiel de mesure, également appelé bâti), et une cible (par exemple solidaire d'une pièce mécanique mobile par rapport au référentiel de mesure). La cible est placée à distance du transducteur, et n'est pas en contact (ni mécaniquement ni électriquement) avec le transducteur (mesure sans contact). Le transducteur comporte un enroulement primaire, ou inducteur, adapté à produire un champ électromagnétique alternatif, et au moins un enroulement secondaire aux bornes duquel est induite une tension alternative, aussi appelée force électromotrice ou FEM, en présence du champ électromagnétique produit par l'enroulement primaire. La cible est un élément partiellement ou totalement conducteur, aussi appelé induit de couplage, dont la présence et/ou le déplacement devant le transducteur modifie le couplage entre l'enroulement primaire et l'enroulement secondaire. On notera que l'effet de la cible sur le couplage entre l'enroulement primaire et l'enroulement secondaire dépend de la position de la cible par rapport au transducteur, mais aussi de sa vitesse par rapport au transducteur.

La distribution de champ électromagnétique est ainsi façonnée spatialement selon la position et le déplacement relatif de la cible par rapport au transducteur. Lors d'un déplacement de la pièce mécanique, la distribution spatiale du champ électromagnétique évolue, et donc la FEM induite dans l'enroulement secondaire évolue aussi. L'analyse de la FEM induite, aux bornes de l'enroulement secondaire, par le champ électromagnétique produit par l'enroulement primaire, permet d'estimer la position et/ou le déplacement de la cible par rapport à l'enroulement secondaire du transducteur. Plus particulièrement mais non limitativement, les variations temporelles de l'amplitude de la FEM aux bornes de l'enroulement secondaire permettent d'estimer la position, la vitesse et/ou l'accélération de la cible par rapport au transducteur.

Il est précisé qu'ici et dans la suite de la présente demande, par amplitude de l'enveloppe de la force électromotrice aux bornes de l'enroulement secondaire, on fait référence à la valeur instantanée prise par un signal de contenu fréquentiel limité, par exemple dans une bande fréquentielle comprise entre -Δf et +Δf autour de la fréquence d'excitation (c'est-à-dire la fréquence de la tension alternative appliquée aux bornes de l'enroulement primaire), avec Δf pouvant par exemple prendre une valeur comprise entre 100Hz et 100kHz, porteur de l'information ou d'une partie de l'information caractéristique du déplacement mécanique. Ce signal est contenu dans la force électromotrice, modulé à la fréquence d'excitation et/ou de ses harmoniques. Il peut être obtenu par un procédé de transposition en fréquence et de filtrage, et plus précisément par une transposition en bande de base et un filtrage. Un exemple privilégie de tel procédé consiste à réaliser une démodulation synchrone de la force électromotrice (modulée) par un signal synchrone de la fréquence d'excitation, et dont la phase électrique a été choisie pour répondre à des critères particuliers, par exemple pour maximiser le signal obtenu en sortie de démodulation. Un procédé alternatif consiste à calculer le module du signal après démodulation synchrone, ce qui présente l'avantage et l'inconvénient de ne pas fixer de phase électrique de démodulation. Il est également précisé que l'amplitude de la force électromotrice est une grandeur de mesure privilégiée pour la mise en œuvre d'une mesure de déplacement avec les capteurs objets de l'invention, mais qu'elle n'est nullement exclusive d'autres grandeurs électriques de mesure telles que la phase, la fréquence, ou encore la puissance électrique au secondaire lorsque l'on connecte une charge de valeur finie aux bornes de l'enroulement secondaire (adaptation de charge).

Des exemples de capteurs inductifs de déplacement, et plus particulièrement de capteurs de position à courants de Foucault ont été décrits dans le brevet EP0182085.

Les capteurs inductifs de déplacement connus présentent toutefois divers inconvénients. En particulier, les capteurs connus sont relativement sensibles aux imprécisions de montage (décentrage, inclinaison et/ou distance cible/transducteur), ainsi qu'à la présence de pièces conductrices à proximité de la zone de mesure, ce qui pose problème pour une exploitation industrielle. Des problèmes liés à l'absence de linéarité de la réponse du capteur peuvent en outre se poser. De plus, la précision et la robustesse de l'estimation de position et/ou de déplacement de la cible dans les capteurs connus gagnerait à être améliorée. En outre, il serait souhaitable de pouvoir augmenter l'étendue de la plage de mesure de certains types de capteurs connus. Par ailleurs, un inconvénient des capteurs connus est qu'ils sont relativement fragiles, ce qui pose problème dans certains types d'application, notamment en milieu industriel.

Il serait souhaitable de pouvoir disposer de capteurs inductifs de déplacement palliant tout ou partie des inconvénients des capteurs connus.

On s'intéresse ici tout particulièrement à des capteurs de déplacement angulaire, et plus précisément à des capteurs de déplacement angulaire de forme générale approximativement planaire, par exemple des capteurs ayant une forme générale de disque, ou, plus généralement, des capteurs ayant une forme de bande annulaire circulaire d'ouverture angulaire inférieure ou égale à 360°. On comprendra toutefois à la lecture de ce qui suit que tous les exemples de réalisation, modes de réalisation et variantes de réalisation décrits dans la présente demande peuvent être adaptés à d'autres types de capteur inductifs de déplacement, par exemple des capteurs inductifs de déplacement linéaire du type décrit dans le brevet EP0182085 susmentionné. L'adaptation des exemples et modes de réalisation décrits dans la présente demande à d'autres types de capteurs inductifs de déplacement est à la portée de l'homme du métier et ne sera donc pas détaillée ci-après.

A titre d'exemple illustratif mais non limitatif, les capteurs inductifs décrits dans la présente demande et illustrés sur les figures ont des dimensions caractéristiques (diamètre pour les capteurs angulaires et largeur pour les capteurs linéaires) comprises entre 5 mm et 200 mm, et de préférence comprises entre 40 mm et 50 mm.

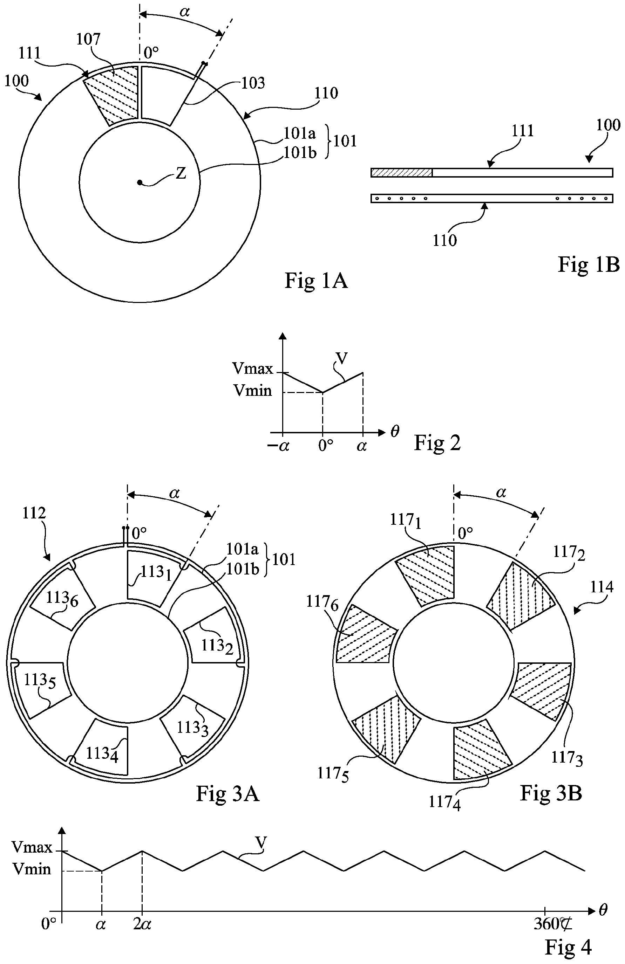

Les figures 1A et 1B sont respectivement une vue de face et une vue de profil représentant de façon schématique un exemple d'un capteur inductif de position angulaire 100 de type planaire, présentant une forme générale de disque.

Le capteur 100 comprend un transducteur 110 comportant un enroulement conducteur primaire 101 et un enroulement conducteur secondaire 103. Sur la figure 1B, les enroulements primaire et secondaire du transducteur 110 n'ont pas été détaillés. De préférence, l'enroulement primaire 101 comprend deux spires ou boucles conductrices 101a et 101b approximativement circulaires, concentriques et coplanaires, de sens d'enroulement opposés et de rayons distincts. Chaque spire 101a, 101b de l'enroulement primaire 101 comprend au moins un tour, et de préférence plusieurs tours. Les spires 101a et 101b sont de préférence connectées en série de manière à être parcourues par des courants de même intensité mais de sens de circulation opposés, mais peuvent optionnellement être connectées en parallèle de manière à voir une même tension à leurs bornes (appliquée de préférence de façon que les sens de circulation du courant dans les deux spires soient opposés). Un avantage de l'exemple d'agencement d'enroulement primaire de la figure 1 est qu'il permet de produire un champ d'excitation sensiblement uniforme dans la bande annulaire située entre les deux spires, et sensiblement nul en dehors de cette bande. A titre de variante, l'enroulement primaire 101 peut comporter une seule spire (à un ou plusieurs tours). Plus généralement, l'enroulement primaire 101 peut comporter une ou plusieurs spires concentriques (à un ou plusieurs tours chacune) disposées de manière à générer un champ électromagnétique dans la zone de mesure du transducteur. Les modes de réalisation décrits ne se limitent pas à ces agencements particuliers de l'enroulement primaire.

Dans l'exemple représenté, l'enroulement secondaire 103 est constitué d'une spire ou boucle conductrice disposée dans l'espace en forme de bande annulaire circulaire situé entre les spires 101a et 101b. L'enroulement 103 est par exemple situé approximativement dans le même plan que les spires 101a et 101b, ou dans un plan sensiblement parallèle.

Dans cet exemple, en vue de face, la spire 103 suit sensiblement le contour d'un secteur angulaire d'ouverture angulaire α de la bande annulaire délimitée par les spires 101a et 101b. La spire 103 comprend notamment des portions radiales et des portions ortho-radiales du contour de la portion de bande annulaire. Un tel enroulement permet une mesure de position angulaire sur une plage de α°. Dans l'exemple représenté, l'ouverture angulaire α de la spire 103 est approximativement égale à 30°. Les modes de réalisation décrits ne se limitent toutefois pas à ce cas particulier. A titre de variante, l'angle α peut prendre toute valeur comprise entre 0 et 180°. La spire 103 comprend de préférence un seul tour mais peut optionnellement comprendre plusieurs tours. Les enroulements primaire 101 et secondaire 103 sont par exemple disposés dans et sur un même support diélectrique (non représenté) en forme de plaque de quelques centaines de micromètres à quelques millimètres d'épaisseur, par exemple un support de carte de circuit imprimé de type PCB (de l'anglais "Printed Circuit Board").

Le capteur 100 comprend en outre une cible 111 comprenant un motif conducteur 107, située à une distance non nulle du transducteur et adaptée à se déplacer par rapport au transducteur. Sur la figure 1A, seule la partie conductrice 107 de la cible a été représentée. Dans cet exemple, le motif conducteur 107 de la cible 111 a sensiblement la même forme que la portion de bande annulaire délimitée par le motif de la spire 103 du transducteur. La cible est montée mobile en rotation autour d'un axe Z orthogonal au plan du transducteur passant par le centre des spires 101a et 101b, de telle façon que, lorsque la cible tourne d'un angle 2α autour de l'axe Z, le motif conducteur 107 (d'ouverture angulaire α), recouvre approximativement intégralement puis découvre approximativement intégralement la surface de la bande annulaire délimitée par la spire de l'enroulement secondaire 103 du transducteur. A titre d'exemple non limitatif, la cible peut être constituée par une plaque en un matériau diélectrique, par exemple en forme de disque, dont une face tournée vers le transducteur est partiellement revêtue d'une couche d'un matériau conducteur, magnétique ou non, par exemple une couche métallique, par exemple une couche de fer, d'acier, d'aluminium, de cuivre, etc., formant le motif conducteur 107. A titre de variante, la cible peut être constituée uniquement par une portion de plaque métallique découpée à la forme du motif conducteur 107, montée par tout moyen adapté de façon à pouvoir se déplacer en rotation par rapport au transducteur au-dessus de la portion de bande annulaire délimitée par les spires 101a et 101b.

Le fonctionnement du capteur 100 des figures 1A et 1B va maintenant être décrit en relation avec la figure 2 qui représente l'évolution de l'amplitude de la force électromotrice V aux bornes de l'enroulement secondaire 103 du capteur en fonction de la position angulaire θ de la cible 111 par rapport au transducteur 110.

En fonctionnement, on applique par des moyens électriques la circulation d'un courant alternatif Ip dans l'enroulement primaire 101. La circulation du courant Ip dans l'enroulement 101 produit un champ électromagnétique B présentant, en l'absence de cible, une distribution sensiblement symétrique par révolution dans la bande annulaire circulaire parcourue par l'enroulement secondaire 103. A titre d'exemple non limitatif, la fréquence du courant alternatif d'excitation Ip imposé dans l'enroulement primaire est comprise entre 500 kHz et 50 MHz (par exemple 4 MHz). L'amplitude du courant Ip est par exemple comprise entre 0,1 mA et 100 mA (par exemple 2 mA). En l'absence de cible 111, ou, plus généralement, lorsque le motif conducteur 107 de la cible ne recouvre pas l'enroulement secondaire 103, l'enroulement secondaire 103 fournit entre ses extrémités une FEM alternative V, de fréquence sensiblement égale à la fréquence d'excitation de l'enroulement primaire, et d'amplitude a priori non nulle. Lorsque le motif conducteur 107 de la cible 111 recouvre tout ou partie de l'enroulement secondaire 103, la distribution spatiale de champ électromagnétique au voisinage de la spire 103 évolue en fonction de la disposition et du déplacement de la portion de surface du motif conducteur 107 située en regard de la spire 103. Une autre formulation consiste à considérer que sous l'effet de l'excitation magnétique générée par la circulation du courant Ip dans l'enroulement primaire, des courants de Foucault apparaissent dans le motif conducteur 107, entrainant une modification de la distribution spatiale du champ électromagnétique fonction de la disposition et du déplacement de la portion de surface du motif 107 située en regard de la spire 103. Ces évolutions ou variations de la distribution spatiale du champ électromagnétique fonction de la disposition et du déplacement de la portion de surface du motif 107 située en regard de la spire 103, se traduisent, par induction, par des variations ou évolutions de l'amplitude V de l'enveloppe de la tension aux bornes de l'enroulement secondaire, fonction de la disposition et du déplacement de la portion de surface du motif 107 située en regard de la spire 103.

On considère à titre d'exemple illustratif non limitatif que la cible peut se déplacer en rotation autour de l'axe Z par rapport au transducteur, dans une plage de positions angulaires allant de θ=-α° à θ=α°. On considère arbitrairement que la position θ=-α° correspond à la disposition représentée en figure 1A, dans laquelle le motif conducteur 107 ne masque pas la spire 103, mais a, vu de dessus, un bord radial accolé à un bord radial de la spire 103. Ainsi, pour les positions angulaires θ allant de -α° à 0°, la surface de la portion du motif conducteur 107 située en regard de la spire 103 croît lorsque la position angulaire θ croît, puis, pour les positions angulaires θ allant de 0° à α°, la surface de la portion du motif conducteur 107 en regard de la spire 103 décroit lorsque la position angulaire θ croît. En dehors de la plage de positions angulaires allant de θ=-α° à θ=α°, la surface de la portion du motif conducteur 107 en regard de la spire de l'enroulement secondaire 103 est nulle, et la position et/ou le déplacement de la cible 111 par rapport au transducteur ne peuvent pas être mesurés.

L'amplitude V de l'enveloppe de la tension mesurée aux bornes d'un enroulement secondaire d'un capteur inductif de déplacement est théoriquement proportionnelle à l'aire de la portion de surface du motif conducteur de la cible situé en regard de l'enroulement secondaire. Ainsi, comme cela apparaît sur la figure 2, pour les positions angulaires θ allant de -α° à 0°, le signal V décroit lorsque la position angulaire θ croît, passant d'une valeur haute Vₘₐₓ pour θ = -α° à une valeur basse Vₘᵢₙ pour θ=0°, et pour les positions angulaires θ allant de 0° à α°, le signal V croît lorsque la position angulaire θ croît, passant de la valeur basse Vₘᵢₙ pour θ = 0° à la valeur haute Vₘₐₓ pour θ=α°. Le signal V est donc théoriquement un signal triangulaire variant linéairement entre Vₘᵢₙ et Vₘₐₓ sur la plage angulaire allant de -α° à α°. On verra ci-après qu'en pratique, le signal V présente des zones de non linéarité et a en conséquence plutôt une forme sinusoïdale.

Ainsi, dans la plage de positions angulaires allant θ=-α° à θ=0°, ou dans la plage de positions angulaires allant de θ=0° à θ=α°, la mesure de l'amplitude V de l'enveloppe de la force électromotrice aux bornes de l'enroulement secondaire 103 permet de déterminer la position angulaire θ de la cible par rapport au transducteur. Bien que la valeur du signal V varie en fonction de la position angulaire θ de la cible dans les deux plages de positions angulaires susmentionnées, la mesure du signal V ne permet pas de discriminer les valeurs de position de la plage allant de -α° à 0° des valeurs de position de la plage allant de 0° à α° (mesure non-surjective). L'étendue de la plage des positions angulaires pouvant effectivement être mesurées par le capteur 100 est donc approximativement égale à α°, pour autant que l'angle α ne dépasse pas 180°.

Les figures 3A et 3B sont des vues de face représentant de façon schématique un autre exemple d'un capteur inductif de position angulaire présentant une forme générale de disque. Ce capteur comprend un transducteur 112 représenté en figure 3A et une cible 114 représentée en figure 3B. La cible 114 de la figure 3B diffère de la cible 111 de la figure 1A principalement par son motif conducteur. En particulier, la cible 114 de la figure 3B diffère de la cible 111 de la figure 1A en ce qu'elle ne comprend plus un unique motif conducteur 107, mais un jeu de N motifs conducteurs 117ᵢ solidaires de la cible, et adaptés à se déplacer par rapport au transducteur, N étant un entier supérieur ou égal à 2 et i étant un entier allant de 1 à N. Le transducteur 112 de la figure 3A diffère du transducteur 110 de la figure 1A principalement par la forme de son enroulement secondaire 113. En particulier, l'enroulement secondaire 113 du transducteur 112 de la figure 3A ne comprend plus une unique spire conductrice, mais un jeu de N spires 113ᵢ. La cible 114 de la figure 3B est destinée à être montée mobile en rotation par rapport au transducteur 112 de la figure 3A, de façon similaire ou identique à ce qui a été décrit en relation avec les figures 1A et 1B.

Dans cet exemple, en vue de face, le jeu de motifs conducteurs 117ᵢ et le jeu de spires 113ᵢ, sont constitués de la répétition par révolution de N motifs sensiblement identiques, respectivement 117ᵢ et 113ᵢ. La répétition par révolution de ces motifs est réalisée avec une périodicité spatiale de 2α, c'est-à-dire que chaque motif d'ouverture angulaire sensiblement égale à α° est espacé de son plus proche voisin par une portion de bande annulaire circulaire vide d'étendue ortho-radiale sensiblement égale à α°.

Pour des capteurs dont la forme générale est une bande annulaire circulaire fermée, c'est-à-dire d'ouverture angulaire égale à 360°, la valeur de l'angle d'ouverture α des motifs est choisie de préférence telle que α = 360°/2N, afin de garantir un nombre entier de répétitions de motifs par tour (sur 360°). Dans l'exemple des figures 3A et 3B, N = 6 et α = 30°.

En d'autres termes, le transducteur de la figure 3A comprend un enroulement secondaire 113 comprenant N boucles ou spires 113ᵢ en série. Chaque spire 113ᵢ a une forme en secteur de bande annulaire circulaire, du même type que la spire 103 de la figure 1A, et présente une dimension angulaire approximativement égale α=360°/2N (c'est-à-dire α=30° dans cet exemple). Les N spires 113ᵢ sont régulièrement réparties le long des 360° de la bande annulaire circulaire approximativement délimitée par les spires 101a et 101b de l'enroulement primaire 101, c'est-à-dire que deux spires 113ᵢ consécutives de l'enroulement secondaire sont séparées par une portion de bande annulaire d'angle approximativement égal à α.

La cible de la figure 3B comprend N motifs conducteurs 117ᵢ. Chaque motif 117ᵢ a une forme en secteur de bande annulaire, du même type que le motif conducteur 107 de la figure 1, et une dimension angulaire approximativement égale α=360°/2N. Les N motifs conducteurs 117ᵢ sont régulièrement répartis le long d'une bande annulaire de la cible destinée à être positionnée en regard de la bande annulaire du transducteur contenant les spires 113ᵢ.

Dans la suite de la présente demande, on appellera capteur multipôle les capteurs du type décrit en relation avec les figures 3A et 3B, N désignant le nombre de paires de pôles du capteur. Dans l'exemple de la figure 1A, si α prend la valeur 180°, on parle de capteur à une paire de pôles. Plus particulièrement, on désignera par capteur multipôle un capteur dans lequel un motif conducteur élémentaire est régulièrement répété au moins deux fois sur la cible selon une direction parallèle à un degré de liberté de déplacement de la cible par rapport au transducteur (c'est-à-dire selon une direction orthoradiale dans un capteur angulaire du type décrit ci-dessus) .

Par analogie avec la période électrique d'un moteur électrique à plusieurs paires de pôles, on fera désormais référence à l'ouverture angulaire entre deux motifs adjacents 117ᵢ, et à l'ouverture angulaire entre deux motifs adjacents 113ᵢ, comme étant la période électrique du capteur. Dans le cas particulier du capteur des figures 3A et 3B, pour lequel les motifs conducteurs sont d'ouverture angulaire α° et les espaces vides entre ces motifs sont également d'ouverture angulaire α°, la période électrique est égale à 2α°, et, inversement, l'ouverture angulaire d'un motif conducteur vaut une demi-période électrique de capteur, ce qui est un cas privilégié mais non exclusif. Par construction, pour les capteurs dont la forme générale est une bande annulaire circulaire fermée, une période électrique est de préférence un sous-multiple de 360°, puisque α = 360°/2N. Dans ces termes, un capteur inductif multipôle dispose d'une plage de mesure de α°, égale à la moitié de sa période électrique de 2α°. Dans l'exemple de la figure 1A, si α prend la valeur 180°, la période électrique est égale à 360°, et la plage de mesure est approximativement égale à la moitié de la période électrique, soit 180°. Dans l'exemple des figures 3A et 3B pour lesquelles α = 30°, la période électrique est 2α = 60°, et la plage de mesure est approximativement égale à la moitié de la période électrique soit α = 30°.

La figure 4 est un diagramme représentant l'évolution de l'amplitude V de l'enveloppe de la force électromotrice aux bornes de l'enroulement secondaire 113 du capteur des figures 3A et 3B en fonction de la position angulaire θ de la cible par rapport au transducteur.

Comme cela apparaît sur la figure 4, lorsque la position angulaire θ de la cible par rapport au transducteur varie de 0° à 360°, le signal V varie de façon périodique entre une valeur haute Vₘₐₓ et une valeur basse Vₘᵢₙ, avec une période angulaire de variation approximativement égale à la période électrique 2α du capteur.

L'amplitude de la plage des positions angulaires θ pouvant être mesurées par le capteur des figures 3A et 3B est approximativement égale à la moitié de la période électrique, soit α°.

Un avantage du capteur des figures 3A et 3B par rapport au capteur des figures 1A et 1B est que le nombre plus important de motifs répartis sur la cible et sur le transducteur permet une mesure répartie sur une zone de mesure étendue, dans laquelle chaque motif contribue de manière locale et constructive à la génération d'une force électromotrice globale, cette force électromotrice étant plus immune aux erreurs de positionnement de la cible par rapport au transducteur que dans le capteur des figures 1A et 1B, dans lequel la mesure réalisée est une mesure locale effectuée au moyen d'un seul jeu de motifs 107-103. Cette robustesse de la mesure est d'autant plus importante que le nombre N de paires de pôles du capteur est élevé.

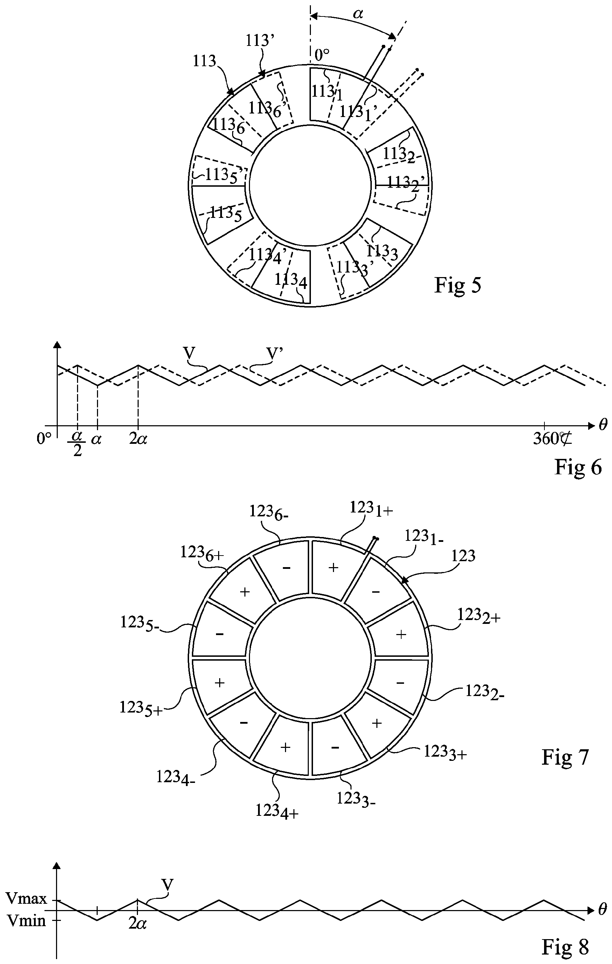

La figure 5 illustre une variante de réalisation du capteur des figures 3A et 3B. Sur la figure 5, seul le transducteur du capteur a été représenté, la cible étant identique à celle de la figure 3B.

Le transducteur du capteur de la figure 5 comprend les mêmes éléments que le transducteur de la figure 3A, et comprend en outre un deuxième enroulement secondaire 113' comprenant N boucles ou spires 113ᵢ' en série. Par souci de clarté, les connexions entre les différentes boucles 113ᵢ de l'enroulement 113 et les connexions entre les différentes boucles 113ᵢ' de l'enroulement 113' n'ont pas été représentées sur la figure 5. L'enroulement secondaire 113' (représenté en trait interrompu) est sensiblement identique à l'enroulement secondaire 113 (représenté en trait plein), et est disposé dans la même bande annulaire du transducteur que l'enroulement secondaire 113, avec un décalage angulaire correspondant à un quart de la période électrique du capteur, c'est à dire approximativement égal à α/2, par rapport à l'enroulement secondaire 113.

La figure 6 est un diagramme représentant l'évolution de l'amplitude V (en trait plein) de l'enveloppe de la force électromotrice aux bornes de l'enroulement secondaire 113 du capteur de la figure 5, et l'évolution de l'amplitude V' (en trait interrompu) de l'enveloppe de la force électromotrice aux bornes de l'enroulement secondaire 113' du capteur de la figure 5, en fonction de la position angulaire θ de la cible par rapport au transducteur.

Comme cela apparaît sur la figure 6, lorsque la position angulaire θ de la cible par rapport au transducteur varie de 0° à 360°, les signaux V et V' varient de façon périodique entre une valeur haute Vₘₐₓ et une valeur basse Vₘᵢₙ, avec une période de variation égale à la période électrique du capteur, c'est-à-dire approximativement égale à 2α° dans cet exemple, et avec un décalage angulaire l'un par rapport à l'autre sensiblement égal au quart de la période électrique du capteur, c'est-à-dire d'approximativement α/2° dans cet exemple.

Un avantage du transducteur de la figure 5 par rapport au transducteur de la figure 3A est qu'il permet d'étendre la plage des positions angulaires θ pouvant être mesurées par le capteur jusqu'à approximativement une période électrique entière (c'est-à-dire 2α°), au lieu d'une demi-période (c'est-à-dire α°) dans l'exemple des figures 3A et 3B.

La figure 7 illustre une autre variante de réalisation du capteur des figures 3A et 3B. Sur la figure 7, seul le transducteur du capteur a été représenté, la cible étant identique à celle de la figure 3B.

Le transducteur du capteur de la figure 7 diffère du transducteur de la figure 3A principalement par la forme de son enroulement secondaire. Le transducteur du capteur de la figure 7 comprend un enroulement secondaire 123 comprenant 2N boucles ou spires de sens d'enroulement alternés, connectées entre elles en série. En d'autres termes, l'enroulement secondaire 123 comprend 2N motifs de circuits électriques ou spires, chacun étant connecté à son plus proche voisin en anti-série. Plus particulièrement, l'enroulement 123 comprend N spires 123ᵢ₊ de même sens d'enroulement, sensiblement identiques aux N spires 113ᵢ du transducteur de la figure 3A, et comprend en outre N spires 123ᵢ₋ de sens d'enroulement opposé, chaque spire 123ᵢ₋ étant disposée entre deux spires 123ᵢ₊ consécutives, et chaque spire 123ᵢ₋ ayant une forme en secteur de bande annulaire circulaire, du même type que les spires 123ᵢ₊. Par souci de clarté, les connexions entre les spires 123ᵢ₊ et 123ᵢ₋de l'enroulement 123 n'ont pas été représentées sur la figure 7, et les deux sens d'enroulement ont été schématisés par un signe + pour les spires 123ᵢ₊ et par un signe - pour les spires 123ᵢ₋.

Plus précisément, dans l'exemple de la figure 7, l'ouverture angulaire α de chaque spire 123ᵢ₊ et 123ᵢ₋ a été choisie strictement inférieure à une demi-période électrique afin de permettre une représentation graphique plus lisible. En pratique, l'ouverture angulaire α de chaque spire 123ᵢ₊ et 123ᵢ₋peut approcher une demi-période électrique par valeur inférieure, par valeur exacte, ou par valeur supérieure. Dans le cas particulier où l'ouverture angulaire vaut exactement une demi-période électrique, qui est un exemple privilégié mais non exclusif de réalisation, la somme des ouvertures angulaires des N spires 123ᵢ₊ et des ouvertures angulaires des N spires 123ᵢ₋vaut 360°, ou autrement dit, les pistes radiales constitutives de deux spires 123ᵢ₊ et 123ᵢ₋ adjacentes partagent les mêmes coordonnées spatiales dans un repère {R, θ} (non représenté) dirigé par l'axe Z et ayant pour centre le centre du capteur. Ceci ne signifie bien entendu pas pour autant que ces pistes sont confondues et que les spires 123ᵢ₊ et 123ᵢ₋ sont en court-circuit, dans la mesure où lesdites pistes peuvent être placées sur deux plans distincts selon l'axe Z.

La période spatiale de répétition entre deux spires adjacentes 123ᵢ₊, et la période spatiale de répétition entre deux spires adjacentes 123ᵢ₋, sont maintenues égales à une période électrique de capteur quelle que soit l'ouverture angulaire α des spires 123ᵢ₊ et 123ᵢ₋. Un exemple privilégié mais non limitatif de mise en œuvre d'un tel jeu de spires d'ouverture angulaire différente d'une demi-période électrique de capteur, consiste à répartir régulièrement ortho-radialement les spires 123ᵢ₊ et 123ᵢ₋ tel qu'illustré en figure 7.

La figure 8 est un diagramme représentant l'évolution de l'amplitude V de l'enveloppe de la force électromotrice aux bornes de l'enroulement secondaire 123 du capteur de la figure 7 en fonction de la position angulaire θ de la cible par rapport au transducteur.

Comme cela apparaît sur la figure 8, lorsque la position angulaire θ de la cible par rapport au transducteur varie de 0° à 360°, l'amplitude V varie de façon périodique entre une valeur haute Vₘₐₓ et une valeur basse Vₘᵢₙ, avec une période de variation approximativement égale à une période électrique.

Un avantage du transducteur de la figure 7 par rapport au transducteur de la figure 3A est que l'amplitude V est approximativement centrée autour de 0 volts (Vₘᵢₙ≈-Vₘₐₓ). Plus généralement, la mise en oeuvre d'une mesure spatialement différentielle, telle que celle qui est par exemple décrite en relation avec la figure 7, permet d'obtenir une amplitude V de moyenne faible par rapport aux valeurs Vₘᵢₙ et Vₘₐₓ. Ceci simplifie l'exploitation de la mesure à des fins d'estimation du déplacement, et en particulier réduit l'influence de dérives et perturbations parasites.

En effet, certaines variations de l'amplitude V liées à des effets parasites, c'est-à-dire dont l'origine n'est pas le déplacement de la cible, se traduisent uniquement par une variation de gain dans le cas du capteur de la figure 7, alors qu'elles se traduisent à la fois par une variation de gain et par une variation d'offset dans le cas du capteur de la figure 3A. Ceci est par exemple le cas lorsque le coefficient de couplage entre le primaire, la cible et le secondaire varie du fait d'une variation parasite de la distance cible-transducteur. Ceci est en outre le cas lorsque l'amplitude du courant d'excitation varie, par exemple en cas de fluctuation parasite de la tension d'alimentation, ou en cas de dérives des propriétés électriques de l'enroulement primaire, par exemple en fonction de la température ou de l'éloignement relatif du transducteur et de la cible.

D'autre part, dans l'exemple de la figure 7, le couplage de l'enroulement secondaire avec des champs extérieurs non porteurs d'information sur le déplacement de la cible, est considérablement réduit du fait du caractère spatialement différentiel de la mesure. C'est en particulier le cas pour la partie du champ électromagnétique générée par le primaire qui induit la partie constante (indépendante de la position de la cible) de l'amplitude de la FEM, mais également pour toutes les perturbations électromagnétiques externes qui présentent une distribution sensiblement uniforme au voisinage de l'enroulement secondaire 123.

La variante de la figure 7 peut être combinée avec la variante de la figure 5 pour obtenir deux signaux d'amplitude V et V' décalés angulairement d'un quart de période électrique et centrés sur 0 volts environ.

On notera que le fait que l'amplitude V de l'enveloppe de la FEM soit approximativement centrée sur 0 volts ne signifie pas nécessairement que la force électromotrice modulée vérifie ces mêmes propriétés avant la mise en oeuvre d'un procédé de transposition en fréquence et de filtrage. Généralement, la force électromotrice (modulée) présente une valeur moyenne non nulle, soit du fait d'un référencement volontaire d'une des deux bornes de l'enroulement secondaire à un potentiel électrique défini (masse électrique par exemple), soit du fait d'un référencement par couplage capacitif de son potentiel moyen au potentiel de l'environnement (par exemple la masse mécanique) en cas de mesure haute impédance au niveau de l'enroulement secondaire. Cet exemple illustratif appliqué à la valeur moyenne de la force électromotrice, s'applique également à toute composante fréquentielle du signal électrique, quelle que soit son origine, qui se trouve en dehors d'une bande fréquentielle d'intérêt -Δf à +Δf autour de la fréquence de modulation, ou, autrement dit, qui se retrouve en dehors d'une bande fréquentielle d'intérêt -Δf à +Δf autour de la fréquence nulle à l'issue du procédé de transposition en fréquence.

### Premier aspect

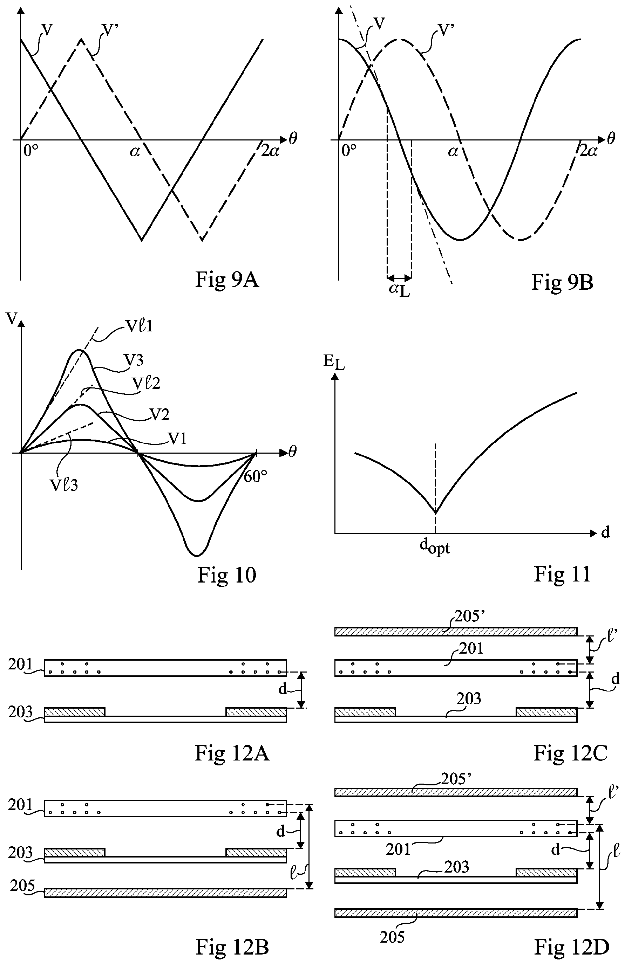

La figure 9A est un diagramme représentant l'évolution théorique attendue des signaux d'amplitude V et V' en fonction de la position angulaire θ, dans un capteur inductif du type décrit ci-dessus combinant les options de réalisation des figures 5 (deux secondaires décalés spatialement d'un quart de période électrique) et 7 (chaque secondaire comprend 2N spires de sens d'enroulement alternés). Comme cela apparaît sur la figure 9A, les amplitudes V et V' théoriques attendues sont des signaux périodiques triangulaires de période égale à la période électrique du capteur, variant linéairement entre les valeurs Vₘᵢₙ et Vₘₐₓ, avec un décalage angulaire d'un quart de période électrique l'un par rapport à l'autre. En effet, en théorie, comme cela est indiqué dans le brevet EP0182085 susmentionnée (colonne 12, lignes 22 à 57), l'amplitude de l'enveloppe de la tension mesurée aux bornes d'un enroulement secondaire d'un capteur inductif est proportionnelle à l'aire de la portion de surface des motifs conducteurs de la cible située en regard de cet enroulement secondaire. Or, dans les exemples de réalisation décrits ci-dessus, la portion de surface conductrice de la cible située en regard des motifs de circuits électriques ou spires de l'enroulement secondaire varie linéairement avec la position angulaire θ, pour les motifs 123ᵢ₊ comme pour les motifs 123ᵢ-de la figure 7. Les signaux V et V' devraient donc varier linéairement par portions en fonction de la position θ.

Les inventeurs ont toutefois constaté qu'en pratique, la variation des signaux V et V' en fonction de la position θ, présente généralement de larges zones non linéaires dans une période électrique du capteur. Plus précisément, en pratique, la variation des signaux V et V' en fonction de la position θ présente bien deux zones sensiblement linéaires d'étendue réduite dans une période électrique du capteur, ces zones étant approximativement centrées sur les passages à zéro des amplitudes V et V', mais, entre ces zones linéaires, s'intercalent des zones saturées et de fait moins linéaires, ces zones étant approximativement centrées sur des extrema des amplitudes V et V'.

La faible linéarité des amplitudes V et V' en fonction de la position θ présente des inconvénients. En particulier, à titre d'exemple non limitatif, disposer de plages de linéarité réduites ne permet pas de tirer intégralement profit des méthodes de traitement du signal décrites dans les brevets FR2914126 et FR2891362.

La figure 9B est un diagramme représentant l'évolution réelle, typiquement obtenue dans la pratique, des signaux V et V' en fonction de la position angulaire θ dans un capteur inductif du type décrit ci-dessus. Comme cela apparaît sur la figure 9B, les signaux V et V' ne varient linéairement que dans des portions d'étendue angulaire α_{L} réduite de la plage de mesure du capteur, appelées plages de linéarité. A titre d'exemple, chaque plage de linéarité α_{L} a une étendue comprise entre 20% et 90% de la demi-période électrique du capteur (égale à α° dans l'exemple représenté). La plage de linéarité α_{L} est par exemple définie comme étant la plage angulaire maximale, sensiblement centrée sur la valeur moyenne de l'amplitude V, pour laquelle il est possible de trouver une approximation linéaire V_{L} à l'amplitude V, telle que la différence E_{L} entre l'approximation linéaire V_{L} et l'amplitude V soit inférieure à un seuil E_{L0}, le seuil E_{L0} étant par exemple défini comme un pourcentage des extrema de l'amplitude V, par exemple dans une gamme de valeurs comprises entre 0,01% et 10% des extrema de l'amplitude V selon le degré de linéarité recherché pour le capteur. En d'autres termes, la plage de linéarité α_{L} est la plage angulaire maximale sur laquelle l'amplitude V évolue sensiblement linéairement avec la position de la cible par rapport au transducteur, à une approximation maximale près de valeur fixée E_{L0}. En pratique, on souhaite généralement faire le contraire, à savoir évaluer l'erreur de linéarité maximale E_{LM} sur une plage angulaire α_{L} donnée, par exemple mais non limitativement la plage angulaire sur laquelle on souhaite réaliser la mesure. Aussi, une autre manière d'apprécier la linéarité d'un capteur est d'évaluer l'erreur de linéarité E_{LM}, définie comme la différence maximale entre l'amplitude V et son approximation linéaire V_{L} pour une plage α_{L} donnée. De manière préférée mais non limitative, la plage de linéarité souhaitée pour un capteur à deux enroulements secondaires est d'au moins 50% d'une demi-période électrique, par exemple comprise entre 50% et 80% d'une demi-période électrique lorsque les déplacements à mesurer sont rapides et que l'observation de plusieurs échantillons de l'amplitude nécessite de fait d'aller au-delà de 50% d'une demi-période électrique. Dans un autre exemple préféré, la plage de linéarité souhaitée pour un capteur à trois enroulements secondaires est d'au moins 33% d'une demi-période électrique, par exemple comprise entre 33% et 50% d'une demi-période électrique lorsque les déplacements à mesurer sont rapides. Dans la suite, sauf mention contraire et sans que cela ne soit considéré comme un choix exclusif, on se limitera à présenter un capteur à deux enroulements secondaires, et pour des questions de lisibilité on se limitera à présenter l'erreur de linéarité sur une plage de linéarité souhaitée de 50% d'une demi-période électrique, sans faire mention explicite de ces conditions, et en se référant à l'erreur de linéarité définie dans ces conditions par la simple mention d'erreur de linéarité E_{L}.

Les inventeurs ont notamment constaté que, pour une distance cible-transducteur donnée (et pour une plage α_{L} donnée), l'erreur de linéarité E_{L} est généralement d'autant plus élevée que le nombre N de pôles du capteur est important.

Pourtant, cette limitation ne va pas dans le sens de l'utilisation industrielle d'un capteur inductif dans la mesure où une telle utilisation requiert généralement un nombre de pôles élevé, typiquement N=6, pour garantir une mesure robuste comme indiqué ci-dessus.

Il serait souhaitable de pouvoir disposer de capteurs inductifs de déplacement, et notamment de capteurs multipôles, présentant une erreur de linéarité plus faible (ou des plages de linéarité plus étendues) que les capteurs existants, afin notamment de faciliter l'exploitation des amplitudes fournies par le capteur. A titre d'exemple non limitatif, l'extension des plages de linéarité peut avantageusement permettre de tirer profit des méthodes de traitement du signal décrites dans les brevets FR2914126 et FR2891362.

Selon un premier aspect, on cherche, dans un capteur inductif de déplacement, et notamment (mais pas uniquement) un capteur multipôle, par exemple un capteur à deux paires de pôles ou plus et de préférence un capteur à six paires de pôles ou plus, à réduire l'erreur de linéarité E_{L} sur une plage angulaire α_{L} donnée, par exemple sur une plage α_{L} s'étendant sur la moitié d'une demi-période électrique du capteur pour un capteur à deux enroulements secondaires, ou sur une plage α_{L} s'étendant sur un tiers d'une demi-période période électrique pour un capteur à trois enroulements secondaires. On peut aussi considérer que l'on cherche à augmenter l'étendue de la plage de linéarité du capteur, c'est à dire l'étendue de la plage des positions, inclue dans la plage de mesure du capteur, dans laquelle l'amplitude de l'enveloppe de la force électromotrice aux bornes d'un enroulement secondaire du capteur varie approximativement linéairement en fonction de la position angulaire θ de la cible par rapport au transducteur.

Les études menées par les inventeurs ont montré que l'étendue de la plage de linéarité d'un capteur inductif dépend de la distance cible-transducteur d, parfois appelée entrefer, c'est-à-dire la distance entre le plan moyen du ou des enroulements secondaires du transducteur, et les motifs conducteurs de la cible. A titre d'exemple, la distance cible-transducteur d est définie comme étant la distance entre le plan moyen du ou des enroulements secondaires du transducteur et la surface des motifs conducteurs de la cible tournée vers le transducteur.

La figure 10 est un diagramme représentant, pour plusieurs distances cible-transducteur distinctes dans un capteur inductif du type décrit ci-dessus (par exemple du type décrit en relation avec la figure 7, avec N=6 paires de pôles), l'évolution de l'amplitude V de l'enveloppe de la force électromotrice mesurée aux bornes d'un enroulement secondaire du transducteur en fonction de la position angulaire θ de la cible. La courbe V1 représente l'évolution de l'amplitude V pour une distance cible-transducteur d1, la courbe V2 représente l'évolution de l'amplitude V pour une distance cible-transducteur d2 inférieure à d1, et la courbe V3 représente l'évolution de l'amplitude V pour une distance cible-transducteur d3 inférieure d2. La droite Vl1, en pointillés, représente l'approximation linéaire de l'amplitude V1, la droite Vl2, en pointillés, représente l'approximation linéaire de l'amplitude V2, et la droite Vl3, en pointillés, représente l'approximation linéaire de l'amplitude V3. Comme cela apparaît sur la figure 10, le signal V présente, à la distance d3, une amplitude maximale supérieure à l'amplitude maximale obtenue aux distances d2 et d1. En revanche, l'erreur de linéarité E_{L2} de l'amplitude V, à la distance d2, est inférieure aux erreurs de linéarité E_{L1} et E_{L3} de l'amplitude V aux distances d1 et d3 respectivement.

La figure 11 est un diagramme représentant l'évolution, en fonction de la distance cible-transducteur, de l'erreur de linéarité E_{L} de l'amplitude V de l'enveloppe de la force électromotrice mesurée aux bornes d'un enroulement secondaire du transducteur d'un capteur inductif de déplacement, par exemple un capteur du type décrit en relation avec la figure 7 (avec N=6 paires de pôles). Dans cet exemple, l'erreur de linéarité E_{L} correspond, dans une plage de positions angulaires θ donnée s'étendant par exemple sur la moitié de la période électrique du capteur (sur une portion monotone de la FEM), à la différence maximale (en valeur absolue) entre une approximation linéaire de la réponse du capteur et la réponse réelle mesurée. Comme cela apparaît sur la figure 11, il existe une distance cible-transducteur optimale dₒₚₜ pour laquelle l'erreur de linéarité E_{L} passe par un minimum. Plus généralement, les inventeurs ont constaté qu'un minimum d'erreur de linéarité est observable dans tous les types de capteur inductif de déplacement, quel que soit le nombre de paires de pôles notamment. Cette valeur minimale est atteinte pour une distance cible-transducteur optimale qui dépend de la configuration du capteur (et notamment du nombre de paires de pôles). Il est donc théoriquement possible d'obtenir une réponse linéaire quel que soit le capteur inductif. Par théoriquement, on entend que lorsque le nombre de paires de pôles N est particulièrement important, la distance dₒₚₜ devient extrêmement faible au point de ne plus être mesurable en pratique du fait de la précision limitée et des contraintes de mise en oeuvre des instruments de mesure adaptés.

Selon un premier mode de réalisation, on prévoit un capteur inductif de déplacement dans lequel la distance cible-transducteur d est comprise entre 0,8 et 1,5 fois la distance dₒₚₜ pour laquelle l'erreur de linéarité de l'amplitude mesurée par le capteur est minimale. On notera que cette distance optimale peut aisément être déterminée par des essais, par exemple par le tracé de courbes du type représenté en figure 11.

Les inventeurs ont toutefois constaté qu'en pratique, pour certains capteurs, et notamment des capteurs présentant un nombre N de paires de pôles important, typiquement supérieur ou égal à trois et encore plus particulièrement pour N supérieur ou égal à six, la distance cible-transducteur optimale en termes de linéarité peut être relativement faible, par exemple inférieure à 0,2 mm, ce qui peut poser problème pour certains types de mesure, notamment dans des environnements industriels dans lesquels de telles distances sont difficilement acceptables, notamment du fait des tolérances de fabrication, montage et utilisation.

Par ailleurs, les inventeurs ont constaté que la distance cible-transducteur optimale en termes de linéarité est fonction de plusieurs autres paramètres, dont des paramètres géométriques du capteur tel que le diamètre extérieur du transducteur et/ou de la cible. Plus particulièrement, les inventeurs ont constaté que lorsque le diamètre des capteurs augmente, la distance cible-transducteur optimale en termes de linéarité augmente et peut prendre une valeur relativement importante, par exemple supérieure à 1 mm, ce qui peut poser problème pour certains types de mesure, notamment dans des environnements industriels dans lesquels on souhaite garantir une certaine compacité.

Dans le cas où la distance cible-transducteur optimale en termes de linéarité est incompatible (trop importante ou trop faible) avec l'environnement de mesure, on peut prévoir de se placer à une distance cible-transducteur la plus proche possible de la distance optimale dans les limites des contraintes de l'environnement, et de corriger la non-linéarité par application d'un traitement mathématique (post-traitement) du signal de mesure. Les inventeurs ont toutefois constaté qu'en pratique cette solution présente des limitations en termes de précision et de robustesse, et ne donne pas satisfaction notamment pour la mise en oeuvre des méthodes de traitement du signal décrites dans les brevets FR2914126 et FR2891362.

Une première solution proposée par les inventeurs et illustrée par les figures 12A à 12D, 13A à 13C, 14 et 15, est d'ajouter au capteur une pièce supplémentaire de confinement de champ électromagnétique, placée à une distance particulière de l'enroulement primaire du transducteur, choisie de façon à augmenter significativement la distance cible-transducteur optimale en termes de linéarité.

Les figures 12A à 12D sont des vues en coupe illustrant de façon schématique quatre exemples de réalisation d'un capteur inductif de déplacement.

Dans l'exemple de la figure 12A, le capteur comprend un transducteur 201 et une cible 203, disposés à une distance cible-transducteur d (d étant dans cet exemple la distance entre le plan moyen du ou des enroulements secondaires du transducteur et le plan de la surface des motifs conducteurs de la cible tournée vers le transducteur), et ne comprend pas de pièce supplémentaire de confinement de champ.

Dans l'exemple de la figure 12B, le capteur comprend un transducteur 201 et une cible 203, disposés à une distance cible-transducteur d, et comprend en outre une pièce supplémentaire 205 de confinement champ en un matériau conducteur, par exemple réalisée dans le même matériau que les motifs conducteurs de la cible, ou dans tout autre matériau conducteur, magnétique ou non, tel que du fer, de l'acier, de l'aluminium, du cuivre, etc.. Dans cet exemple, la pièce 205 est disposée du côté de la cible 203 opposé au transducteur 201 (c'est à dire que la cible 203 est située entre le transducteur 201 et la pièce 205), la surface de la pièce 205 tournée vers la cible 203 étant de préférence approximativement parallèle au plan moyen du transducteur, et donc également approximativement parallèle au plan moyen de la cible (aux imprécisions de montage près). La pièce de confinement de champ 205 est de préférence périodique selon une direction parallèle au degré de liberté en déplacement du capteur, c'est à dire périodique par révolution (autour d'un axe qui est approximativement l'axe de symétrie de la cible) dans le cas d'un capteur de position angulaire, la période spatiale des motifs conducteurs de la pièce de confinement étant de préférence distincte de celle des motifs conducteurs de la cible. A titre d'exemple illustratif mais non limitatif, la pièce 205 est symétrique par révolution. La pièce 205 est disposée à une distance pièce-transducteur l, définie dans cet exemple comme étant la distance entre le plan moyen du ou des enroulements primaires du transducteur, et le plan de la surface du ou des motifs conducteurs de la pièce tournée vers le transducteur. La pièce 205 est de préférence solidaire de la cible, c'est-à-dire mobile par rapport au transducteur lorsque la position de la cible par rapport au transducteur évolue.

Dans l'exemple de la figure 12C, le capteur comprend un transducteur 201 et une cible 203, disposés à une distance cible-transducteur d, et comprend en outre une pièce supplémentaire 205' de confinement de champ, par exemple identique ou similaire à la pièce 205 de la figure 12B. La pièce 205' est de préférence périodique par révolution, et par exemple symétrique par révolution, autour d'un axe de symétrie qui est approximativement l'axe de symétrie de l'enroulement primaire du transducteur. Dans cet exemple, la pièce 205' est placée du côté du transducteur 201 opposé à la cible 203 (c'est à dire que le transducteur 201 est situé entre la cible 203 et la pièce 205'). La pièce 205' est disposée à une distance pièce-transducteur l'. A titre d'exemple, la distance l' est définie comme étant la distance entre le plan moyen du ou des enroulements primaires du transducteur, et le plan de la surface du ou des motifs conducteurs de la pièce tournée vers le transducteur. La pièce 205' est de préférence solidaire du transducteur, c'est-à-dire fixe par rapport au transducteur lorsque la position de la cible par rapport au transducteur évolue.

Dans l'exemple de la figure 12D, le capteur comprend un transducteur 201 et une cible 203 disposés à une distance cible-transducteur d, une première pièce de confinement de champ 205 (par exemple identique ou similaire à la pièce 205 de la figure 12B) disposée du côté du transducteur 201 opposé à la cible 203, à une distance l du transducteur, et une seconde pièce de confinement de champ 205' (par exemple identique ou similaire à la pièce 205' de la figure 12C), disposée du côté de la cible 203 opposé au transducteur 201, à une distance l' du transducteur (c'est à dire que le transducteur 201 et la cible 203 sont situés entre les pièces 205 et 205').

Les pièces 205 et/ou 205' peuvent être connectées électriquement ou non, ponctuellement ou de manière distribuée spatialement, à d'autres éléments du capteur. En particulier, la pièce 205 peut être connectée électriquement à un ou plusieurs motifs conducteurs de la cible, et la pièce 205' peut être connectée électriquement à un potentiel électrique disponible sur le transducteur, par exemple en un point d'un enroulement secondaire, en un point de l'enroulement primaire, ou à la masse électrique du transducteur.

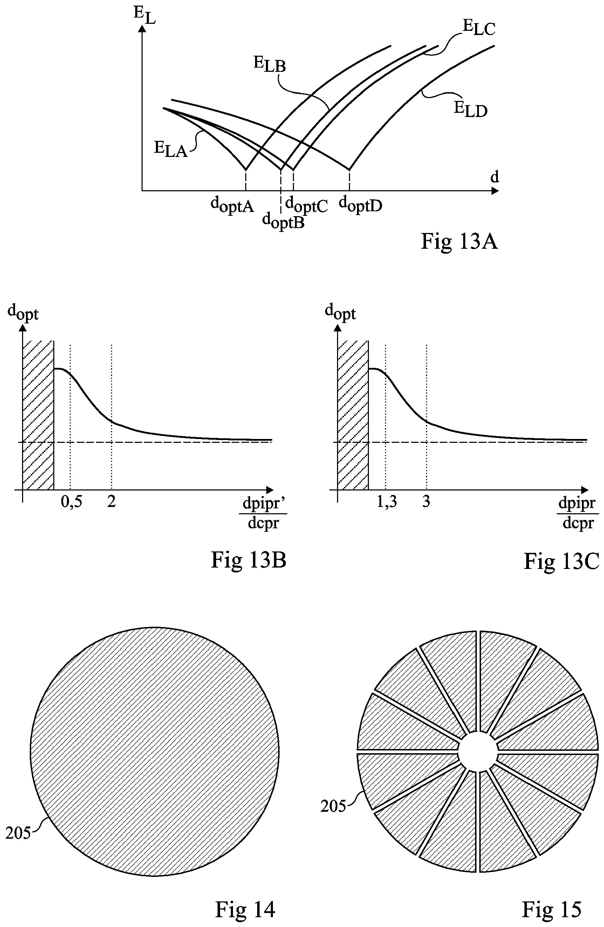

La figure 13A est un diagramme comportant quatre courbes E_{LA}, E_{LB}, E_{LC} et E_{LD} représentant respectivement, pour les quatre exemples de capteur des figures 12A à 12D, l'évolution de l'erreur de linéarité E_{L} du capteur en fonction de la distance cible-transducteur. Chacune des courbes E_{LA}, E_{LB}, E_{LC} et E_{LD} est du même type que la courbe de la figure 11, c'est à dire qu'elle passe par une valeur minimale d'erreur de linéarité pour une certaine distance cible-transducteur optimale, respectivement d_{optA}, d_{optB}, d_{optC} et d_{optD}. Comme cela apparaît sur la figure 13A, la distance d_{optA} est inférieure à la distance d_{optB} qui est elle-même inférieure à la distance d_{optC} qui est elle-même inférieure à la distance d_{optD}. Les essais réalisés par les inventeurs ont montré que l'ajout d'une ou plusieurs pièces supplémentaires de confinement de champ peut augmenter de plusieurs dixièmes de millimètres à plusieurs millimètres la distance cible-transducteur optimale en termes de linéarité d'un capteur inductif de déplacement.

Le positionnement selon l'axe Z de la ou des pièces supplémentaires de confinement de champ, et plus précisément la distance entre cette ou ces pièces et l'enroulement primaire du transducteur, a une influence sur l'efficacité de l'augmentation de la distance cible-transducteur optimale en termes de linéarité qui résulte de l'ajout de cette ou de ces pièces. Il existe donc une (des) distance (s) optimale (s) lₒₚₜ et/ou lₒₚₜ' entre l'enroulement primaire et la ou les pièces supplémentaires de confinement de champ, telle(s) que la distance cible-transducteur optimale dₒₚₜ soit augmentée pour atteindre une valeur comprise entre 0,65 et 1,25 fois la distance d à laquelle on souhaite voir fonctionner le capteur, cette valeur souhaitée pouvant par exemple mais non limitativement être comprise entre 0,5 et 1,5 mm, qui est une plage de valeurs compatibles avec diverses applications industrielles.

La figure 13B est un diagramme représentant l'évolution, pour un capteur inductif de déplacement angulaire du type décrit ci-dessus, de la distance cible-transducteur dₒₚₜ optimale en termes de linéarité, en fonction du rapport de la distance pièce-primaire dₚᵢₚᵣ' sur la distance cible-primaire d_{cpr}, dans le cas de l'ajout de la pièce supplémentaire 205' de confinement de champ comme cela est représenté sur la figure 12C ou 12D. Comme cela apparaît sur la figure 13B, la distance cible-transducteur optimale en termes de linéarité est d'autant plus importante que le rapport d_{pipr'}/d_{cpr} est faible.

La figure 13C est un diagramme représentant l'évolution, pour un capteur inductif de déplacement angulaire du type décrit ci-dessus, de la distance cible-transducteur dₒₚₜ optimale en termes de linéarité, en fonction du rapport de la distance pièce-primaire dₚᵢₚᵣ sur la distance cible-primaire d_{cpr}, dans le cas de l'ajout de la pièce supplémentaire 205 de confinement de champ comme cela est représenté sur la figure 12B ou 12D. Comme cela apparaît sur la figure 13C, la distance cible-transducteur optimale en termes de linéarité est d'autant plus importante que le rapport d_{pipr'}/d_{cpr} est faible.

En d'autres termes, si l'on considère le transducteur comme un ensemble dont on ne distingue pas les couches constitutives, on peut dire que la distance cible-transducteur optimale dₒₚₜ est d'autant plus importante que le rapport l/d (respectivement l'/d) est faible.

Dans ces conditions, un exemple illustratif mais non limitatif de positionnement des pièces supplémentaires de confinement de champ de la figure 12D, est de placer :
- la pièce supérieure 205' à une distance de l'enroulement primaire approximativement comprise entre 0,5 et 2 fois la distance qui sépare l'enroulement primaire et la surface des motifs conducteurs de la cible ;
- la pièce inférieure 205 à une distance de l'enroulement primaire approximativement comprise entre 1,3 et 3 fois la distance qui sépare l'enroulement primaire de la surface des motifs conducteurs de la cible.

Ainsi, pour une configuration de capteur donnée, le rapport dₚᵢₚᵣ/d_{cpr} et/ou le rapport d_{pipr'}/d_{cpr} peuvent être choisis tels que la distance dₒₚₜ soit compatible avec les contraintes de l'application, par exemple soit supérieure ou égale à 0,3 mm, par exemple comprise entre 0,3 et 10 mm, et de préférence comprise entre 0,5 et 1,5 mm, notamment pour un capteur comportant un nombre N de paires de pôles important, par exemple N≥4 et de préférence N≥6.

On notera que le choix susmentionné de distance entre la pièce de confinement de champ et le transducteur n'est généralement pas optimal en termes de niveau de signal fourni par le ou les enroulements secondaires du transducteur. En effet, à cette distance, la pièce conductrice 205/205' provoque une diminution non négligeable du niveau des signaux V et V' fournis par le transducteur. On notera en particulier que dans l'état de l'art de la mesure inductive de déplacement angulaire, il est convenu d'éloigner au maximum les pièces conductrices susceptibles de modifier la distribution spatiale du champ électromagnétique qui s'établit en présence des seuls éléments primaire, secondaire et cible. Ce critère de dimensionnement s'applique en particulier dans le cas d'écrans électrostatiques (ou écrans de blindage), qui, lorsqu'ils sont prévus, sont disposés à des distances selon l'axe Z très supérieures aux distances prévues dans les modes de réalisation décrits, de manière à ne pas trop atténuer le niveau de signal utile mesuré au niveau du secondaire.

Toutefois, les modes de réalisation proposés définissent un compromis qui peut être judicieux dans des applications pour lesquelles la linéarité est importante, et notamment dans les applications dans lesquelles on souhaite mettre en oeuvre des méthodes de traitement du signal du type décrit dans les brevets FR2914126 et FR2891362 susmentionnés.

Les figures 14 et 15 sont des vues de face représentant des exemples de pièces de confinement de champ 205 susceptibles d'être utilisées dans un capteur inductif de déplacement du type décrit ci-dessus (les pièces 205' des capteurs susmentionnés peuvent avoir des configurations similaires ou identiques). Dans l'exemple de la figure 14, la pièce 205 est un simple disque en un matériau conducteur (par exemple du métal) de diamètre par exemple supérieur ou égal au diamètre extérieur de la cible. A titre de variante (non représentée), le disque peut être percé en son centre, par exemple d'un trou inférieur ou égal au diamètre intérieur des motifs conducteurs de la cible. Dans l'exemple de la figure 15, la pièce 205 est un disque de même diamètre mais présentant des stries ou fentes radiales cohérentes avec les motifs de la cible, permettant d'obtenir un effet constructif de type Moiré avec la cible apte à amplifier l'influence de la pièce 205 sur la distribution du champ au niveau d'un enroulement secondaire du transducteur. Les modes de réalisation décrits ne se limitent toutefois pas à ces deux exemples particuliers.

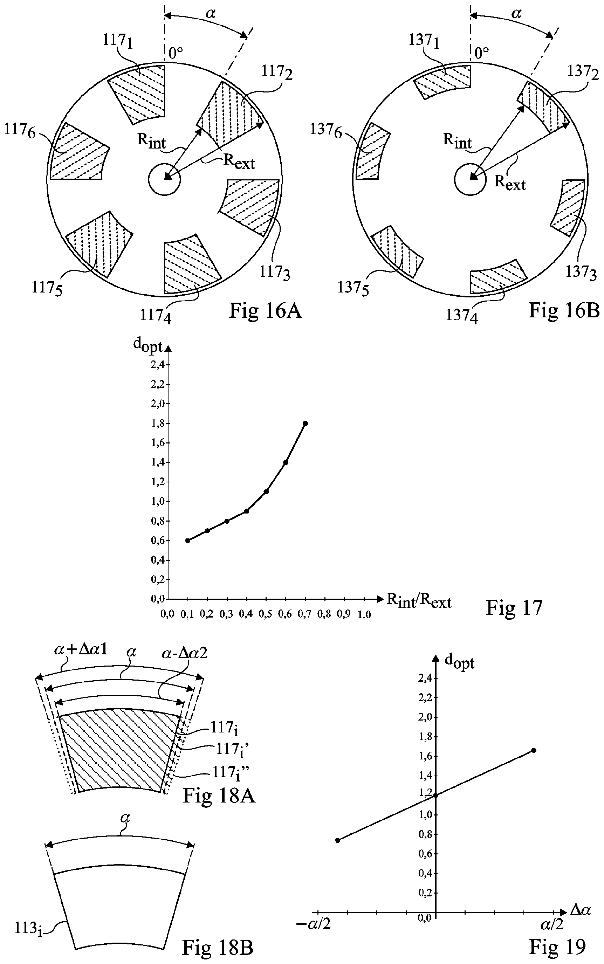

Une deuxième solution pour modifier la distance cible-transducteur optimale en termes de linéarité, utilisable en complément ou en alternative à l'ajout d'une pièce conductrice de confinement de champ, est illustrée par les figures 16A, 16B et 17.

Les figures 16A et 16B illustrent deux exemples de réalisation d'un capteur inductif de position angulaire. Sur les figures 16A et 16B, seule la cible du capteur a été représentée. L'agencement du transducteur, et notamment de son enroulement primaire et de son ou ses enroulements secondaires, est en correspondance avec l'agencement de la cible, et peut aisément être déduit de la forme de la cible à la lecture de ce qui précède. Dans cet exemple, la cible du capteur de la figure 16A est similaire ou identique à la cible de la figure 3B. La cible du capteur de la figure 16B comprend aussi N motifs conducteurs 137ᵢ en forme de secteur de bande annulaire d'ouverture angulaire α approximativement égale une demi période électrique (par exemple 360°/2N), les N motifs 137ᵢ étant régulièrement répartis le long d'une bande annulaire décrite par la cible. La cible de la figure 16B diffère de la cible de la figure 16A par le fait que les motifs conducteurs 137ᵢ ont des dimensions radiales différentes (inférieures dans l'exemple représenté) des dimensions radiales des motifs conducteurs 117ᵢ de la cible de la figure 16A. Plus particulièrement, dans cet exemple, la bande annulaire déterminant la forme des motifs conducteurs 137ᵢ a un rayon externe Rₑₓₜ sensiblement identique à celui de la bande annulaire déterminant la forme des motifs 117ᵢ, mais a un rayon interne Rᵢₙₜ inférieur à celui de la bande annulaire des motifs conducteurs 117ᵢ.

Les inventeurs ont constaté, comme cela est illustré par la figure 17, que, pour un nombre de paires de pôles donné, la distance cible-transducteur dₒₚₜ optimale en termes de linéarité de la réponse du capteur, varie en fonction du rapport Rᵢₙₜ/Rₑₓₜ entre le rayon interne et le rayon externe de la bande annulaire dans laquelle sont situés les motifs conducteurs de la cible, et par voie de conséquence dans laquelle sont situées les spires du ou des enroulements secondaires du capteur. On notera que la mise en oeuvre de la figure 16B, qui consiste à faire évoluer le rapport Rᵢₙₜ/Rₑₓₜ en modifiant le rayon interne Rint des motifs conducteurs de la cible, n'est nullement exclusive d'autres mises en œuvre permettant de faire évoluer le rapport Rᵢₙₜ/Rₑₓₜ en modifiant soit le rayon externe Rₑₓₜ, soit les deux rayons de manière combinée.

La figure 17 est un diagramme représentant l'évolution, pour un capteur inductif de déplacement angulaire du type décrit ci-dessus, de la distance cible-transducteur dₒₚₜ optimale en termes de linéarité, en fonction du rapport Rᵢₙₜ/Rₑₓₜ. Comme cela apparaît sur la figure 17, la distance cible-transducteur optimale en termes de linéarité est d'autant plus importante que le rapport Rᵢₙₜ/Rₑₓₜ est important. Ainsi, pour une configuration de capteur donnée, le rapport Rᵢₙₜ/Rₑₓₜ peut être choisi tel que la distance dₒₚₜ soit compatible avec les contraintes de l'application, par exemple soit supérieure ou égale à 0,3 mm, par exemple comprise entre 0,3 et 10 mm, et de préférence comprise entre 0,5 et 1,5 mm, notamment pour un capteur comportant un nombre N de paires de pôles important, par exemple N≥4 et de préférence N≥6.

Sur le plan électromagnétique, il apparaît que les modifications apportées aux rayons internes et/ou externes de la cible ont pour effet de modifier le rapport de forme des motifs conducteurs, et en particulier de modifier la contribution des arrêtes radiales par rapport à la contribution des arrêtes orthoradiales, ce rapport des contributions étant un facteur déterminant de la distance cible-transducteur optimale en termes de linéarité dₒₚₜ. Lorsque le rapport Rᵢₙₜ/Rₑₓₜ entre le rayon interne et le rayon externe de la cible augmente, la portion de bande annulaire qui constitue un motif conducteur s'écrase selon la direction radiale, entrainant une réduction de la contribution des arrêtes radiales à la distribution de champ globale mesurée par le secondaire, se traduisant au niveau du signal en sortie de secondaire par une augmentation de la distance cible-transducteur optimale en termes de linéarité. La solution décrite consiste donc à modifier la distribution spatiale du champ électromagnétique, et plus particulièrement le rapport des contributions radiales par rapport aux contributions orthoradiales, afin d'ajuster la distance cible-transducteur optimale en termes de linéarité dₒₚₜ pour qu'elle soit compatible avec les contraintes de l'application.

Dans le capteur de la figure 16B, lorsque le rayon interne Rᵢₙₜ et/ou le rayon externe Rₑₓₜ de la cible de la figure 16B évoluent, les rayons interne et externe du transducteur associé évoluent de préférence sensiblement dans les mêmes proportions, afin de maximiser le niveau de signal reçu par le secondaire. Par maximisation du niveau de signal en sortie de secondaire, on entend plus précisément la maximisation de la pente à l'origine du signal plutôt que la maximisation des valeurs prises par les extrema du signal pour certaines positions.

Pour un jeu de rayons interne Rᵢₙₜ et externe Rₑₓₜ de cible donné, le signal reçu par le secondaire du transducteur associé est maximum lorsque la bande annulaire délimitant les motifs de la cible et la bande annulaire délimitant les motifs du secondaire se superposent sensiblement, ou présenté autrement, lorsque les arrêtes orthoradiales externe et respectivement interne de la cible et les branches orthoradiales externe et respectivement interne du secondaire se superposent.

On notera que pour un encombrement de capteur donné (et notamment pour une limite haute de rayon externe et une limite basse de rayon interne), augmenter le rapport Rᵢₙₜ/Rₑₓₜ revient à diminuer la surface des motifs conducteurs de la cible, ce qui entraine une diminution de l'amplitude des variations du niveau des signaux de sortie du capteur en fonction de la position de la cible par rapport au transducteur. Ainsi, dans l'état de l'art de la mesure inductive de déplacement angulaire, le diamètre interne et le diamètre externe de la bande annulaire dans laquelle sont situés les motifs conducteurs de la cible, et par voie de conséquence dans laquelle sont situées les spires du ou des enroulements secondaires du capteur, sont dimensionnés pour occuper le maximum de surface disponible dans l'encombrement donné, l'encombrement étant généralement contraint par l'ouverture intérieure et le diamètre extérieur du support et/ou du boitier dans lequel le capteur est intégré, ou encore par le diamètre extérieur de l'arbre autour duquel le capteur s'installe et par le diamètre intérieur des pièces d'interfaces entre lesquelles le capteur est logé.

Néanmoins, la solution proposée consistant à modifier le rapport Rᵢₙₜ/Rₑₓₜ définit un compromis qui peut être judicieux dans des applications pour lesquelles la linéarité est importante.

Une troisième solution pour modifier la distance cible-transducteur optimale en termes de linéarité, utilisable en complément ou en alternative à l'ajout d'une pièce supplémentaire de confinement de champ, et/ou à la modification du rapport Rᵢₙₜ/Rₑₓₜ, est illustrée par les figures 18A, 18B et 19.

Cette troisième solution est dans la même logique que la solution qui vient d'être décrite, dans le sens où elle consiste à modifier le facteur de forme des motifs conducteurs de la cible et/ou des spires d'enroulement secondaire correspondantes, et notamment à modifier le rapport entre la dimension radiale et la dimension ortho-radiale des motifs de la cible et/ou des spires d'enroulement secondaire, afin d'adapter la distance cible-transducteur optimale en termes de linéarité aux contraintes de l'application.

La figure 18A illustre trois exemples de réalisation d'un capteur de position angulaire du type décrit ci-dessus. Sur la figure 18A, seul un motif conducteur de la cible, désigné respectivement par les références 117ᵢ pour le premier exemple (en trait plein), 117ᵢ' pour le deuxième exemple (en trait interrompu), et 117ᵢ" pour le troisième exemple (en pointillés), a été représenté. Dans chaque exemple, la cible est obtenue en répétant régulièrement le motif conducteur représenté le long d'une bande annulaire circulaire. Les rayons interne et externe des motifs 117ᵢ, 117ᵢ', et 117ᵢ" sont sensiblement identiques, mais les motifs 117ᵢ, 117ᵢ', et 117ᵢ" diffèrent les uns des autres par leurs dimensions angulaires. Plus particulièrement, dans cet exemple, l'ouverture angulaire du motif 117ᵢ' est approximativement égale à une demi période électrique (par exemple 360°/2N), comme décrit précédemment, l'ouverture angulaire du motif 117ᵢ" est supérieure à une demi période électrique d'une valeur Δα1, par exemple comprise entre 0% et 50% d'une demi période électrique, et l'ouverture angulaire du motif 117ᵢ est inférieure à 360°/2N d'une valeur Δα2, par exemple comprise entre 0% et 50% d'une demi période électrique.

Comme pour la mise en œuvre de la solution des figures 16A, 16B et 17, l'agencement du secondaire du transducteur est préférentiellement en correspondance avec l'agencement des motifs conducteurs de la cible, c'est-à-dire que l'ouverture angulaire des motifs de secondaire adaptés aux motifs 117ᵢ' de la cible est sensiblement égale à une demi-période électrique (par exemple 360°/2N), que l'ouverture angulaire des motifs de secondaire adaptés aux motifs 117ᵢ de la cible est supérieure à 360°/2N d'une valeur sensiblement égale à Δα1, et que l'ouverture angulaire des motifs de secondaire adaptés à la cible 117ᵢ est inférieure à 360°/2N d'une valeur sensiblement égale à Δα2. En pratique, lorsque l'ouverture angulaire des motifs de secondaire prend une valeur supérieure à une demi-période électrique de capteur, on peut prévoir afin d'assurer une isolation électrique entre les pistes de spires adjacentes, de modifier la forme des pistes dans au moins un plan de métallisation, et/ou d'augmenter le nombre de plans de métallisation. Une autre option de réalisation peut consister à limiter l'ouverture angulaire maximale des motifs des secondaires à sensiblement une demi-période électrique, et à faire évoluer uniquement l'ouverture angulaire des motifs de la cible (des valeurs Δα1 ou Δα2). Dans ce cas, l'ouverture angulaire des motifs de l'enroulement secondaire du transducteur n'est pas strictement en correspondance avec l'ouverture angulaire des motifs de la cible.

Les inventeurs ont constaté que la distance cible-transducteur dₒₚₜ optimale en termes de linéarité de la réponse du capteur, varie en fonction de l'écart angulaire Δα entre l'ouverture angulaire choisie pour les motifs de la cible et du secondaire, et l'ouverture angulaire nominale α égale à une demi période électrique du capteur.

La figure 19 est un diagramme représentant l'évolution, pour un capteur de déplacement angulaire multipôle donné du type décrit ci-dessus et illustré sur les figures 18A et 18B, de la distance cible-transducteur dₒₚₜ optimale en termes de linéarité, en fonction de la valeur Δα. Comme cela apparaît sur la figure 19, la distance cible-transducteur optimale en termes de linéarité est d'autant plus faible que la valeur Δα est importante par valeurs négatives, et inversement est d'autant plus importante que la valeur Δα est importante par valeurs positives. Ainsi, pour une configuration de capteur donnée, l'ouverture angulaire des motifs conducteurs de la cible peut être modifiée d'une valeur Δα par rapport à la valeur nominale α (égale à une demi période électrique, par exemple à 360°/2N), la valeur Δα étant choisie telle que la distance dₒₚₜ soit compatible avec les contraintes de l'application, par exemple soit supérieure ou égale à 0,3 mm, par exemple comprise entre 0,3 et 10 mm, et de préférence comprise entre 0,5 et 1,5 mm, notamment pour un capteur comportant un nombre N de paires de pôles important, par exemple N≥4 et de préférence N≥6.

Des solutions ont été décrites ci-dessus pour diminuer l'erreur de linéarité (ou augmenter l'étendue de la plage de linéarité) de la réponse d'un capteur inductif de déplacement, ainsi que pour modifier, c'est-à-dire augmenter ou diminuer selon la situation initiale, la distance cible-transducteur pour laquelle un capteur inductif de déplacement présente ou s'approche des caractéristiques optimales en termes de linéarité.

On notera que si l'erreur de linéarité reste malgré tout trop importante (ou si l'étendue de la plage de linéarité obtenue reste insuffisante), on pourra ajouter un ou plusieurs enroulements secondaires supplémentaires, décalés spatialement (d'un décalage angulaire sensiblement égal entre eux), de façon à réduire l'étendue de la zone de linéarité minimale nécessaire à une bonne reconstruction des informations de positionnement et/ou de déplacement de la cible, en combinaison avec l'application des solutions décrites ci-dessus. A titre d'exemple illustratif, dans le capteur de la figure 5, au lieu de prévoir deux enroulements secondaires identiques décalés spatialement d'un quart de période électrique, on peut prévoir trois enroulements secondaires identiques décalés spatialement d'un sixième de la période électrique du capteur.

De plus, on notera que les solutions décrites ci-dessus peuvent être adaptées à des capteurs inductifs de déplacement linéaire, par exemple en "déroulant" les motifs en bande circulaire décrits ci-dessus pour les transformer en des motifs en bande rectiligne.

En outre, on notera que les solutions décrites ci-dessus peuvent être adaptées à des capteurs inductifs de déplacement angulaire dont le transducteur présente une ouverture angulaire inférieure à 360°, par exemple inférieure à 180° afin de permettre un montage "par le côté" du transducteur autour d'un arbre rotatif, plutôt qu'un montage "traversant". Dans ce cas, l'ouverture angulaire de la cible peut avoir une valeur de 360°, indépendante de l'ouverture angulaire du transducteur, ou prendre une valeur inférieure à 360°, correspondant par exemple à la plage de déplacement angulaire de l'application.

### Deuxième aspect

Les inventeurs ont par ailleurs constaté qu'en pratique, indépendamment de la problématique de la linéarité, les capteurs inductifs de déplacement existants, et notamment les capteurs multipôles, sont sensibles à diverses perturbations par effet de couplage. De telles perturbation se produisent par exemple d'une part au niveau de la zone de transduction, c'est-à-dire directement au niveau du secondaire du transducteur, et d'autre part au niveau de la zone de raccordement électrique entre le secondaire du transducteur et un bloc fonctionnel de conditionnement des moyens électroniques. Parmi ces perturbations, on trouve notamment le couplage de perturbations électromagnétiques provenant de l'extérieur du capteur (c'est-à-dire non générées par l'enroulement primaire), le couplage inductif direct de l'enroulement primaire avec l'enroulement secondaire (c'est-à-dire la proportion de couplage inductif qui reste constante quelle que soit la position de la cible), et/ou le couplage capacitif entre l'enroulement primaire et l'enroulement secondaire. Ces perturbations peuvent entrainer des fluctuations indésirables du ou des signaux de sortie du capteur et des erreurs d'interprétation des signaux de sortie du capteur.

Il serait souhaitable de pouvoir disposer de capteurs inductifs de déplacement, et notamment de capteurs multipôles, moins sensibles aux perturbations parasites et/ou moins sujets aux couplages parasites que les capteurs existants.

Ainsi, selon un deuxième aspect, on cherche à diminuer la sensibilité aux perturbations et effets de couplage parasites des capteurs inductifs de déplacement multipôles, et plus particulièrement des capteurs du type décrit en relation avec la figure 7, c'est-à-dire dans lesquels le ou les enroulements secondaires comprennent chacun 2N spires de sens d'enroulement alternés, N étant le nombre de paires de pôles du capteur. Pour cela, les inventeurs proposent un agencement particulier du ou des enroulements secondaires du capteur, qui va être décrit ci-après.

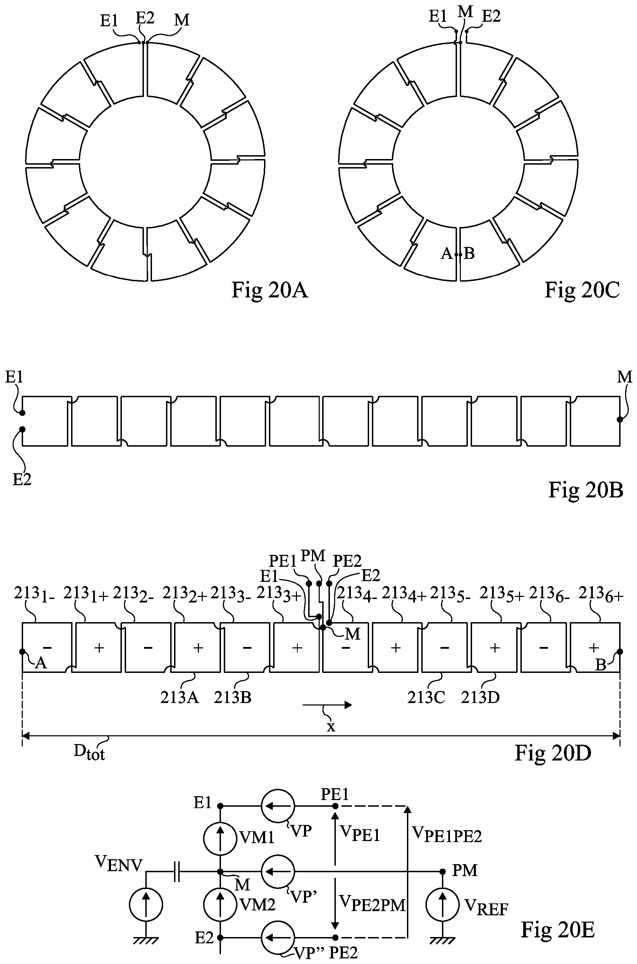

Les figures 20A et 20C illustrent de façon schématique deux exemples de réalisation d'un capteur inductif de déplacement angulaire, d'ouverture angulaire 360°, constitué de N=6 paires de pôles, et réalisant une mesure spatialement différentielle (par exemple tel que décrit en relation avec la figure 7). Sur les figures 20A et 20C, seul un secondaire 213 de chaque capteur a été représenté, la réalisation de l'enroulement primaire, de la cible, et, optionnellement, d'un ou plusieurs enroulements secondaires supplémentaires décalés spatialement par rapport à l'enroulement 213, étant à la portée de l'homme du métier à partir des explications de la présente description. Dans cet exemple, le secondaire du capteur de la figure 20A et le secondaire du capteur de la figure 20C sont similaires ou identiques au secondaire de la figure 7, à la différence près que les connexions électriques entre les spires sont présentées. Le secondaire de la figure 20A présente une première méthode de connexion des spires entre elles, selon laquelle on parcourt une première fois l'intégralité de l'ouverture angulaire de la bande annulaire sur laquelle s'étend le secondaire, par exemple dans le sens trigonométrique sur la figure, puis on parcourt une seconde fois l'intégralité de la bande annulaire, cette fois ci dans le sens horaire, afin de rapprocher l'extrémité électrique E2 de fin vers l'extrémité électrique E1 de départ, et ainsi fermer le circuit de mesure. Le secondaire de la figure 20C présente une seconde méthode de connexion des spires entre elles, selon laquelle on parcourt d'abord une première moitié de de l'ouverture angulaire de la bande annulaire sur laquelle s'étend le secondaire, par exemple dans le sens trigonométrique sur la figure, puis on parcourt le chemin retour dans le sens horaire pour se rapprocher de l'extrémité d'entrée E1, puis on parcourt l'autre moitié de l'ouverture angulaire de la bande annulaire sur laquelle s'étend le secondaire en conservant le sens de rotation horaire, puis on parcourt le chemin retour dans le sens trigonométrique afin de rapprocher l'extrémité électrique E2 de fin vers l'extrémité électrique E1 de départ, et ainsi fermer le circuit de mesure comme pour le secondaire de la figure 20A.

Les figures 20B et 20D sont des vues de face représentant de façon schématique un exemple de réalisation d'un transducteur d'un capteur inductif de déplacement linéaire. Les capteurs des figures 20B et 20D sont des capteurs dans lesquels une cible (non représentée) comportant N motifs conducteurs est adaptée à se déplacer en translation selon une direction rectiligne x par rapport au transducteur. Le capteur de la figure 20B est par exemple du même type que le capteur de la figure 20A, adapté dans une configuration linéaire, ce qui revient essentiellement à "dérouler" les bandes annulaires circulaires du capteur de la figure 20A et à remplacer les motifs conducteurs et spires en forme de secteur de bande annulaire, par des motifs conducteurs et spires de forme générale rectangulaire ou carrée. Le capteur de la figure 20D est par exemple du même type que le capteur de la figure 20C, adapté dans une configuration linéaire. Sur les figures 20B et 20D, seul un enroulement secondaire 213 de chaque capteur a été représenté, la réalisation de la cible, de l'enroulement primaire, et, optionnellement, d'un ou plusieurs enroulements secondaires supplémentaires décalés spatialement par rapport à l'enroulement 213 étant à la portée de l'homme du métier à partir des explications de la présente description. A titre d'exemple et à la différence de l'enroulement primaire des capteurs angulaires des figures 20A et 20C, un exemple d'enroulement primaire obtenu lorsque l'on "déroule" le jeu de deux spires concentriques 101a et 101b par exemple décrit pour le capteur de la figure 1A, est par exemple constitué d'une seule spire pour un capteur linéaire tel que décrits sur les figures 20B et 20D, éventuellement constituée de plusieurs tours. La spire de l'enroulement primaire est par exemple de forme générale rectangulaire, de dimension selon y proche de la dimension selon y des motifs conducteurs de la cible et/ou des spires du secondaire comme cela a été décrit plus tôt, et de dimension selon x supérieure à la dimension selon x des motifs conducteurs de la cible et/ou des spires du secondaire, afin que la contribution à la distribution de champ électromagnétique globale, créée au niveau des branches de primaire orientées selon y et qui se situent aux deux extrémités selon x du primaire, soit relativement atténuées au voisinage des branches de secondaire orientées selon y et qui se situent aux deux extrémités selon x du secondaire. En particulier, pour un transducteur à un seul enroulement secondaire, l'étendue selon x du primaire sera supérieure à l'étendue selon x du secondaire, et de manière préférée mais non exclusive, supérieure d'au moins une demi-période électrique du capteur, répartie à part égale (au moins un quart de période électrique) à chaque extrémité du capteur. De manière générale, un exemple privilégié de réalisation de l'enroulement primaire d'un capteur inductif de déplacement linéaire est une spire de forme générale rectangulaire et d'étendue supérieure à l'étendue globale de l'ensemble des secondaires, par exemple mais non exclusivement, supérieure d'au moins une demi-période électrique du capteur, répartie à part égale (au moins un quart de période électrique) à chaque extrémité du capteur.

Dans les exemples des figures 20B et 20D, les capteurs comprennent N=6 paires de pôles. Les modes de réalisation décrits ne se limitent toutefois pas à ce cas particulier.

Dans l'exemple du capteur de la figure 20D, l'enroulement secondaire 213 s'étend dans une zone présentant une dimension Dₜₒₜ parallèlement au degré de liberté du capteur, c'est-à-dire parallèlement à la direction x de déplacement de la cible par rapport au transducteur. L'enroulement 213 comprend 2N boucles ou spires de sens d'enroulement alternés connectées électriquement en série entre ses extrémités E1 et E2. Plus particulièrement, l'enroulement 213 comprend N boucles ou spires 213ᵢ₊ ayant un même premier sens d'enroulement, et N boucles ou spires 213ᵢ₋ ayant un même deuxième sens d'enroulement opposé au premier sens, chaque spire 213ᵢ₊ ou 213ᵢ₋ ayant une dimension selon la direction x approximativement égale à une demi-période électrique du capteur (c'est-à-dire par exemple approximativement égale à Dₜₒₜ/2N), et les spires 213ᵢ₋ et 213ᵢ₊ étant juxtaposées deux à deux de façon alternée le long de la zone de dimension Dₜₒₜ de l'enroulement secondaire.

Selon un deuxième mode de réalisation, l'enroulement secondaire est constitué par :
un premier tronçon conducteur 213A en serpentin formant N demi-spires de sens alternés, s'étendant entre une première extrémité E1 de l'enroulement, située approximativement au niveau du milieu de la distance Dₜₒₜ le long de laquelle s'étend l'enroulement 213 parallèlement à la direction x, et un premier point intermédiaire A de l'enroulement, situé au niveau d'une première extrémité de la distance Dₜₒₜ ;
un deuxième tronçon conducteur 213B en serpentin formant N demi-spires de sens alternés, complémentaires des N demi-spires du tronçon 213A, s'étendant entre le point A et un deuxième point intermédiaire M de l'enroulement, situé approximativement au niveau du milieu de la distance Dₜₒₜ ;
un troisième tronçon conducteur 213C en serpentin formant N demi-spires de sens alternés, s'étendant entre le point M et un troisième point intermédiaire B de l'enroulement, situé au niveau de la deuxième extrémité de la distance Dₜₒₜ ; et
un quatrième tronçon conducteur 213D en serpentin formant N demi-spires de sens alternés, complémentaires des N demi-spires du tronçon 213C, s'étendant entre le point B et une deuxième extrémité E2 de l'enroulement, située approximativement au niveau du milieu de la distance Dₜₒₜ, à proximité de la première extrémité E1 de l'enroulement.

Plus particulièrement, dans l'exemple représenté, dans la partie gauche de l'enroulement (dans l'orientation de la figure), le tronçon 213A comprend N demi-spires en forme de U dont les branches verticales sont orientées dans des sens opposés selon une direction y approximativement normale à la direction x, et le tronçon 213B comprend N demi-spires en forme de U dont les branches verticales sont orientées alternativement dans des sens opposés selon la direction y. Chaque demi-spire en U du tronçon 213A a ses branches verticales approximativement alignées avec les branches verticales d'une demi-spire en U d'orientation opposée du tronçon 213B. Les tronçons 213C et 213D sont disposés selon un agencement similaire dans la partie droite de l'enroulement. Ainsi, dans cet exemple, les portions de l'enroulement 213 orthogonales à la direction de déplacement x sont parcourues deux fois et deux fois seulement par le fil ou la piste de l'enroulement (exception faite des deux portions orthogonales extrêmes de l'enroulement situées aux deux extrémités de la distance Dₜₒₜ, qui, dans cet exemple, sont parcourues une seule fois - cette exception ne se produit en revanche pas dans le cas d'un capteur angulaire d'ouverture angulaire de 360°, dans lequel toutes les portions radiales de l'enroulement peuvent être parcourues deux fois et deux fois seulement par le fil ou la piste de l'enroulement), et les portions de l'enroulement 213 parallèles à la direction de déplacement x sont parcourues une fois et une fois seulement par le fil ou la piste de l'enroulement.

En termes de chemin parcouru par le circuit électrique constitutif des motifs de l'enroulement secondaire, la mise en oeuvre de la solution de la figure 20D est conforme à la mise en oeuvre d'une solution du type décrit en relation avec la figure 20B, et par transposition linéaire-angulaire est également conforme à la mise en oeuvre des solutions des figures 20A et 20C. Par contre, la séquence selon laquelle est parcouru ce chemin diffère entre le transducteur de la figure 20D (et par transposition le transducteur de la figure 20C), et le transducteur de la figure 20B (et par transposition le transducteur de la figure 20A). En particulier, l'agencement décrit en relation avec les figures 20D et 20A est conçu de manière à faire apparaître un point de connexion intermédiaire M compris entre les extrémités E1 et E2.

L'enroulement 213 peut être muni, en plus de bornes PE1 et PE2 de connexion à ses extrémités E1 et E2, d'une troisième borne d'accès PM connectée au point milieu M de l'enroulement.

Dans le cas de capteurs multipôles comportant un nombre N de paires de pôles pair, et tel que cela est représenté sur la figure 20D, l'enroulement secondaire dispose d'autant de spires 213ᵢ₊ (dites positives) à droite que de spires 213ᵢ₊ à gauche (N/2 de chaque côté), et par voie de conséquence l'enroulement secondaire dispose d'autant de spires 213ᵢ₋ (dites négatives) à droite que de spires 213ᵢ₋ à gauche (N/2 de chaque côté).

Un avantage de l'agencement d'enroulement secondaire de la figure 20D lorsque le nombre de paires de pôles prend une valeur paire, réside dans le fait que l'induction est sensiblement identique, au signe près, quelle que soit la position de la cible par rapport au transducteur, sur les deux portions E1-M et E2-M de part et d'autre du point milieu, tout en permettant aux trois connexions E1, E2 et M de se trouver voisines les unes des autres.

Cette mise en oeuvre privilégiée dans laquelle le nombre de paires de pôles prend des valeurs paires n'est nullement exclusive d'autres modes de réalisation. A titre de variante, si le nombre N de paires de pôles est élevé, le choix d'un nombre N impair est tout à fait acceptable dans la mesure où l'erreur de symétrie de signal entre la portion E1-M et la portion E2-M évolue comme une fonction inverse de N.

Les inventeurs ont constaté que lorsque le capteur est réalisé selon le deuxième mode de réalisation, si l'on référence le point milieu M de l'enroulement à un potentiel électrique donné des moyens de mesure différentielle, par exemple à un potentiel constant et centré sur la dynamique de mesure de tension des moyens de mesure, la composante de mode commun contenue dans le signal électrique présent aux bornes du dipôle E1-E2, qui ne porte pas d'information utile sur la position et le déplacement de la cible par rapport au transducteur, est faible par rapport à la composante de mode différentielle contenue dans le même signal électrique présent aux bornes du dipôle E1-E2, la composante de mode différentielle étant par contre porteuse de l'information utile sur le déplacement de la cible par rapport au transducteur. L'agencement du capteur des figures 20C et 20D permettant de placer le point milieu M à proximité immédiate des extrémités E1 et E2 présente donc un avantage certain, par exemple par rapport à l'agencement du capteur de la figure 20B dans lequel le point milieu M est éloigné des extrémités E1 et E2, et plus généralement par rapport aux agencements des capteurs des figures 20A et 20B dans lesquels les tensions E1-M et E2-M dépendent de la position de la cible par rapport au transducteur, ou dit autrement, par rapport aux agencements de capteur dans lesquels le rapport de la composante de mode commun sur la composante de mode différentielle aux bornes d'un enroulement secondaire n'est pas faible et varie fortement avec la position de la cible par rapport au transducteur.

En particulier, un avantage des capteurs décrits dans les figures 20C et 20D lorsque l'on connecte le point milieu M de manière adaptée aux moyens de mesure, réside dans la forte immunité des deux potentiels électriques aux extrémités E1 et E2, à la composante du champ électromagnétique d'excitation (primaire) qui ne varie pas avec la position, alors que le seul caractère spatialement différentiel de la mesure du capteur de la figure 7 ne garantit une immunité que sur la différence des potentiels aux extrémités E1 et E2.

En supplément de l'immunité au champ "direct" émis par le primaire (source interne au système), les capteurs des figures 20C et 20D offrent également une immunité accrue aux perturbations électromagnétiques et/ou électrostatiques émises par une source externe au niveau de la zone de transduction et dont la distribution spatiale est relativement homogène, ou plus généralement une immunité accrue à toute forme de perturbation électromagnétique et/ou électrostatique par rapport à des capteurs tels que ceux décrits sur les figures 20A et 20B.

Des exemples d'avantages pratiques d'une immunité accrue à des perturbations externes dans la zone de transduction sont par exemple la réduction des contraintes sur les protections des moyens électroniques de mesure, telles que les protections contre les surtensions, et/ou la relaxation des contraintes de conception sur les systèmes de conditionnement des signaux électriques, tel que le taux de réjection de mode commun des amplificateurs différentiels.

On notera que l'adaptation d'un capteur inductif pour mettre en oeuvre un point milieu selon le deuxième mode de réalisation peut conduire à augmenter le nombre d'interfaces du circuit de conditionnement (par exemple le nombre de pattes d'un circuit intégré). On notera en particulier que selon l'état de l'art de la mesure inductive, il est plutôt convenu de minimiser le nombre d'interfaces physiques en y substituant du traitement électronique ou numérique. Toutefois, ce deuxième mode de réalisation permet d'atteindre avec une solution électronique relativement simple, des niveaux d'immunité et de robustesse de la mesure bien plus élevés qu'avec les solutions connues.

La figure 20E est une représentation électrique "petits signaux" des phénomènes d'induction utiles V_{M1} et V_{M2}, c'est-à-dire des signaux porteurs de l'information ou d'une partie de l'information sur la position et/ou le déplacement de la cible par rapport au transducteur, et des phénomènes d'induction parasites V_{P}, V_{P}', et V_{P}" au niveau des fils de connexion entre les bornes E1, E2 et M du transducteur, et les bornes PE1, PE2 et PM par exemple reliées au niveau de moyens électriques extérieurs. Sur cette figure, et dès lors que les fils connectés depuis E1, E2 et M se suivent de près, les perturbations de mode commun V_{P}, V_{P}', et V_{P}" sont sensiblement égales et se compensent sensiblement dans les mesures V_{PE1} (réalisée aux bornes du dipôle PM-PE1) et V_{PE2} (réalisée aux bornes du dipôle PM-PE2) d'une part, et dans la mesure V_{PE1PE2} réalisée aux bornes du dipôle PE1-PE2 d'autre part. Une fois le potentiel de la borne PM fixé à une valeur connue V_{REF}, les signaux mesurés aux bornes du tripôle (PE1, PE2, PM) deviennent extrêmement immunisés aux perturbations électromagnétiques extérieures dans la zone de connexion entre les bornes du transducteur (E1, E2, M) et les bornes de connexion aux moyens électriques extérieurs (PE1, PE2, PM), d'une part au premier ordre en limitant les risques de surtension sur les entrées des moyens électroniques (les niveaux de signaux restent dans la dynamique des moyens de conditionnement, et la mesure est valable inconditionnellement), et d'autre part au second ordre en relaxant les exigences sur le taux de réjection de mode commun de la mesure différentielle V_{PE1PE2} (l'erreur de mesure introduite par les perturbations est faible). Par exemple, on peut appliquer à la borne PM une tension de référence du bloc de conditionnement, ou la moitié de la dynamique d'alimentation du bloc de conditionnement, ou encore la masse électronique, sans que ces modes de réalisation ne soient exclusifs d'autres modes de réalisation tels que par exemple la connexion de la borne PM ou M directement sur un potentiel du transducteur tel que la masse.

On obtient ainsi un signal représentatif de la position de la cible par rapport au transducteur, particulièrement robuste aux perturbations et/ou aux effets de couplage parasites, qu'ils aient lieu au niveau de la zone de transduction ou de la zone de connexion entre le transducteur et des moyens électriques extérieurs, et qu'ils soient de nature inductive tel que cela a été présenté sur le schéma électrique de la figure 20E, ou de nature capacitive avec l'environnement électrique du transducteur et/ou l'enroulement primaire et en particulier les portions proches du point chaud du primaire (tension élevée).

Par ailleurs, dans le cas où le transducteur comprend plusieurs enroulements secondaires décalés spatialement (par exemple tel que décrit en relation avec la figure 5), les différents enroulements peuvent être disposés dans et/ou sur différentes couches support superposées comportant chacune un ou plusieurs niveaux de métallisation. Cette configuration, bien que satisfaisante pour de nombreuses applications, peut toutefois poser des problèmes de robustesse et de précision. En effet, il en résulte que les plans moyens des différents enroulements secondaires sont situés à des distances légèrement différentes de l'enroulement primaire et de la cible. Il en résulte notamment, au premier ordre, une différence de gain de transduction, et donc une différence de niveau de signal en sortie des différents enroulements secondaires, et au second ordre des caractéristiques de linéarité différentes entre plusieurs enroulements secondaires d'un même transducteur.

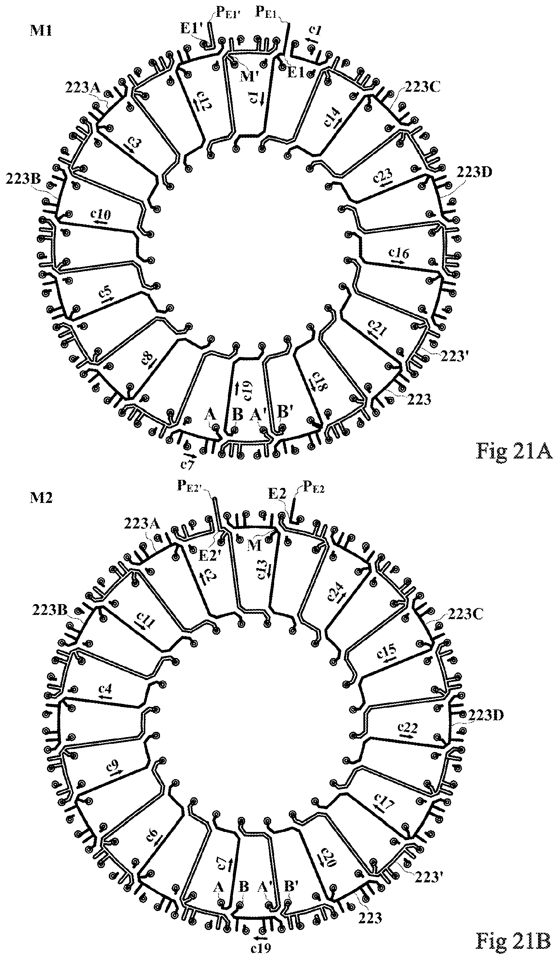

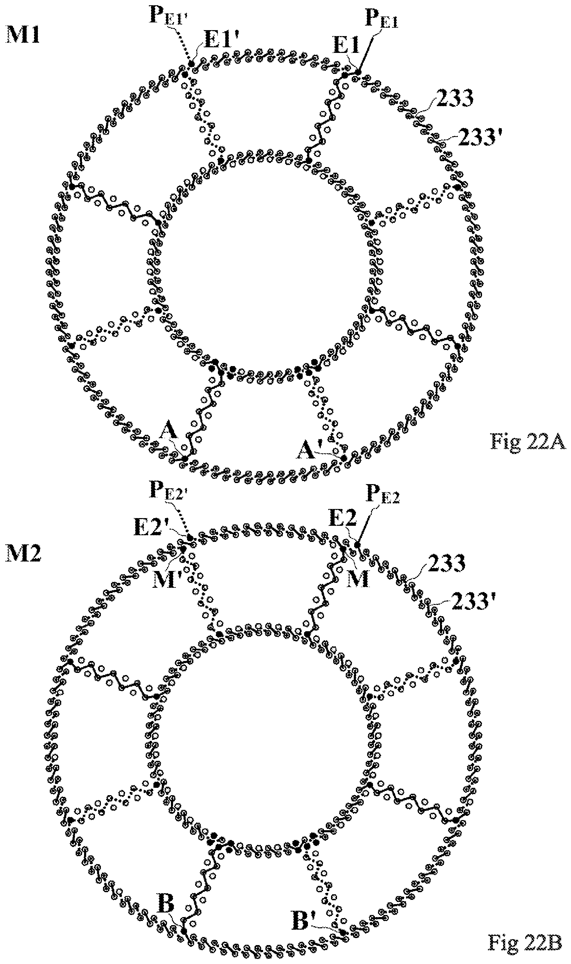

Pour résoudre ce problème, on prévoit de préférence, comme cela est illustré par les figures 21A, 21B, 22A et 22B à titre d'exemple non limitatif, de répartir les différents enroulements secondaires du transducteur dans deux niveaux de métallisation, par exemple dans une même couche support à deux niveaux de métallisation, de façon telle que, pour chaque enroulement, la longueur de piste ou fil de l'enroulement disposée dans le premier niveau de métallisation soit approximativement égale à la longueur de piste ou fil de l'enroulement disposée dans le second niveau de métallisation. De préférence, on prévoit une alternance soutenue des changements de plan de métallisation, de telle façon qu'une piste de secondaire ne puisse parcourir sur un même plan une distance (par exemple une ouverture angulaire dans le cas d'un capteur angulaire) supérieure à une demi-période électrique. Dans un mode de réalisation préféré, les zones de changement de plan de métallisation sont localisées de manière à ce qu'il existe une relation de symétrie et/ou d'antisymétrie entre la plupart des portions de pistes disposées sur le premier niveau de métallisation, et la plupart des portions de pistes disposées sur le deuxième niveau de métallisation, tel que cela est illustré sur les figures 21A, 21B, 22A et 22B.

Ainsi, les plans moyens des différents enroulements secondaires sont confondus et correspondent à un plan intermédiaire virtuel situé entre les premier et second niveaux de métallisation. Ceci confère à chaque force électromotrice induite aux bornes de chaque secondaire, une réponse en fonction de la position de la cible sensiblement identique en termes d'amplitude et de linéarité, à celle des forces électromotrices induites aux bornes des autres secondaires.

On notera que les exemples de réalisation présentés sur les figures 21A, 21B, 22A et 22B correspondent à des capteurs d'étendue angulaire Dₜₒₜ=360°, c'est-à-dire dont la bande angulaire occupée par chaque secondaire a une ouverture angulaire sensiblement égale à un tour complet. Ces exemples ne sont pas exclusifs de variantes de réalisation qui mettraient en oeuvre des capteurs d'ouverture angulaire strictement inférieure à 360°, par exemple inférieure ou égale à 180° afin de permettre un montage "par le côté" du capteur autour d'un arbre en rotation, plutôt qu'un montage "traversant" du capteur autour dudit arbre dans le cas d'un capteur d'ouverture angulaire 360° tel que décrit sur les figures 21A, 21B, 22A et 22B par exemple. Dans ces conditions on rappellera par ailleurs que l'ouverture angulaire de la cible peut alternativement conserver une valeur de 360° indépendamment de l'ouverture angulaire prise par le ou les secondaires du transducteur, ou prendre une valeur inférieure à 360° et par exemple adaptée à la plage de déplacement angulaire de l'application.

Les figures 21A et 21B sont des vues de face représentant de façon schématique un exemple de réalisation d'un transducteur à deux enroulements secondaires 223 (en trait évidé) et 223' (en trait plein) décalés spatialement d'un quart de la période électrique du capteur, pour un capteur inductif de déplacement angulaire. Dans l'exemple représenté, le nombre N de paires de pôles du capteur est égal à 6, et chaque enroulement secondaire 223, 223' comprend 2N=12 boucles ou spires. Les modes de réalisation décrits ne se limitent toutefois pas à ce cas particulier. Dans cet exemple, les deux enroulements secondaires 223 et 223' sont formés dans et sur un même support à deux niveaux de métallisation M1 et M2 reliés par des vias conducteurs (représenté schématiquement par des ronds). Pour chaque enroulement, la longueur de piste formée dans le niveau M1 est approximativement égale à la longueur de piste formée dans niveau M2. La figure 21A est une vue de face du niveau de métallisation M1, et la figure 21B est une vue de face du niveau de métallisation M2. On retrouve sensiblement les motifs du niveau M1 à partir des motifs du niveau M2 par antisymétrie par rapport à un plan intermédiaire entre les plans moyens des niveaux M1 et M2.

Les enroulements 223 et 223' ont chacun, vus de dessus, un agencement du type décrit en relation avec la figure 20C (c'est-à-dire un agencement du type décrit en relation avec la figure 20D adapté dans une configuration angulaire, le principe de bobinage décrit en relation avec la figure 20D s'appliquant alors de façon similaire, la distance Dₜₒₜ n'étant plus une distance linéaire mais étant désormais une distance angulaire, égale à 360°).

Ainsi, l'enroulement 223 comprend :
un premier tronçon conducteur 223A en serpentin courbe formant N demi-spires de sens alternés, s'étendant le long d'une première demi-bande annulaire circulaire dans l'exemple représenté) entre une première extrémité E1 de l'enroulement 223, située approximativement au niveau du milieu de la distance Dₜₒₜ (par exemple au voisinage - c'est-à-dire à 5° près et de préférence à 2° près - d'une position angulaire à laquelle on affectera arbitrairement la valeur 0°), et un point intermédiaire A de l'enroulement, situé au niveau d'une première extrémité de la distance Dₜₒₜ (par exemple au voisinage de l'angle 180°) ;
un deuxième tronçon conducteur 223B en serpentin courbe formant N demi-spires de sens alternés, complémentaires des N demi-spires du tronçon 223A, s'étendant selon le long de la première demi-bande annulaire entre le point A et un deuxième point intermédiaire M de l'enroulement, situé approximativement au niveau du milieu de la distance Dₜₒₜ (par exemple au voisinage de l'angle 0°) ;
un troisième tronçon conducteur 223C en serpentin courbe formant N demi-spires de sens alternés, s'étendant le long d'une deuxième demi-bande annulaire complémentaire de la première demi-bande entre le point M et un troisième point intermédiaire B de l'enroulement, situé au niveau d'une extrémité opposée de la distance Dₜₒₜ (par exemple au voisinage de l'angle -180°) ; et
un quatrième tronçon conducteur 223D en serpentin courbe formant N demi-spires de sens alternés, complémentaires des N demi-spires du tronçon 223C, s'étendant le long de la deuxième demi-bande annulaire entre le point B et une deuxième extrémité E2 de l'enroulement, située approximativement au niveau du milieu de la distance Dₜₒₜ (dans cet exemple au voisinage de l'angle 0°).

Comme cela apparaît sur les figures 21A et 21B, dans cet exemple (non limitatif), les portions de l'enroulement 223 orthogonales à la direction de déplacement de la cible par rapport au capteur, c'est-à-dire les branches radiales de l'enroulement, sont parcourues deux fois et deux fois seulement par le fil ou la piste de l'enroulement, et les portions de l'enroulement 223 parallèles à la direction de déplacement de la cible par rapport au capteur, c'est-à-dire les branches ortho-radiales de l'enroulement, sont parcourues une fois et une fois seulement par le fil ou la piste de l'enroulement.

Plus particulièrement, dans cet exemple : les portions radiales positionnées à des angles décalés de 0° modulo une demi-période électrique, par rapport à l'angle qui caractérise l'extrémité E1, sont parcourues deux fois et deux fois seulement par le fil ou la piste de l'enroulement 223 ; les portions radiales positionnées à des angles décalés de un quart de période électrique modulo une demi-période électrique, par rapport à l'angle qui caractérise l'extrémité E1, sont parcourues deux fois et deux fois seulement par le fil ou la piste de l'enroulement 223' ; et les portions ortho-radiales sont parcourues une fois et une fois seulement par le fil ou la piste de l'enroulement 223, et une fois et une fois seulement par le fil ou la piste de l'enroulement 223'.

Ce mode de réalisation permet de contenir sur deux plans et seulement deux plans de métallisation, deux secondaires tels qu'ils ont été décrits dans les solutions précédentes, c'est-à-dire sans faire de concession sur la forme globale des motifs de chaque secondaire. On notera que les modes de réalisation présentés sur les figures 21A, 21B, 22A et 22B mettent en œuvre deux secondaires disposés sur deux plans de métallisation, mais ne sont nullement exclusifs d'autres modes de réalisation tel qu'un mode de réalisation qui mettrait par exemple en oeuvre trois secondaires disposés sur trois plans de métallisation.

Dans cet exemple, chacune des demi-spires en U de chacun des tronçons 223A, 223B, 223C et 223D de l'enroulement 223 (en trait évidé) a approximativement la moitié de sa longueur dans le niveau de métallisation M1 et l'autre moitié de sa longueur dans le niveau de métallisation M2. Un changement de niveau se produit tous les L/2 mètres de piste conductrice environ, où L désigne la longueur d'une spire de l'enroulement, constituée par la mise en série de deux demi-spires en U complémentaires. Dans l'exemple représenté, les points de changement de niveau de l'enroulement sont situés aux milieux des branches orthoradiales (ou branches horizontales) des U formant les demi-spires. Les modes de réalisation décrits ne se limitent toutefois pas à ce cas particulier. Sur les figures 21A et 21B, les numéros allant de c1 à c28 désignent, dans l'ordre de parcours entre les bornes E1 et E2, différentes portions de l'enroulement 223.

L'enroulement secondaire 223' (en trait plein) est disposé dans les niveaux M1 et M2 selon un agencement sensiblement identique à celui de l'enroulement 223, mais avec un décalage angulaire d'approximativement un quart de période électrique (c'est-à-dire de 15° dans cet exemple) par rapport à l'enroulement 223.

On notera que dans la structure des figures 21A et 21B, les pistes de connexion aux extrémités E1 et E2 de l'enroulement 223 peuvent par exemple être situées respectivement dans les niveaux de métallisation M1 et M2, et être superposées l'une à l'autre. Ceci permet de minimiser la différence de couplage parasite sur chacune de ces branches avec toute source d'induction extérieure (piste de connexion au primaire, perturbation électromagnétique extérieure, etc.). Une piste d'accès au point milieu M de l'enroulement peut être située dans un troisième niveau de métallisation (non représenté), superposée aux pistes d'accès aux bornes E1 et E2 qui se trouvent dans les niveaux de métallisation M1 et/ou M2, ou être située dans l'un des niveaux de métallisation M1 et M2, légèrement décalée par rapport aux pistes d'accès aux bornes E1 et E2. Une disposition similaire des pistes d'accès aux bornes correspondantes E1', E2' et M' de l'enroulement peut être prévue pour l'enroulement 223'. Plus généralement, quelle que soit la disposition des pistes d'accès, afin d'augmenter l'immunité aux perturbations électromagnétiques entre la zone de transduction (secondaire) et les bornes d'accès et/ou de connexion aux moyens de conditionnement des signaux, on cherche de préférence à conserver les chemins depuis les extrémités E1 et E2 le plus rapprochés possible (par exemple superposés dans la technologie PCB), et dans une moindre mesure à placer le chemin depuis le point intermédiaire M assez proche des chemins depuis les extrémités E1 et E2.

On remarquera par ailleurs que dans l'exemple des figures 21A et 21B, outre les vias réalisant les changements de niveau de métallisation des enroulements 223 et 223', et les pistes conductrices circulant dans chaque plan de métallisation à des fins de captation de champ, des vias ou pastilles conductrices de remplissage, sans fonction de connexion électrique entre des pistes de captation de champ, ont été régulièrement réparties le long des enroulements 223 et 223'. Ces motifs conducteurs de remplissage ont pour rôle de symétriser la structure conductrice du transducteur, afin de périodiser leur influence sur la distribution spatiale du champ, et tout particulièrement de minimiser les singularités de la distribution de champ qui se traduiraient par une évolution du signal en sortie du secondaire en fonction de la position. L'ajout de ces motifs conducteurs de remplissage est toutefois facultatif. En particulier, si les vias réalisant les changements de niveau de métallisation présentent des dimensions faibles par rapport à l'épaisseur de peau, à la fréquence de travail, du matériau qui les constitue, on peut prévoir de ne pas ajouter les pastilles conductrices et en particulier de ne pas procéder à leur perçage, ce qui peut diminuer le cout du dispositif.

Les figures 22A et 22B sont des vues de face représentant de façon schématique une variante de réalisation d'un transducteur du type décrit en relation avec les figures 21A et 21B. Cette variante de réalisation diffère de l'exemple des figures 21A et 21B par le fait que, dans l'exemple des figures 22A et 22B, les changements de niveau de métallisation sont plus nombreux que dans l'exemple des figures 21A et 21B. Ainsi, dans l'exemple des figures 22A et 22B, au lieu d'un changement de niveau de métallisation tous les L/2 mètres de piste conductrice de l'enroulement secondaire, où L est la longueur d'une spire de l'enroulement, on prévoit de réaliser k changements de niveau de métallisation tous les L/2 mètres de piste, avec k entier supérieur ou égal à 2. Le nombre k peut être choisi en tenant compte des rayons internes et externes du transducteur. A titre d'exemple non limitatif, pour des dimensions de capteur données et lorsque les changements de niveau sont effectués uniquement dans les portions orthoradiales des spires, k peut être choisi aussi grand qu'il est possible de placer des vias adjacents (par exemple équi-répartis) sur les portions orthoradiales sans que ces vias n'entrent en court-circuit. Par souci de simplification, on a représenté sur les figures 22A et 22B un exemple de réalisation pour un capteur à N=2 paires de pôles, dans lequel le transducteur comprend 2 enroulements secondaires 233 (en trait interrompu) et 233' (en trait plein) décalés angulairement d'un quart de la période électrique du capteur (c'est-à-dire de 360°/4N = 45° dans cet exemple). La variante des figures 22A et 22B est toutefois compatible avec des capteurs comportant un nombre de paires de pôles plus important. Comme dans l'exemple des figures 21A et 21B, des motifs conducteurs de remplissage sans fonction de connexion électrique peuvent être prévus pour symétriser davantage la structure.

### Troisième aspect

Dans les exemples de réalisation de capteurs multipôles décrits jusqu'à présent, pour une dimension Dₜₒₜ donnée d'un enroulement secondaire du transducteur parallèlement au degré de liberté de la cible par rapport au capteur, et pour un nombre N de paires de pôles donné, l'étendue maximale de la plage des positions pouvant être détectées par le capteur est d'environ une demi période électrique (par exemple Dₜₒₜ/2N c'est-à-dire 360°/2N dans le cas d'un capteur angulaire) si le capteur comporte un seul enroulement secondaire, et peut monter jusqu'à environ une période électrique (par exemple Dₜₒₜ/N c'est-à-dire 360°/N dans le cas d'un capteur angulaire) si le capteur comporte plus d'un enroulement secondaire, par exemple s'il comprend deux enroulements secondaires identiques décalés spatialement d'un quart de période électrique (par exemple Dₜₒₜ/4N, c'est-à-dire 360°/4N dans le cas d'un capteur angulaire), ou encore s'il comprend trois enroulements secondaires identiques décalés spatialement d'un sixième de période électrique (par exemple Dₜₒₜ/6N, c'est-à-dire 360°/6N dans le cas d'un capteur angulaire) . En tout état de cause, les capteurs de déplacement angulaire multipôles du type décrit ci-dessus ne permettent pas d'effectuer des mesures de déplacement sur un tour complet (360°) de manière absolue, c'est-à-dire sans recourir à des procédés de mémorisation de l'historique des déplacements, et/ou des procédés de référencement de la position au démarrage et/ou au cours du fonctionnement du capteur. Ce constat est vrai quel que soit le nombre N de paires de pôles supérieur ou égal à 2, et peut être encore plus problématique lorsque le nombre N est élevé, par exemple N≥4 et de préférence N≥6. Les capteurs inductifs de déplacement linéaire décrits ci-dessus présentent les mêmes limitations et ne permettent pas d'effectuer une mesure sur l'étendue complète de Dₜₒₜ de manière absolue.

Selon un troisième aspect, on cherche à réaliser un capteur inductif de déplacement tel que, pour un nombre N de paires de pôles donné, pour une dimension donnée Dₜₒₜ du ou des enroulements secondaires du transducteur parallèlement au degré de liberté du capteur, le capteur soit adapté à détecter la position de la cible par rapport au transducteur sensiblement sur toute l'étendue Dₜₒₜ du transducteur. En particulier, dans le cas d'un capteur de position angulaire, on cherche à réaliser un capteur adapté à détecter la position de la cible par rapport au transducteur sur un tour complet, c'est-à-dire sur une plage angulaire d'approximativement 360°, et ce même lorsque le nombre N de paires de pôles du capteur est important, par exemple N≥4 et de préférence N≥6.

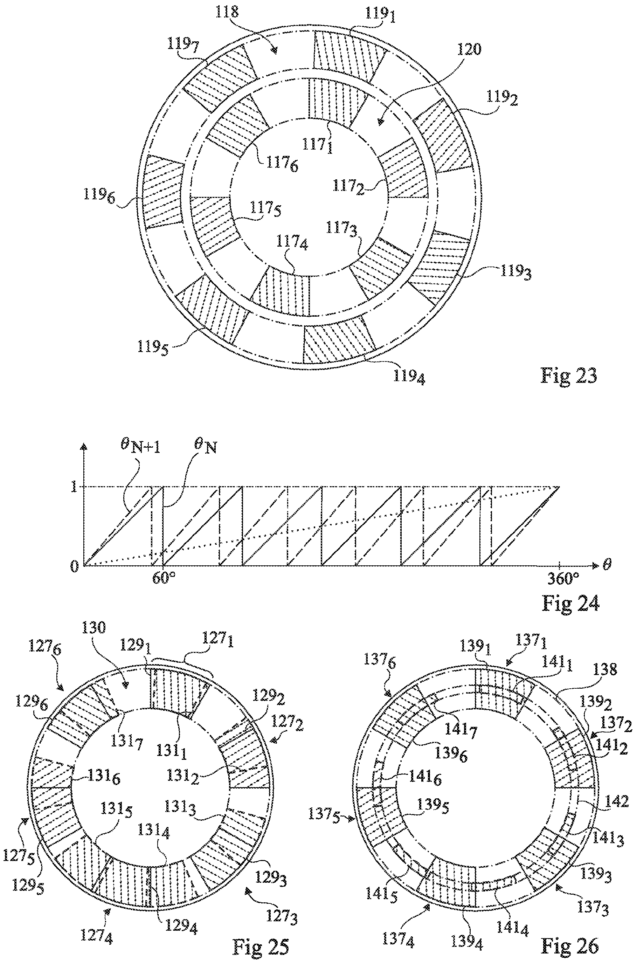

La figure 23 est une vue de face représentant de façon schématique un exemple d'un capteur inductif de déplacement angulaire multipôle. Sur la figure 23, seule la cible du capteur a été représentée.

La cible du capteur de la figure 23 comprend, comme dans l'exemple de la figure 3B, N motifs conducteurs 117ᵢ (N=6 dans l'exemple représenté) régulièrement répartis le long des 360° d'une première bande annulaire circulaire 118 de la cible. Chaque motif conducteur 117ᵢ a la forme d'une portion ou d'un secteur de la première bande annulaire 118, d'ouverture angulaire α_{N} approximativement égale à Dₜₒₜ/2N = 360°/2N, deux motifs 117ᵢ consécutifs étant séparés par un secteur de la première bande annulaire 118, sensiblement de même ouverture angulaire α_{N}. La cible du capteur de la figure 23 comprend en outre N+1 motifs conducteurs 119ⱼ, avec j entier allant de 1 à N+1, régulièrement répartis le long des 360° d'une deuxième bande annulaire circulaire 120 de la cible, concentrique avec la première bande 118 et non superposée à la première bande 118. Dans l'exemple représenté, la deuxième bande annulaire a un rayon interne supérieur au rayon externe de la première bande annulaire. Chaque motif conducteur 119j a la forme d'un secteur de la deuxième bande annulaire 120, d'ouverture angulaire α_{N+1} approximativement égal Dₜₒₜ/2(N+1) = 360°/2(N+1), deux motifs conducteurs 119j consécutifs étant séparés par un secteur de la deuxième bande annulaire 120, sensiblement de même angle α_{N+1}.

Le transducteur (non représenté par souci de simplification) du capteur de la figure 23 est en correspondance avec la cible représentée, c'est-à-dire qu'il comprend :
un ou plusieurs enroulements primaires adaptés à produire une excitation magnétique dans des première et deuxième bandes annulaires circulaires du transducteur sensiblement identiques aux première et deuxième bandes annulaires 118 et 120 de la cible, destinées à être positionnées respectivement en regard des première et deuxième bandes annulaires 118 et 120 de la cible ;
au moins des premier et deuxième enroulements secondaires de période électrique Dₜₒₜ/N (par exemple 360°/N dans l'exemple d'un capteur angulaire), comportant chacun N spires de même sens d'enroulement, en forme de secteurs d'ouverture angulaire α_{N} de la première bande annulaire du transducteur, régulièrement réparties le long de la première bande annulaire du transducteur, ou, à titre de variante, comportant 2N spires de sens d'enroulement alternés en forme de secteurs d'ouverture angulaire α_{N} de la première bande annulaire du transducteur, régulièrement réparties le long de la première bande annulaire du transducteur ; et
au moins des troisième et quatrième enroulements secondaires de période électrique Dₜₒₜ/(N+1) (par exemple 360°/(N+1)), comportant chacun N+1 spires de même sens d'enroulement en forme de secteurs d'ouverture angulaire α_{N+1} de la deuxième bande annulaire du transducteur, régulièrement réparties le long de la deuxième bande annulaire du transducteur, ou, à titre de variante, comportant 2(N+1) spires de sens d'enroulement alternés en forme de secteurs d'ouverture angulaire α_{N+1} de la deuxième bande annulaire du transducteur, régulièrement réparties le long de la deuxième bande annulaire du transducteur.

De préférence, dans la première bande annulaire, le deuxième enroulement secondaire de période électrique Dₜₒₜ/N est sensiblement identique au premier enroulement et décalé spatialement d'un quart de période électrique (Dₜₒₜ/4N) par rapport au premier enroulement, et, dans la deuxième bande annulaire, le quatrième enroulement secondaire de période électrique Dₜₒₜ/(N+1) est sensiblement identique au troisième enroulement et décalé spatialement d'un quart de période électrique (Dₜₒₜ/4(N+1)) par rapport au troisième enroulement. Plus généralement, le transducteur peut comprendre, dans la première bande annulaire, une pluralité d'enroulements secondaires de période électrique Dₜₒₜ/N, sensiblement identiques au premier enroulement et décalés spatialement les uns par rapport aux autres d'un certain pourcentage de période électrique, et, dans la deuxième bande annulaire, une pluralité d'enroulements secondaires de période électrique Dₜₒₜ/(N+1), sensiblement identiques au troisième enroulement et décalés spatialement les uns par rapport aux autres d'un certain pourcentage de période électrique.

Le fonctionnement du capteur de la figure 23 va maintenant être décrit en relation avec la figure 24. On considère le cas (non limitatif) où le transducteur du capteur comprend, dans la première bande annulaire du transducteur, un premier couple d'enroulements secondaires identiques de période électrique 360°/2N, décalés spatialement d'un quart de période électrique, et, dans la deuxième bande annulaire du transducteur, un deuxième couple d'enroulements secondaires identiques de période électrique 360°/2(N+1), décalés spatialement d'un quart de période électrique. Comme indiqué précédemment, ce capteur est apte à fournir deux jeux de deux forces électromotrices distinctes, à partir desquelles on peut construire une estimation de position respectivement sur une plage de position égale à 360°/2N et sur une plage de position égale à 360°/2(N+1).

La figure 24 est un diagramme représentant l'évolution, en fonction de la position de la cible par rapport au transducteur, de l'estimation θ_{N} (en trait plein) de la position obtenue à partir des forces électromotrices mesurées aux bornes du premier couple d'enroulements secondaires, et de l'estimation θ_{N+1} (en trait interrompus) de la position obtenue à partir des forces électromotrices mesurées aux bornes du deuxième couple d'enroulements secondaires du transducteur.

Comme cela apparaît sur la figure 24, lorsque la position angulaire θ de la cible par rapport au transducteur varie de 0° à 360°, le signal d'estimation de position θ_{N} varie de façon périodique entre une valeur basse sensiblement égale à 0 et une valeur haute sensiblement égale à 1 (les estimations de position sont ici normalisées par souci de simplification, les modes de réalisation décrits ne se limitant pas à ce cas particulier), avec une période de variation égale à la période électrique du premier couple d'enroulements secondaires, c'est-à-dire à dire égale à 360°/N = 60° pour N = 6. De plus, le signal d'estimation de position θ_{N+1} varie de façon périodique entre les valeurs basse 0 et haute 1, avec une période de variation égale à la période électrique du deuxième couple d'enroulements secondaires, c'est-à-dire à dire égale à 360°/N+1≈51,4° pour N = 6.

En combinant les niveaux des signaux d'estimation de position θ_{N} et θ_{N+1}, on obtient deux échelles de mesure distinctes sur un tour complet de capteur, c'est-à-dire deux découpages différents de la même plage de 360°. Le principe d'un vernier appliqué à ces deux échelles de mesure angulaire, c'est-à-dire la construction de la différence θ_{N+1}-θ_{N} entre les deux estimations de position normalisée θ_{N+1} et θ_{N}, permet d'estimer la position et/ou le déplacement de la cible relativement au transducteur sur l'intégralité de la distance Dₜₒₜ = 360° (c'est-à-dire sur un tour complet).

Plus particulièrement, l'un des signaux d'estimation de position, par exemple le signal θ_{N}, peut être utilisé pour fournir une information de déplacement "fine" de la cible dans N plages angulaires d'étendues restreintes à la période électrique 360°/N, et la différence θ_{N+1}-θ_{N} entre l'autre signal d'estimation de position (le signal θ_{N+1} dans cet exemple) et ce signal peut être utilisée pour fournir une information absolue grossière de la position de la cible sur un tour complet. Dans ces conditions, l'information absolue grossière permet d'adapter l'information fine mais limitée angulairement, afin de réaliser une estimation de déplacement absolue et fine sur 360°.

Un avantage du capteur de la figure 23 est qu'il permet de bénéficier dans une certaine mesure des avantages des capteurs multipôles, notamment en termes de robustesse aux erreurs de positionnement, tout en étant adapté à fournir des mesures sur une plage de position étendue par rapport aux capteurs multipôles du type décrit ci-avant.

De manière générale, on notera que le mode de réalisation décrit ci-dessus peut être adapté à deux signaux θ_{N1} et θ_{N2}, N1 et N2 étant des entiers différents ne présentant pas nécessairement une différence unitaire. Dans ces conditions, un capteur caractérisé par N1 et N2 = N1+2, présentant un agencement similaire à l'agencement du capteur de la figure 23, permet d'étendre la mesure absolue sur une plage Dₜₒₜ/N = 180°. De manière plus générale, un capteur caractérisé par N1 et N2 = N1+r, avec r entier positif strictement inférieur à N1, permet sous certaines conditions d'étendre la mesure absolue sur une plage Dₜₒₜ/k = 360°/r.

Dans ce cas général, r est bien évidemment un entier strictement positif, c'est-à-dire non nul (ou supérieur ou égal à 1), de tel sorte que N2 est supérieur ou égal à N1+1. Si r n'était pas strictement positif, N2 pourrait être égal à N1 si r=0, et les deux signaux θ_{N1} et θ_{N2} seraient identiques (non distincts) et ne permettraient pas d'estimer la position absolue par la différence entre les deux estimations de position normalisée, tel qu'expliqué ci-dessus.

En outre, r est un entier inférieur ou égal à N1-1, de telle sorte que N2 est inférieur ou égal à 2N1-1. Si N2 pouvait être égal à 2N1, la différence entre les deux estimations de position normalisée, telle que décrite ci-dessus, fournirait une information proche de celle fournie par le seul premier jeu de motifs (correspondant à N1), et ne permettrait pas de mieux estimer la position absolue par la différence entre les deux estimations de position normalisée. Ainsi, dès que r est inférieur ou égal à N1-1, les modes de réalisation et avantages de l'invention sont applicables.

En pratique, r a une valeur de préférence faible, par exemple r est égal à 1 comme décrit ci-dessus et illustré en figure 23. Cela permet d'effectuer une mesure absolue sur la plus grande plage, de 360°. Dans certaines application, il peut être préférable de choisir une valeur de r égale à 2 (mesure absolue sur 180° lorsque Dₜₒₜ = 360°), ou de choisir une valeur de r égale à 3 (mesure absolue sur 120° lorsque Dₜₒₜ = 360°), ou encore de choisir une valeur de r égale à 4 (mesure absolue sur 90° lorsque Dₜₒₜ = 360°), ou encore de choisir une valeur de r égale à 5 (mesure absolue sur 72° lorsque Dₜₒₜ = 360°), etc...

Le capteur de la figure 23 pose toutefois plusieurs problèmes. En particulier, l'encombrement du capteur est augmenté par rapport à un capteur du type décrit précédemment. En effet, dans l'exemple de la figure 23, la surface de transducteur "utile" pour réaliser une mesure est celle d'une bande annulaire circulaire de largeur environ deux fois supérieure à celle de la bande annulaire "utile" d'un transducteur du type décrit en relation avec la figure 3A. De même la surface de cible "utile" pour réaliser une mesure est celle d'une bande annulaire de largeur environ deux fois supérieure à celle de la bande annulaire "utile" d'une cible du type décrit en relation avec la figure 3B. De plus, la réalisation du primaire est plus complexe que dans les modes de réalisation précédents si l'on souhaite exciter de manière relativement uniforme chacune des bandes annulaires d'échelle N et N+1 du capteur. En pratique, il peut être nécessaire d'utiliser trois jeux de spires distincts pour réaliser l'enroulement primaire d'excitation.

La figure 25 est une vue de face représentant de façon schématique un exemple d'un mode de réalisation d'un capteur inductif de déplacement. Le capteur de la figure 25 est un capteur multipôle à deux échelles de mesures N et N+1, fonctionnant selon le principe d'un vernier tel que décrit en relation avec les figures 23 et 24. Sur la figure 25, seule la cible du capteur a été représentée.

La cible du capteur de la figure 25 comprend une pluralité de motifs conducteurs 127ᵢ disjoints, répartis le long des 360° d'une bande annulaire circulaire 130 de la cible. Comme cela apparaît sur la figure 25, le jeu de motifs formé par les motifs conducteurs 127ᵢ est non périodique. Les différents motifs conducteurs 127ᵢ ont la forme de secteurs angulaires, d'ouvertures angulaires différentes, de la bande annulaire 130 de la cible, et sont a priori irrégulièrement répartis le long de la bande annulaire 130.

Le jeu de motifs formé par les motifs conducteurs 127ᵢ sur la bande annulaire 130 de la cible correspond à la superposition (virtuelle) de premier et second jeux de motifs conducteurs périodiques de périodicités respectives 360°/N et 360°/(N+1). Le premier jeu de motifs comporte N motifs élémentaires 129j (en traits pleins) régulièrement répartis le long de la bande annulaire 130 de la cible, chaque motif élémentaire 129j ayant la forme d'un secteur de la bande annulaire 130, d'ouverture angulaire approximativement égale à 360°/2N. Le second jeu de motifs comporte N+1 motifs élémentaires 131ₖ (en traits interrompus), régulièrement répartis le long de la bande annulaire 130, chaque motif élémentaire 131ₖ ayant la forme d'un secteur de la bande annulaire 130, d'ouverture angulaire approximativement égale à 360°/2(N+1). En d'autres termes, les surfaces de motifs conducteurs de la cible de la figure 25 correspondent au cumul ou à l'union des surfaces des motifs conducteurs d'une première cible du type décrit en relation avec la figure 3B, de période électrique 360/N, et d'une deuxième cible similaire, présentant les même rayons internes et externe que la première cible, mais ayant une période électrique 360°/(N+1).

Le transducteur (non représenté par souci de simplification) du capteur de la figure 25 est par exemple adapté aux motifs conducteurs de la cible de façon similaire à ce qui a été décrit en relation avec l'exemple de la figure 23. En particulier, il comprend par exemple :
au moins un enroulement primaire adapté à produire une excitation magnétique approximativement uniforme dans une bande annulaire circulaire du transducteur sensiblement identique à la bande annulaire circulaire 130 de la cible, destinée à être positionnée en regard de la bande annulaire 130 de la cible ;
au moins des premier et deuxième enroulements secondaires de périodicité 360°/N, décalés spatialement d'une fraction de période électrique, s'étendant le long de la bande annulaire circulaire du transducteur ; et
au moins des troisième et quatrième enroulements secondaires de périodicité 360°/(N+1), décalés spatialement d'une fraction de période électrique, s'étendant le long de la même bande annulaire du transducteur.

Les inventeurs ont constaté que, bien que les motifs conducteurs de période électrique 360°/N et 360°/(N+1) de la cible se chevauchent et se court-circuitent, et que par conséquent la cible comporte des motifs conducteurs 127ᵢ irrégulièrement répartis sur un tour complet de 360°, ces motifs présentant des ouvertures angulaires résiduelles pouvant être différentes des ouvertures angulaires périodiques des motifs des jeux d'enroulements secondaires du transducteur, le capteur de la figure 25 permet d'effectuer, avec de très bonnes performances, des mesures de déplacement sur l'intégralité de la distance Dₜₒₜ (c'est-à-dire à dire sur un tour complet) par une méthode de lecture de type vernier similaire ou identique à la méthode décrite en relation avec les figures 23 et 24.

Un avantage du capteur de la figure 25 est que, du fait de la superposition des motifs de périodes électriques respectives 360°/N et 360°/(N+1), l'encombrement du capteur peut être réduit par rapport à une configuration du type décrit en relation avec la figure 23. De plus, un seul enroulement primaire, par exemple du type décrit en relation avec la figure 3A, suffit à générer une excitation magnétique suffisamment uniforme pour un bon fonctionnement du capteur.

La figure 26 est une vue de face représentant de façon schématique une variante de réalisation du capteur de la figure 25. Sur la figure 26, seule la cible du capteur a été représentée.

La cible du capteur de la figure 26 comprend une pluralité de motifs conducteurs 137ᵢ disjoints, répartis le long des 360° d'une première bande annulaire circulaire 138 ou bande large de la cible.

Le jeu de motifs formé par les motifs 137ᵢ sur la bande annulaire 138 de la cible correspond à la superposition de premier et second jeux de motifs périodiques de périodes électriques respectives 360°/N et 360°/(N+1). Le premier jeu de motifs comporte N motifs conducteurs élémentaires 139ⱼ (en traits pleins) régulièrement répartis le long de la première bande annulaire 138 de la cible, chaque motif élémentaire 139j ayant la forme d'un secteur angulaire de la première bande annulaire 138 de la cible, d'ouverture angulaire approximativement égale à une demi période électrique 360°/2N. Le second jeu de motifs comporte N+1 motifs élémentaires 141ₖ (en traits interrompus), régulièrement répartis le long d'une deuxième bande annulaire circulaire 142 ou bande étroite de la cible, concentrique avec la bande annulaire 138 et inclue dans la bande annulaire 138, c'est à dire présentant un rayon intérieur supérieur au rayon intérieur de la première bande annulaire, et/ou un rayon extérieur inférieur au rayon extérieur de la bande annulaire 138. Chaque motif élémentaire 141ₖ a la forme d'un secteur angulaire de la bande annulaire 142 de la cible, d'ouverture angulaire approximativement égale à 360°/2(N+1). La largeur (dimension radiale) de la deuxième bande annulaire 142 de la cible est de préférence nettement inférieure à la largeur (radiale) de la première bande annulaire 138 de la cible, par exemple deux à vingt fois plus faible que la largeur de la première bande annulaire (la bande large).

Le transducteur (non représenté par souci de simplification) du capteur de la figure 26 est par exemple adapté aux motifs conducteurs de la cible de façon similaire à ce qui a été décrit en relation avec les exemples des figures 23 et 25. En particulier, il comprend par exemple :
au moins un enroulement primaire adapté à produire une excitation magnétique approximativement uniforme dans une première bande annulaire circulaire du transducteur (bande large) sensiblement identique à la première bande annulaire 138 de la cible, destinée à être positionnée en regard de la première bande annulaire circulaire de la cible ;
au moins des premier et deuxième enroulements secondaires de périodicité 360°/N, décalés spatialement d'une fraction de période électrique, s'étendant le long de la première bande annulaire circulaire du transducteur (la bande large) ; et
au moins des troisième et quatrième enroulements secondaires de périodicité 360°/(N+1), décalés spatialement d'une fraction de période électrique, disposés le long d'une deuxième bande annulaire circulaire du transducteur (bande étroite), sensiblement identique à la deuxième bande annulaire 142 de la cible et destinée à être positionnée en regard de la bande annulaire 142 de la cible.

Le fonctionnement du capteur de la figure 26 est similaire à celui du capteur de la figure 25. De préférence, dans le capteur de la figure 26, le ou les enroulements secondaires réalisant la mesure "fine" telle que décrite précédemment, sont les enroulements dont les spires ont la forme de secteurs angulaires de la bande annulaire la plus large du transducteur (sensiblement identique à la bande annulaire 138 de la cible). Il est entendu par la notion de mesure fine, que l'on attribue la priorité des efforts de conception pour assurer de la performance et de la robustesse à la mesure réalisée par les secondaires de la bande large, éventuellement et dans une certaine mesure, aux dépends de la performance et de la robustesse de la mesure réalisée par les secondaires de la bande étroite.

Un avantage supplémentaire du capteur de la figure 26 par rapport au capteur de la figure 25 est qu'il est plus robuste aux erreurs de positionnement entre la cible et le transducteur que le capteur de la figure 25. En particulier, la mesure obtenue aux bornes des enroulements secondaires de la bande large (associés de préférence à la mesure fine) est plus robuste aux erreurs de positionnement entre la cible et le transducteur que dans le capteur de la figure 25. En effet, dans le capteur de la figure 26, le fait de réduire la surface de l'une des échelles de mesure par rapport à l'autre permet de réduire dans une certaine mesure, le couplage créé par les motifs de la bande étroite sur les motifs de la bande large au niveau de la cible, notamment par rapport à la cible de la figure 25 pour laquelle l'influence réciproque d'un jeu de motifs sur l'autre est sensiblement équivalente et très forte. Il est ainsi possible d'augmenter la robustesse de l'un des jeux de secondaires aux erreurs de positionnement.

On notera que dans l'exemple représenté, le rayon moyen de la deuxième bande annulaire circulaire du capteur (la bande étroite) est approximativement égal au rayon moyen de la première bande annulaire circulaire de la cible (la bande large). Cette configuration est avantageuse car elle permet d'éloigner de manière sensiblement équivalente les effets des portions orthordiales intérieure et extérieure des motifs conducteurs. Les modes de réalisation décrits ne se limitent toutefois pas à cette configuration particulière.

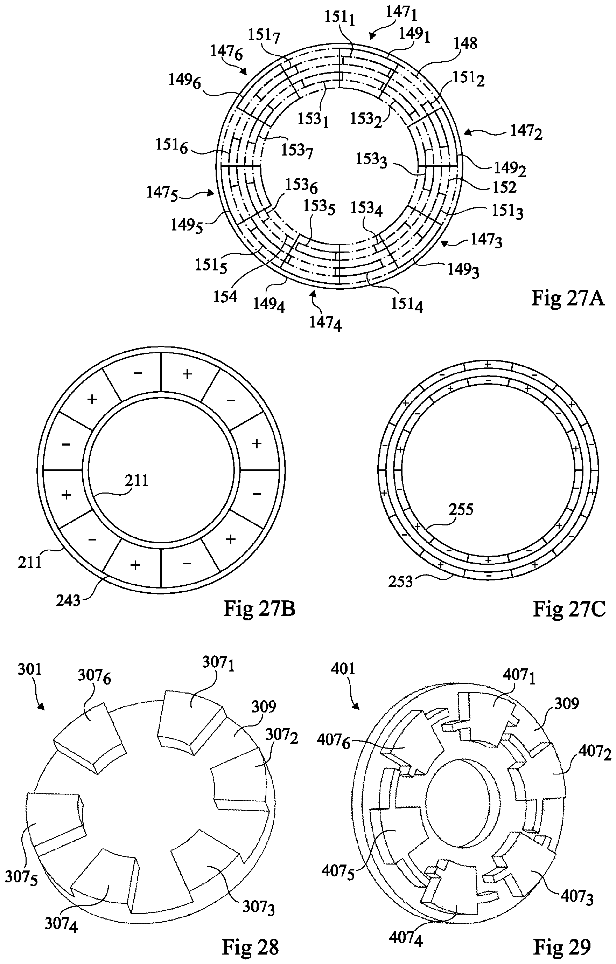

Les figures 27A à 27C sont des vues de face représentant de façon schématique une autre variante de réalisation du capteur de la figure 25. Plus particulièrement, la figure 27A est une vue de face de la cible, la figure 27B est une vue de face d'une partie du transducteur, et la figure 27C est une vue de face d'une autre partie du transducteur. En pratique, les deux parties du transducteur représentées séparément sur les figures 27B et 27C pour des besoins d'illustration, se retrouvent solidaires et superposées de manière concentrique dans un seul et même transducteur, sans que la décomposition des éléments constitutifs dudit transducteur sur ces deux figures ne présage d'une distribution particulière sur plusieurs niveaux de métallisation.

La cible du capteur des figures 27A à 27C comprend une pluralité de motifs conducteurs 147ᵢ disjoints, répartis le long des 360° d'une première bande annulaire circulaire 148 ou bande large de la cible.

Le jeu de motifs formé par les motifs conducteurs 147ᵢ sur la première bande annulaire 148 correspond à la superposition d'un premier jeu de motifs périodiques de période électrique 360°/N, et de deuxième et troisième jeux de motifs périodiques de périodes électriques 360°/(N+1). Le premier jeu de motifs comporte N motifs conducteurs 149j (en traits pleins) régulièrement répartis le long de la bande annulaire 148 de la cible (bande large), chaque motif élémentaire 149ⱼ ayant la forme d'un secteur de la bande 148, d'ouverture angulaire approximativement égale à 360°/2N. Le deuxième jeu de motifs comporte N+1 motifs conducteurs élémentaires 151ₖ (en traits interrompus), régulièrement répartis le long d'une deuxième bande annulaire 152 de la cible (bande étroite), concentrique avec la première bande annulaire 148 et inclue dans la bande 148, c'est à dire présentant un rayon intérieur supérieur au rayon intérieur de la bande annulaire 148, et un rayon extérieur inférieur au rayon extérieur de la bande annulaire 148. Dans cet exemple, le rayon intérieur de la bande annulaire 152 de la cible est supérieur au rayon moyen de la première bande annulaire 148. Cet exemple de réalisation n'est nullement limitatif, et en particulier les bandes étroites 152 et 154 peuvent être disposées différemment dans la bande large 148, sans que le rayon moyen de la bande large 148 ne constitue une limite infranchissable pour l'une ou l'autre des bandes étroites. Chaque motif élémentaire 151ₖ a la forme d'un secteur de la deuxième bande annulaire 152 de la cible, d'ouverture angulaire approximativement égale à 360°/2(N+1). La largeur (radiale) de la bande annulaire 152 de la cible est de préférence faible par rapport à la largeur de la bande annulaire 148 de la cible, par exemple de trois à vingt fois plus faible que la largeur de la première bande. Le troisième jeu de motifs comporte N+1 motifs conducteurs élémentaires 153ₖ (en traits interrompus), régulièrement répartis le long d'une troisième bande annulaire 154 de la cible (bande étroite), concentrique avec la bande annulaire 148 et inclue dans la bande annulaire 148. Dans cet exemple, le rayon extérieur de la bande annulaire 154 de la cible est inférieur au rayon moyen de la bande annulaire 148. La différence entre le rayon moyen de la première bande annulaire 148 et le rayon moyen de la troisième bande annulaire 154 est par exemple approximativement égale à la différence entre le rayon moyen de la deuxième bande annulaire 152 et le rayon moyen de la première bande annulaire 148. Chaque motif élémentaire 153ₖ a la forme d'un secteur de la troisième bande annulaire 154 de la cible, d'ouverture angulaire approximativement égale à 360°/2(N+1). La largeur de la troisième bande annulaire est par exemple approximativement égale à la largeur de la deuxième bande annulaire. A titre de variante, la largeur de la troisième bande annulaire 154 est telle que la surface d'un motif de la bande annulaire 154 soit approximativement égale à la surface d'un motif de la bande annulaire 152. Ces deux exemples de réalisation ne sont nullement limitatifs.

Comme cela apparaît sur la figure 27A, les motifs périodiques de périodicité 360°/(N+1) de la bande annulaire 154 de la cible sont décalés spatialement de 360°/2(N+1) par rapport aux motifs périodiques de périodicité 360°/(N+1) de la bande annulaire 152 de la cible. Ainsi, dans les plages angulaires "vides" d'ouverture angulaire 360°/(N+1) séparant deux motifs conducteurs élémentaires 151ₖ voisins, s'étend approximativement un motif élémentaire 153ₖ, et, dans les plages angulaires "vides" d'ouverture angulaire 360°/(N+1) séparant deux motifs conducteurs élémentaires 153ₖ voisins, s'étend approximativement un motif conducteur élémentaire 151ₖ. En d'autres termes, sensiblement toutes les directions radiales de la cible croisent un motif conducteur élémentaire 151ₖ ou un motif élémentaire 153ₖ.

Le transducteur du capteur des figures 27A à 27C est par exemple adapté aux motifs conducteurs de la cible de façon similaire à ce qui a été décrit en relation avec les exemples des figures 23, 25 et 26. Il comprend par exemple :
au moins un enroulement primaire 211 (figure 27B) adapté à produire une excitation magnétique approximativement uniforme dans une première bande annulaire du transducteur sensiblement identique à la première bande annulaire 148 de la cible, destinée à être positionnée en regard de la bande annulaire 148 de la cible ;
au moins des premier et deuxième enroulements secondaires 243 (seul un enroulement secondaire 243 a été représenté sur la figure 27B) de période électrique 360°/N, comportant chacun N spires de même sens d'enroulement ou, à titre de variante, 2N spires de sens d'enroulement alternés, chaque spire des premier et deuxième enroulements secondaires ayant la forme d'un secteur d'ouverture angulaire 360°/2N de la première bande annulaire du transducteur, et les N ou 2N spires de chaque enroulement étant régulièrement réparties le long des 360° de la première bande annulaire du transducteur ;
au moins des troisième et quatrième enroulements secondaires 253 (seul un enroulement secondaire 253 a été représenté sur la figure 27C) de périodicité 360/(N+1), comportant chacun N+1 spires de même sens d'enroulement ou, de préférence, 2(N+1) spires de sens d'enroulement alternés, chaque spire des troisième et quatrième enroulements secondaires ayant la forme d'un secteur d'ouverture angulaire 360°/2(N+1) d'une deuxième bande annulaire du transducteur, sensiblement identique à la deuxième bande annulaire 152 de la cible et destinée à être positionnée en regard de la bande 152 de la cible, les N+1 ou 2(N+1) spires de chaque enroulement étant régulièrement réparties le long des 360° de la deuxième bande annulaire du transducteur ; et
au moins des cinquième et sixième enroulements secondaires 255 (seul un enroulement secondaire 255 a été représenté sur la figure 27C) de périodicité 360°/(N+1), comportant chacun N+1 spires de même sens d'enroulement ou, de préférence, 2(N+1) spires de sens d'enroulement alternés, chaque spire des cinquième et sixième enroulements secondaires ayant la forme d'un secteur d'ouverture angulaire 360°/2(N+1) d'une troisième bande annulaire du transducteur, sensiblement identique à la troisième bande annulaire 154 de la cible et destinée à être positionnée en regard de la bande annulaire 154 de la cible, les N+1 ou 2 (N+1) spires de chaque enroulement étant régulièrement réparties le long des 360° de la troisième bande annulaire du transducteur.

Les troisième et cinquième enroulements secondaires sont de polarités opposées, c'est-à-dire qu'ils sont décalés spatialement de 360°/2(N+1) selon la convention de polarité (schématisée par un signe + ou -) établie sur la figure 7 et reprise dans la suite de la description. Les quatrième et sixième enroulements secondaires sont disposés l'un par rapport à l'autre selon un agencement sensiblement identique à l'agencement entre les troisième et cinquième enroulements secondaires.

De préférence, dans la première bande annulaire circulaire, les premier et deuxième enroulements secondaires sont décalés spatialement de 360°/2N l'un par rapport à l'autre, dans la deuxième bande annulaire circulaire, les troisième et quatrième enroulements secondaires sont décalés spatialement de 360°/2(N+1) l'un par rapport à l'autre, et, dans la troisième bande annulaire circulaire, les cinquième et sixième enroulements secondaires sont décalés de 360°/2(N+1) l'un par rapport à l'autre.

Plus généralement, le transducteur peut comprendre, dans la première bande annulaire, une pluralité d'enroulements secondaires de période électrique Dₜₒₜ/N, sensiblement identiques au premier enroulement secondaire et décalés spatialement les uns par rapport aux autres d'une fraction de période électrique ; dans la deuxième bande annulaire, une pluralité d'enroulements secondaires de période électrique Dₜₒₜ/(N+1), sensiblement identiques au troisième enroulement secondaire et décalés spatialement les uns par rapport aux autres d'une fraction de période électrique ; et dans la troisième bande annulaire, une pluralité d'enroulements secondaires de période électrique Dₜₒₜ/(N+1), sensiblement identiques au cinquième enroulement secondaire et décalés spatialement les uns par rapport aux autres d'une fraction de période électrique.

Le fonctionnement du capteur des figures 27A à 27C est similaire à celui du capteur des figures 25 et 26.

Diverses configurations de lecture peuvent être mises en oeuvre dans l'exemple des figures 27A à 27C. Les inventeurs ont notamment constaté que :
la lecture du jeu de motifs 147ᵢ par un enroulement secondaire 243 génère un signal utile exploitable, de période électrique 360°/2N ;
la lecture du jeu de motifs 147ᵢ par un enroulement secondaire 253 génère un signal utile exploitable, de période électrique 360°/2(N+1) ;
la lecture du jeu de motifs 147ᵢ par un enroulement secondaire 255 génère un signal utile exploitable, de période électrique 360°/2(N+1) ;
une combinaison des lectures simultanées du jeu de motifs 147ᵢ par un enroulement secondaire 253 et par un enroulement secondaire 255, par exemple lorsque les deux secondaires sont de polarités alternées (comme illustré par la figure 27C) et connectés électriquement en série, génère un signal utile exploitable, de période électrique 360°/2(N+1) et d'amplitude approximativement égale au double du signal utile lu par l'enroulement secondaire 253 ou du signal utile lu par l'enroulement secondaire 255 ;
la lecture du jeu de motifs 147ᵢ par un enroulement secondaire 243 génère un signal parasite (notamment de périodicités 360°/(N+1) et 360°) relativement faible par rapport au signal utile capté par cet enroulement secondaire ;
une combinaison des lectures simultanées du jeu de motifs 147ᵢ par un enroulement secondaire 253 et par un enroulement secondaire 255, par exemple lorsque les deux secondaires sont de polarités alternées (comme illustré par la figure 27C) et connectés électriquement en série, génère un signal parasite (notamment de périodicités 360°/N et 360°) relativement faible par rapport au signal utile capté par cet enroulement secondaire.

Un avantage supplémentaire du capteur des figures 27A à 27C est qu'il est encore plus robuste aux erreurs de positionnement entre la cible et le transducteur que le capteur de la figure 26.

En particulier, la mesure obtenue aux bornes des enroulements secondaires 243 de la bande large (associés de préférence à la mesure fine) est plus robuste aux erreurs de positionnement entre la cible et le transducteur que dans le capteur de la figure 26. En effet, dans le capteur des figures 27A à 27C, sensiblement toutes les directions radiales de la cible croisent un et un seul motif conducteur élémentaire d'une bande étroite, disposé sur l'une ou l'autre des deux bandes étroites de la cible. De plus, les deux bandes étroites de la cible sont de préférence disposées suffisamment éloignées des deux branches orthoradiales intérieure et extérieure des secondaires 243 de la bande large du transducteur. Dans ces conditions, le couplage des motifs conducteurs des deux bandes étroites de la cible sur la mesure aux bornes des secondaires 243 de la bande large, résulte de la combinaison de l'induction des motifs conducteurs d'une bande étroite de la cible et de l'induction des motifs conducteurs de l'autre bande étroite de la cible, ces deux contributions se compensant sensiblement quelle que soit la position de la cible par rapport au transducteur. Le couplage parasite prend alors une valeur relativement stable lorsque la position de la cible par rapport au transducteur évolue. En outre, le couplage prend une valeur sensiblement nulle lorsque les secondaires de la bande large comportent 2N spires de sens d'enroulement alternés, tel que cela a été décrit pour le capteur de la figure 3 par exemple, afin de réaliser une mesure spatialement différentielle. Une autre formulation consiste à considérer que les secondaires de la bande large du transducteur "voient" à peu près les deux bandes étroites décalées comme une seule bande conductrice moyenne étroite et sensiblement pleine ou continue sur Dₜₒₜ du point de vue électromagnétique (et non au sens électrique), et que cette bande virtuelle induit de fait aux bornes desdits secondaires un signal sensiblement indépendant de la position.

Par ailleurs, les inventeurs ont constaté que la mesure obtenue aux bornes de l'enroulement secondaire 253 (d'une bande étroite) présente un comportement en fonction de la position de la cible par rapport au transducteur qui est similaire au comportement en fonction de la position de la mesure obtenue aux bornes de l'enroulement secondaire 255 (de l'autre bande étroite). Les inventeurs ont également constaté, qu'en cas de défauts de positionnement de la cible par rapport au transducteur, le comportement en fonction de la position de la mesure aux bornes d'un des deux enroulements 253 ou 255 d'une des deux bandes étroites, présente des déformations relativement complémentaires des déformations obtenues sur la mesure aux bornes de l'autre enroulement. Ainsi, en combinant les mesures des deux secondaires des deux bandes étroites, et de manière préférentielle en reliant en série les deux enroulements s'ils sont conçus de manière à présenter un comportement en position relativement similaire en termes d'amplitude et de linéarité notamment, il est possible d'obtenir une mesure aux bornes du nouvel enroulement composite qui est relativement robuste aux défauts de positionnement. En effet, dans le capteur des figures 27A à 27C, sensiblement toutes les directions radiales du transducteur croisent exactement deux spires élémentaires de l'enroulement composite, de polarité opposée et alternativement disposées sur chacune des deux bandes étroites du transducteur. De plus, les deux bandes étroites du transducteur sont disposées suffisamment éloignées des deux branches orthoradiales intérieure et extérieure des motifs conducteurs de la bande large de la cible. Dans ces conditions, le couplage des motifs conducteurs 149j de la bande large de la cible sur la mesure aux bornes de l'enroulement composite résulte de la combinaison de l'induction des motifs conducteurs 149j sur le secondaire 253 (une bande étroite) et de l'induction des motifs conducteurs 149ⱼ sur le secondaire 255 (l'autre bande étroite), ces deux contributions se compensant sensiblement quelle que soit la position de la cible par rapport au transducteur. Le couplage parasite prend alors une valeur relativement stable lorsque la position de la cible par rapport au transducteur évolue. En outre, le couplage prend une valeur sensiblement nulle lorsque les secondaires 253 et 255 (bandes étroites) comportent 2(N+1) spires de sens d'enroulement alternés, tel que cela a été décrit pour le capteur de la figure 3 par exemple, afin de réaliser une mesure spatialement différentielle. Une autre formulation consiste à considérer que, lorsque la position de la cible par rapport au transducteur évolue, la lecture faite par un secondaire de la bande étroite du transducteur du jeu de motifs conducteurs qui lui est associé sur la cible est sensiblement "en phase" avec la lecture faite par le secondaire de l'autre bande étroite du transducteur du jeu de motifs conducteurs qui lui est associé sur la cible. Par ailleurs et lorsque la position de la cible par rapport au transducteur évolue, la lecture faite par un secondaire de la bande étroite du transducteur du jeu de motifs conducteurs 149j de la bande large de la cible est sensiblement "en opposition de phase" avec la lecture faite par le secondaire de l'autre bande étroite du transducteur du même jeu de motifs conducteurs de la bande large de la cible. Ainsi, lorsque l'on additionne les deux mesures par des moyens mathématiques ou électriques (par exemple par une connexion électrique en série), le couplage parasite prend une valeur sensiblement nulle lorsque les secondaires de chaque bande étroite sont conçus à cette fin, alors que le signal utile est conservé et/ou amplifié.

On notera que dans le cas de la connexion électrique en série de l'enroulement secondaire d'une bande étroite avec l'enroulement secondaire de l'autre bande étroite, et afin de retrouver les caractéristiques des capteurs décrits en relation avec la figure 2E, il est par exemple possible de choisir pour point milieu du bobinage composite le point de connexion en série des deux enroulements élémentaires.

On notera que l'on peut prévoir d'autres méthodes de combinaison des mesures des deux secondaires de la bande étroite, telles que des combinaisons linéaires des signaux conditionnés séparément, ou d'autres méthodes de connexion électriques des secondaires entre eux, avec par exemple pour même finalité l'augmentation de la robustesse des mesures au niveau de la bande large et/ou des bandes étroites du transducteur, aux défauts de positionnement de la cible par rapport au transducteur.

On notera que dans les exemples représentés sur les figures 23, 25, 26 et 27A, l'un des motifs élémentaires de période électrique 360°/(N+1) est approximativement centré sur la même position angulaire que l'un des motifs élémentaires de période électrique 360°/N. Par exemple, en figure 25, le motif 131₁ est centré sur la même position angulaire que le motif 129₁, et en figure 27A, le motif 151₁ est centré sur la même position angulaire que le motif 149₁. Cette configuration est préférentielle car elle contribue à augmenter le niveau de symétrie global du capteur, ce qui permet notamment de faciliter la fabrication et le contrôle visuel de la cible, ou encore de faciliter la conception et la fabrication des jeux d'enroulements secondaires. Les modes de réalisation décrits ne se limitent toutefois pas à ce cas particulier.

De manière générale, on rappellera que les modes réalisation décrits ci-dessus peuvent être adaptés à deux signaux θ_{N1} et θ_{N2}, N1 et N2 étant des entiers différents mais leur différence n'étant pas nécessairement unitaire. Dans ces conditions, un capteur caractérisé par N1 et N2 = N1+2 et d'agencement similaire à l'agencement des capteurs des figures 23, 25, 26 et 27A à 27C, permet d'étendre la mesure absolue sur une plage Dₜₒₜ/N = 180°. De manière plus générale, un capteur caractérisé par N1 et N2 = N1+r, avec r entier positif, non nul et strictement inférieur à N1 (autrement dit, inférieur ou égal à N1-1), permet sous certaines conditions d'étendre la mesure absolue sur une plage Dₜₒₜ/r = 360°/r.

De plus, à titre de variante, dans les exemples des figures 26 et 27A à 27C, au lieu de réduire la largeur des motifs de périodicité 360°/(N+1) par rapport à la largeur des motifs de périodicité 360°/N, on pourra prévoir de réduire la largeur des motifs de périodicité 360°/N par rapport à la largeur des motifs de périodicité 360°/2(N+1).

En outre, on notera que le nombre de paires de pôles est de préférence pair pour les motifs de la bande large, afin de bénéficier d'une symétrie accrue du transducteur de part et d'autre du point milieu (notamment lorsque le transducteur est réalisé selon le deuxième aspect).

Par ailleurs, on notera que les modes de réalisation décrits en relation avec les figures 23 à 27C ne s'appliquent pas seulement à des capteurs de déplacement angulaire planaires, mais peuvent s'appliquer à d'autres types de capteurs inductifs de déplacement, et notamment des capteurs de déplacement linéaire planaires, ou des capteurs de déplacement angulaire non planaires, par exemple des capteurs de déplacement linéaire "enroulés" (par exemple conformés selon un cylindre) autour et en regard d'une pièce en rotation sur laquelle est fixée une cible également de type linéaire et "enroulée" (par exemple conformée selon un cylindre). Ces deux exemples de réalisation ne sont nullement limitatifs.

### Quatrième aspect

Généralement, la cible d'un capteur inductif de déplacement est constituée par une plaque métallique découpée sur toute son épaisseur pour ne conserver, en regard des enroulements du transducteur, que des portions de la plaque correspondant aux motifs conducteurs de la cible, tel que représenté par exemple en figure 50 du brevet EP0182085 susmentionné. A titre de variante, la cible peut être constituée par un support diélectrique, par exemple une plaque de plastique, dont une face tournée vers le transducteur est partiellement revêtue d'une couche métallique formant le ou les motifs conducteurs de la cible.

Les cibles du type susmentionné présentent toutefois des points de fragilité, ce qui peut poser problème dans certaines applications, notamment des applications dans lesquelles les pièces mobiles dont on souhaite pouvoir détecter le déplacement sont susceptibles de subir des chocs ou vibrations importantes. Parmi ces points de fragilité, les inventeurs ont notamment identifié les motifs conducteurs lorsqu'ils sont relativement fins et/ou anguleux, et le support diélectrique qui est généralement tendre (époxy de PCB, plastique...). De plus, la réalisation d'une fixation robuste entre la cible et une pièce mobile dont on souhaite pouvoir détecter le déplacement peut poser des difficultés. Cette fixation (par exemple par collage, vissage, emmanchement, etc.) peut notamment constituer un point de fragilité mécanique. De tels points de fragilités limitent les applications industrielles de capteurs équipés de telles cibles, et en particulier obligent soit à instrumenter la pièce mécanique tournante postérieurement aux opérations de montage de ladite pièce notamment lorsque ces opérations de montage s'effectuent au moyen d'outils de force tels que des maillets et presses, soit à protéger la cible et/ou le transducteur dans un boitier mécanique solide. C'est par exemple le cas de roulements instrumentés qui sont encastrés aux moyens de presses à fort tonnage.

Selon un quatrième aspect, il serait souhaitable de pouvoir disposer d'une cible pour capteur inductif de déplacement palliant tout ou partie des inconvénients des cibles existantes, notamment en termes de solidité.

Pour cela, selon un quatrième mode de réalisation, on prévoit de réaliser une cible pour capteur inductif de déplacement, formée d'une seule pièce métallique conductrice (par exemple une pièce d'acier), ou cible monobloc, usinée de façon que la face de la cible destinée à être tournée vers le transducteur comporte un ou plusieurs plots métalliques en saillie d'une paroi métallique de fond. Le ou les plots de la cible correspondent au motif conducteur ou aux motifs conducteurs de la cible, et les portions de la paroi de fond non surmontées par un plot correspondent à des zones sans motif conducteur de la cible, c'est-à-dire des zones habituellement non conductrices dans les cibles traditionnelles pour capteur inductif de déplacement.

La figure 28 est une vue en perspective représentant un exemple de réalisation d'une telle cible monobloc 301, pour un capteur inductif de déplacement. La cible 301 a la forme générale d'un disque métallique, usiné de façon qu'une face du disque destinée à être tournée vers le transducteur comporte N plots conducteurs 307ᵢ (N=6 dans l'exemple représenté) sensiblement de même hauteur, en saillie d'une paroi de fond 309 approximativement plane. Chaque plot 307ᵢ a un sommet ou une face supérieure approximativement plane et parallèle à la paroi 309. De plus, dans cet exemple, les parois latérales des plots sont approximativement orthogonales à la paroi 309. Les faces supérieures des plots 307ᵢ de la cible 301 définissent les motifs conducteurs de la cible. Dans cet exemple, la cible 301 a un motif conducteur sensiblement identique à celui de la cible de la figure 3B, c'est à dire que, en projection selon une direction orthogonale au plan moyen du disque, les plots 307ᵢ ont sensiblement la même forme et sont disposés sensiblement de la même façon que les motifs conducteurs 117ᵢ de la cible de la figure 3B.

Le principe de fonctionnement de la cible 301 est similaire à ce qui a été décrit précédemment, c'est à dire que lorsque la cible est placée devant un transducteur émettant une excitation magnétique, des phénomènes d'induction, par exemple des courants de Foucault, se produisent dans les plots 307ᵢ, notamment au niveau de la face supérieure des plots, entrainant une variation d'un niveau de signal de sortie du transducteur fonction de la position des plots 307ᵢ par rapport au transducteur.

On notera que dans la cible 301, les portions de la surface de la cible en regard du transducteur situées entre les plots 307ᵢ sont conductrices. Par conséquent, sous l'effet de l'excitation magnétique générée par l'enroulement primaire, des phénomènes d'induction, par exemple des courants de Foucault, peuvent aussi se produire dans ces portions de la cible, au niveau de la paroi de fond 309. De manière plus générale, et par exemple dans le cas du capteur de la figure 28 où les plots sont en contact électrique uniforme avec le support de la cible caractérisée par la paroi 309, la distribution de champ électromagnétique résulte de l'interaction globale de la structure conductrice de la cible avec l'excitation magnétique générée par le primaire. En particulier il existe des phénomènes électromagnétiques associés à la structure conductrice globale de la cible plutôt qu'à celle de chaque plot conducteur, par exemple la circulation d'un courant induit sensiblement selon une boucle concentrique à l'axe de rotation de la cible, plutôt que selon des boucles locales sensiblement délimitées par les surfaces des plots 307i ou par les portions de surface de la paroi 309 qui sont comprises entre les plots. On notera en particulier que dans l'état de l'art de la technique, il est convenu d'éloigner au maximum la paroi de fond 309 et d'isoler électriquement les plots 307ᵢ afin d'éviter ces phénomènes d'induction parasites.

Toutefois, la distance entre le transducteur et la paroi 309 étant supérieure à la distance entre le transducteur et les plots 307ᵢ, les phénomènes d'induction se produisant dans la paroi 309 sont plus faibles que les phénomènes d'induction se produisant à la surface des plots 307ᵢ. Les essais réalisés par les inventeurs ont montré que la contribution inductive de la paroi 309 peut éventuellement entrainer une modification telle qu'une atténuation ou une modification des caractéristiques de linéarité du signal utile de sortie du transducteur lorsque la hauteur de plots 307ᵢ est faible, mais qu'elle ne dégrade en revanche pas la précision des mesures de position qui peuvent être effectuées par le capteur.

On rappellera que selon le premier aspect, décrit notamment en relation avec les figures 12A à 12D, on peut prévoir, par des ajustements géométriques de la cible et en particulier par l'ajustement de la hauteur des plots 307ᵢ dans le capteur de la figure 28, d'ajuster la distance cible-transducteur dₒₚₜ optimale en termes de linéarité. Ainsi, la hauteur des plots peut être choisie de façon que la distance dₒₚₜ soit compatible avec l'application visée, par exemple comprise entre 0,5 et 1,5 mm, qui est une plage de valeurs compatibles avec diverses applications industrielles.

A titre d'exemple non limitatif, la hauteur des plots 307ᵢ est comprise entre 0,1 et 30 mm et de préférence entre 1 et 10 mm.

Plus généralement, tout type de cible pour capteur inductif de déplacement à un ou plusieurs motifs conducteurs peut être réalisée sous forme monobloc, tel que décrit en relation avec la figure 28, par exemple des cibles pour capteur inductif de déplacement linéaire, ou encore des cibles pour capteur inductif de déplacement angulaire planaires présentant des motifs conducteurs différents de celui de la figure 28, c'est-à-dire par exemple différents de secteurs angulaires ou de rectangles, et par exemple caractérisés en ce qu'au moins un de leurs contours (par exemple le contour extérieur) évolue sensiblement comme une spirale en fonction de l'angle sur la cible, ou encore en ce qu'au moins un de leurs contours évoluent sensiblement sinusoïdalement en fonction de l'angle sur la cible.

A titre d'illustration, un autre exemple non limitatif de cible monobloc 401 pour capteur inductif de déplacement angulaire planaire est représenté en figure 29.

Comme dans l'exemple de la figure 28, la cible 401 a la forme générale d'un disque métallique, usiné de façon qu'une face du disque destinée à être tournée vers le transducteur comporte des plots conducteurs 407 sensiblement de même hauteur, en saillie d'une paroi de fond 309 approximativement plane. Comme précédemment, chaque plot 407 a un sommet ou une face supérieure approximativement plane et parallèle à la paroi 309, et les parois latérales des plots sont approximativement orthogonales à la paroi 309. Les faces supérieures des plots 407 de la cible 401 définissent les motifs conducteurs de la cible. Dans cet exemple, la cible 401 présente des motifs conducteurs sensiblement identiques à ceux de la cible de la figure 27A, c'est à dire que, vu de dessus, les plots 407 ont sensiblement la même forme et sont disposés sensiblement de la même façon que les motifs conducteurs 147ᵢ de la cible de la figure 27A.

La réalisation de cibles monobloc du type susmentionné peut être effectuée par tout moyen connu d'usinage d'une pièce métallique massive, par exemple par gravure, par frittage, par moulage, par emboutissage, etc.

Un avantage des cibles monobloc du type susmentionné est qu'elles sont particulièrement robustes par rapport aux cibles existantes, et peuvent ainsi être manipulées sans précautions particulières. Cette robustesse résulte en particulier du fait que de telles cibles sont massives et ne présentent pas de points de fragilité apparents. De plus, ces cibles sont plus faciles à fixer de façon robuste sur des pièces mobiles que les cibles existantes. En particulier, toutes les techniques de montage en force métal-sur-métal et/ou de soudure métal-métal peuvent être utilisées. Ces deux caractéristiques permettent de pré-instrumenter une très grande majorité des pièces métalliques tournantes avant même leur montage ou utilisation dans le système hôte. Pour finaliser l'instrumentation du système, il suffit alors de rapporter le transducteur en face de la cible montée, soit en fin de montage soit à tout moment du cycle de vie du système hôte.

Selon un mode de réalisation particulièrement avantageux, une cible monobloc pour capteur inductif de déplacement du type décrit ci-dessus peut être usinée directement dans une pièce métallique dont on souhaite pouvoir détecter la position (et/ou le déplacement), par exemple :
pour une mesure angulaire, une colonne de direction de véhicule automobile, un arbre d'un moteur ou d'une boîte de réduction de vitesse (par exemple au niveau d'une face en forme de disque d'une section extrême de l'arbre), une bague tournante (intérieure ou extérieure) d'un roulement à billes, un engrenage, etc. ; ou
pour une mesure linéaire, la tige d'un piston, le corps d'un amortisseur, etc.

Divers exemples et modes de réalisation avec diverses variantes ont été décrits ci-dessus. On notera que l'homme de l'art pourra combiner divers éléments de ces divers exemples, modes de réalisation et variantes sans faire preuve d'activité inventive. On notera en particulier que les premier, deuxième, troisième et quatrième modes de réalisation décrits ci-dessus peuvent être implémentés indépendamment les uns des autres ou combinés en tout ou partie selon les besoins de l'application.

Ainsi, un mode de réalisation prévoit une cible pour capteur inductif de déplacement, cette cible étant formée d'une seule pièce métallique conductrice usinée de façon qu'une face de la cible destinée à être tournée vers un transducteur d'un capteur inductif de déplacement comporte un ou plusieurs plots métalliques en saillie d'une paroi de ladite pièce.

Selon un mode de réalisation, toute la surface de la cible destinée à être tournée vers le transducteur est métallique.

Selon un mode de réalisation, la cible comporte plusieurs plots sensiblement de même hauteur.

Selon un mode de réalisation, la hauteur du ou des plots est comprise entre 0,1 et 30 mm.

Selon un mode de réalisation, chaque plot a une face supérieure parallèle à la paroi.

Selon un mode de réalisation, la paroi est approximativement plane.

Selon un mode de réalisation, la pièce a la forme générale d'un disque, et comporte plusieurs plots répartis le long d'une bande annulaire circulaire du côté d'une face du disque.

Selon un mode de réalisation, la pièce a la forme générale d'une plaque rectangulaire, et comporte plusieurs plots répartis le long d'une bande rectangulaire du côté d'une face de la plaque.

Selon un mode de réalisation, la pièce métallique est une partie d'un arbre moteur ou d'un arbre de transmission d'une boîte de réduction de vitesse.

Selon un mode de réalisation, la pièce métallique est une partie d'une colonne de direction de véhicule automobile.

Selon un mode de réalisation, la pièce métallique est une partie d'une tige d'un piston.

Selon un mode de réalisation, la pièce métallique est solidaire d'une bague d'un roulement à billes.

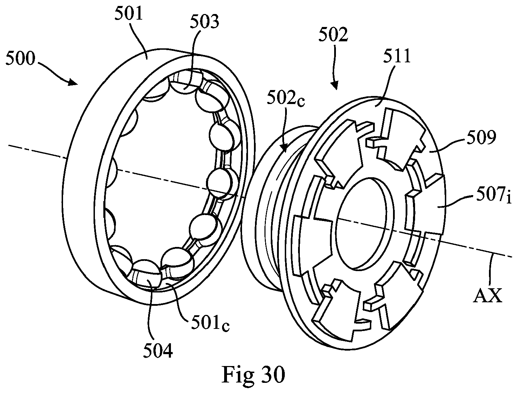

La figure 30 montre plus précisément un mode de réalisation d'une cible monobloc pour mesure de déplacement angulaire d'une bague d'un palier à roulement, tel qu'un roulement à bille 500.

Le palier à roulement 500 comprend :
- un organe extérieur 501 (par exemple bague extérieure de roulement) ;
- un organe intérieur 502 (par exemple bague intérieure de roulement) ; et
- des corps roulants 503 (par exemple des billes ou des rouleaux) disposés dans un espace de roulement formé entre lesdits organes extérieur et intérieur pour permettre leur rotation relative autour d'un axe de rotation AX commun.

Un des organes 501, 502 comprend des moyens de fixation à une structure dite fixe. Par exemple, l'organe extérieur 501 est fixe et l'organe intérieur 502 est tournant, comme dans le cas d'application d'une roue de véhicule automobile, dans lequel la structure fixe est un élément de suspension du véhicule, et la structure mobile est la roue.

Pour permettre la rotation, chaque organe 501, 502 peut présenter un chemin de roulement 501c, 502c, respectivement, entre lesdits deux chemins de roulement sont disposés une rangée de corps roulants, lesdits corps roulant pouvant se présenter sous la forme de billes, lesdites billes étant maintenues dans une rangée par l'intermédiaire d'une cage de rétention 504. Toutefois, l'invention n'est pas limitée à un mode de réalisation du palier, en particulier relativement aux géométries des corps roulants et/ou à celles des organes intérieur 502 et extérieur 501.

Le palier à roulement 500 comprend en outre une cible 511 de capteur inductif du type de la cible 301 de la figure 28 ou de préférence du type de la cible 401 de la figure 29 (comme représenté en figure 30).

La cible 511 est :
- soit fixée de façon robuste à une bague de roulement (l'organe extérieur ou intérieur) dont le déplacement angulaire en rotation est mesuré par un transducteur; notamment, il peut être fixé par montage en force et/ou soudure, comme déjà explicité ;
- soit directement formé ou usiné dans la bague de roulement dont le déplacement angulaire en rotation est mesuré par un transducteur ; notamment, il peut être formé ou usiné par un procédé de gravure, de frittage, de moulage ou d'emboutissage.

La bague de roulement comprend ainsi :
- un organe extérieur 501 ou intérieur 502, par exemple de forme cylindrique, qui comprend un chemin de roulement 501c, 502c, et qui s'étend dans la direction de l'axe de rotation AX ; et
- une cible 511 ayant la forme d'un flasque latéral qui s'étend depuis une extrémité dudit organe dans une direction radiale, pour présenter au moins une face 505 à l'opposé de ladite extrémité et du chemin de roulement.

En variante, la cible 511 a la forme d'un disque annulaire. Eventuellement, cette cible a un diamètre extérieur ou intérieur différent au diamètre où se situe le chemin de roulement de l'organe (par exemple, diamètre extérieur supérieur dans le cas d'un organe intérieur, comme représenté en figure 30, ou réciproquement, diamètre intérieur inférieur dans le cas d'un organe extérieur). Eventuellement, ce diamètre est égal au diamètre où se situe le chemin de roulement de l'organe.

La cible est donc formée soit sur l'organe intérieur (bague intérieure du roulement), soit sur l'organe extérieur (bague extérieure du roulement). Ainsi, les modes de réalisation du roulement de l'invention s'appliquent indifféremment à une bague intérieure ou à une bague extérieure, même si la figure 30 représente uniquement une cible sur une bague intérieure.

Avantageusement, la cible 511 est directement formée et intégrante d'une face latérale de l'organe (la bague de roulement), de sorte qu'elle ne prend pas d'encombrement supplémentaire et n'ajoute pas de surcoût à ladite bague de roulement.

La face 505 présente une paroi de fond 509 et un ou plusieurs plots (507ᵢ) métalliques en saillie depuis cette paroi de fond et s'élevant en direction d'un transducteur du capteur inductif, le ou lesdits plots formant ainsi des motifs conducteurs tels décrits dans les divers exemples précédents.

La cible 511 est fixée de façon robuste sur ou fait partie intégrante d'une bague de roulement, ce qui permet ainsi de former un produit pré-instrumenté robuste, sans point de fragilité. En outre, cette cible 511 est indépendante de l'étanchéité de roulement tel qu'habituellement réalisé dans l'art antérieur des roulements instrumentés à joint codeur.

Ce produit n'est pas beaucoup plus couteux ou pas plus couteux qu'un produit sans cible. Ainsi, l'ensemble des paliers à roulement peuvent comprendre une telle cible, et être équipés ou non équipés d'un transducteur. Le produit est ainsi plus universel et plus modulaire.

## Revendications

1. Roulement (500) comprenant une bague de roulement et un capteur inductif de déplacement angulaire de ladite bague de roulement, ledit capteur inductif comprenant :
- un transducteur comportant au moins un enroulement primaire adapté à produire une excitation magnétique, et au moins un enroulement secondaire comportant au moins une spire, adapté à fournir une force électromotrice à ses bornes en présence de ladite excitation ;
- une cible (301 ; 401 ; 511) adaptée à se déplacer parallèlement au transducteur ; et
ladite cible étant formée d'une seule pièce métallique conductrice et comprenant une face avec une paroi de fond (309 ; 509) et un ou plusieurs plots (307ᵢ ; 407ᵢ ; 507ᵢ) métalliques en saillie depuis cette paroi de fond, ladite cible étant tournée en direction du transducteur du capteur inductif, le ou lesdits plots formant ainsi des motifs conducteurs ;
**caractérisé en ce que** ladite cible (301 ; 401 ; 511) est fixée de façon robuste à la bague de roulement dont le déplacement angulaire est mesuré par le transducteur, ou la cible (301 ; 401 ; 511) est directement usinée dans la bague de roulement dont le déplacement angulaire est mesuré par le transducteur ; et
dans lequel les motifs conducteurs sont répartis le long d'une zone de dimension Dₜₒₜ dans une direction circulaire, lesdits motifs (127ᵢ ; 137ᵢ ; 147ᵢ) étant définis par la superposition d'au moins un premier jeu de motifs élémentaires périodiques de période approximativement égale à Dₜₒₜ/N, comportant N premiers motifs conducteurs élémentaires (129j ; 139j ; 149j) de dimension approximativement égale à Dₜₒₜ/2N dans ladite direction, régulièrement répartis le long de ladite zone, et d'un deuxième jeu de motifs périodiques élémentaires de période approximativement égale à Dₜₒₜ/(N+r), comportant N+r deuxièmes motifs élémentaires (131ₖ ; 141ₖ ; 151ₖ) de dimension approximativement égale à Dₜₒₜ/2(N+r) dans ladite direction, régulièrement répartis le long de ladite zone, où N est un entier supérieur ou égal à 2 et r est un entier positif, non nul et inférieur ou égal à N-1, dans laquelle des premiers et deuxièmes motifs conducteurs élémentaires se chevauchent au moins partiellement.

2. Roulement selon la revendication 1, dans lequel la cible (301 ; 401 ; 511) est fixée de façon robuste à la bague de roulement par une technique de montage en force métal-sur-métal et/ou de soudure métal-métal.

3. Roulement selon la revendication 1 ou la revendication 2, dans lequel la cible (301 ; 401 ; 511) est usinée par un procédé choisi dans une liste comprenant la gravure, le frittage, le moulage, et l'emboutissage.

4. Roulement selon l'une quelconque des revendications précédentes, dans lequel le ou les plots (307ᵢ ; 407ᵢ ; 507ᵢ) ont une hauteur comprise entre 0,1 mm et 30 mm.

5. Roulement selon l'une quelconque des revendications précédentes, dans lequel le ou les plots (307ᵢ ; 407ᵢ ; 507ᵢ) ont une hauteur comprise entre 0,5 mm et 1,5 mm.

6. Roulement selon l'une quelconque des revendications précédentes, dans lequel la cible (301 ; 401 ; 511) a la forme générale d'un disque, et les plots sont répartis le long d'une bande annulaire circulaire.

7. Roulement selon la revendication 1, dans lequel les premiers (129ⱼ ; 139ⱼ ; 149ⱼ) et deuxièmes (131ₖ ; 141ₖ ; 151ₖ) motifs conducteurs élémentaires ont respectivement la forme de portions de première et deuxième bandes (130 ; 138, 142 ; 148, 152, 154) superposées parallèles à ladite direction.

8. Roulement selon l'une quelconque des revendications 1 à 7, dans lequel N est un nombre pair.

9. Roulement selon l'une quelconque des revendications 1 à 8, dans lequel r est égal à 1.

10. Roulement selon l'une quelconque des revendications 1 à 8, dans lequel la bague de roulement est une bague de roulement à billes.

## Patentansprüche

1. Wälzlager (500) aufweisend einen Wälzlagerring und einen induktiven Drehwinkelsensor des Wälzlagerrings, wobei der induktive Sensor aufweist:
- einen Transducer, der aufweist: mindestens eine Primärwicklung, die eingerichtet ist, eine magnetische Erregung zu erzeugen, und mindestens eine Sekundärwicklung mit mindestens einer Windung, die eingerichtet ist, bei Vorhandensein der Erregung eine elektromotorische Kraft an ihren Klemmen bereitzustellen;
- eine Zielplatte (301; 401; 511), die eingerichtet ist, sich parallel zu dem Transducer zu bewegen; und
wobei die Zielplatte aus einem einzigen leitfähigen Metallstück hergestellt ist und eine Fläche mit einer Bodenwand (309; 509) und einem oder mehreren aus dieser Bodenwand vorstehenden metallischen Vorsprüngen (307ᵢ; 407ᵢ; 507ᵢ) aufweist, wobei die Zielplatte in Richtung des Transducer des induktiven Sensors gewendet ist, wobei der oder die Vorsprünge somit leitfähige Motive bilden;
**dadurch gekennzeichnet, dass** die Zielplatte (301; 401; 511) auf robuste Weise an dem Wälzlagerring, dessen Winkelverschiebung von dem Transducer gemessen wird, befestigt ist, oder die Zielplatte (301; 401; 501) direkt in den Wälzlagerring, dessen Winkelverschiebung von dem Transducer gemessen wird, eingearbeitet ist; und
wobei die leitfähigen Motive entlang einer Zone einer Abmessung Dₜₒₜ in einer Kreisrichtung verteilt sind, wobei die Motive (127ᵢ; 137ᵢ; 147ᵢ) definiert sind durch die Überlagerung mindestens
eines ersten Satzes periodischer elementarer Motive einer Periode von ungefähr gleich Dₜₒₜ/N, der N gleichmäßig entlang der Zone verteilte erste leitfähige elementare Motive (129ⱼ; 139ⱼ; 149ⱼ) einer Abmessung von ungefähr gleich Dₜₒₜ/2N in der besagten Richtung aufweist, und
eines zweiten Satzes periodischer elementarer Motive einer Periode von ungefähr gleich Dₜₒₜ/(N+r), der N+r gleichmäßig entlang der Zone verteilte zweite elementare Motive (131ₖ; 141ₖ; 151ₖ) einer Abmessung von ungefähr gleich Dₜₒₜ/2(N+r) in der besagten Richtung aufweist,
wobei N eine ganze Zahl größer oder gleich 2 ist und r eine positive ganze Zahl ungleich Null und kleiner oder gleich N-1 ist, wobei die ersten und zweiten leitfähigen elementaren Motive sich mindestens teilweise überlappen.

2. Wälzlager nach Anspruch 1, in welchem die Zielplatte (301; 401; 511) mit Hilfe einer Metall-auf-Metall Kraftmontagetechnik und/oder Metall-Metall-Schweißung auf robuste Weise an dem Wälzlagerring befestigt ist.

3. Wälzlager nach Anspruch 1 oder Anspruch 2, in welchem die Zielplatte (301; 401; 511) mit einem aus der folgenden Liste ausgewählten Verfahren gefertigt ist: Gravur, Sintern, Formen und Tiefen.

4. Wälzlager nach einem der vorstehenden Ansprüche, in welchem der oder die Vorsprünge (307ᵢ; 407ᵢ; 507ᵢ) eine Höhe zwischen 0,1mm und 30mm haben.

5. Wälzlager nach einem der vorstehenden Ansprüche, in welchem der oder die Vorsprünge (307ᵢ; 407ᵢ; 507ᵢ) eine Höhe zwischen 0,5mm und 1,5mm haben.

6. Wälzlager nach einem der vorstehenden Ansprüche, in welchem die Zielplatte (301; 401; 511) die allgemeine Form einer runden Scheibe hat und die Vorsprünge entlang eines kreisringförmigen Streifens verteilt sind.

7. Wälzlager nach Anspruch 1, in welchem die ersten (129ⱼ; 139ⱼ; 149ⱼ) und zweiten (131ₖ; 141ₖ; 151ₖ) leitfähigen elementaren Motive jeweils die Form von in der besagten Richtung parallel übereinanderliegenden ersten und zweiten Streifen (130; 138; 142; 148, 152, 154) haben.

8. Wälzlager nach einem der Ansprüche 1 bis 7, in welchem N eine gerade Zahl ist.

9. Wälzlager nach einem der Ansprüche 1 bis 8, in welchem r gleich 1 ist.

10. Wälzlager nach einem der Ansprüche 1 bis 8, in welchem der Wälzlagerring ein Kugellagerring ist.

## Claims

1. Bearing (500) comprising a bearing ring and an inductive angular displacement sensor of said bearing ring, said inductive sensor comprising:
- a transducer including at least one primary winding suitable for producing a magnetic excitation, and at least one secondary winding including at least one turn, suitable for supplying an electromotive force at the terminals thereof in the presence of said excitation;
- a target (301; 401; 511) suitable for moving parallel with the transducer; and
said target being formed from a single conductive metal part and comprising a face with a base wall (309; 509) and one or a plurality of metal studs (307i; 407i; 507i) projecting from this base wall, said target being oriented towards the transducer of the inductive sensor, said studs thereby forming conductive patterns;
**characterized in that** said target (301; 401; 511) is fastened firmly to the bearing ring, for which the angular displacement is measured by the transducer, or the target (301; 401; 511) is machined directly in the bearing ring for which the angular displacement is measured by the transducer; and
the conductive patterns are distributed along a zone having a dimension Dₜₒₜ in a circular direction, said patterns (127ᵢ; 137ᵢ; 147ᵢ) being defined by the overlay of at least a first set of elementary periodic patterns having a period approximately equal to Dₜₒₜ/N, including N first elementary conductive patterns (129ⱼ; 139ⱼ; 149ⱼ) of a dimension approximately equal to Dₜₒₜ/2N in said direction, regularly distributed along said zone, and of a second set of elementary periodic patterns having a period approximately equal to Dₜₒₜ/(N+r), including N+r second elementary patterns (131ₖ; 141ₖ; 151ₖ) of a dimension approximately equal to Dₜₒₜ/2(N+r) in said direction, regularly distributed along said zone, where N is an integer greater than or equal to 2 and r is a positive integer, different to zero and less than or equal to N-1, wherein the first and second elementary conductive patterns overlap at least partially.

2. Bearing according to claim 1, wherein the target (301; 401; 511) is fastened firmly to the bearing ring by a metal-on-metal force-fitting and/or metal-metal welding technique.

3. Bearing according to claim 1 or claim 2, wherein the target (301; 401; 511) is machined using a method chosen from a list comprising etching, sintering, molding, and embossing.

4. Bearing according to any one of the preceding claims, wherein the stud(s) (307ᵢ; 407ᵢ; 507ᵢ) have a height between 0.1 mm and 30 mm.

5. Bearing according to any one of the preceding claims, wherein the stud(s) (307ᵢ; 407ᵢ; 507ᵢ) have a height between 0.5 mm and 1.5 mm.

6. Bearing according to any one of the preceding claims, wherein the target (301; 401; 511) has the general shape of a disk, and the studs are distributed along a circular annular strip.

7. Bearing according to claim 1, wherein the first (129ⱼ; 139ⱼ; 149ⱼ) and second (131ₖ; 141ₖ; 151ₖ) elementary conductive patterns have respectively the shape of portions of first and second overlaid strips (130; 138, 142; 148, 152, 154) parallel with said direction.

8. Bearing according to any one of claims 1 to 7, wherein N is an even number.

9. Bearing according to any one of claims 1 to 8, wherein r is equal to 1.

10. Bearing according to any one of claims 1 to 8, wherein the bearing ring is a ball bearing ring.
